(19) Europäisches Patentamt
European Patent Office
Office européen des brevets

(11) **EP 4 694 123 A1**

(12) **EUROPEAN PATENT APPLICATION**
published in accordance with Art. 153(4) EPC

(43) Date of publication:
**11.02.2026 Bulletin 2026/07**

(21) Application number: **23931210.1**

(22) Date of filing: **03.04.2023**

(51) International Patent Classification (IPC):
**H04N 19/176** (2014.01)    **H04N 19/50** (2014.01)
**H04N 19/105** (2014.01)

(52) Cooperative Patent Classification (CPC):
**H04N 19/105; H04N 19/176; H04N 19/50**

(86) International application number:
**PCT/CN2023/085836**

(87) International publication number:
**WO 2024/207132 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **WANG, Fan
Dongguan, Guangdong 523860 (CN)**
• **ZHANG, Lai
Dongguan, Guangdong 523860 (CN)**

(74) Representative: **Grassi, Stefano et al
Bugnion S.p.A.
Viale Lancetti, 17
20158 Milano (IT)**

(54) **ENCODING/DECODING METHOD, CODE STREAM, ENCODER, DECODER AND STORAGE MEDIUM**

(57) Disclosed in the embodiments of the present application are an encoding/decoding method, a code stream, an encoder, a decoder and a storage medium. The method comprises: an encoder/decoder determining a first template corresponding to the current block, wherein the first template is one or more candidate templates in a template set corresponding to the current block; according to the first template, determining a block vector candidate list corresponding to the current block; and according to the block vector candidate list corresponding to the current block, determining a block vector corresponding to the current block, and determining a predicted value of the current block according to the block vector.

Determine a first template corresponding to a current block, where the first template includes one or more candidate templates in a template set corresponding to the current block — 101

Determine a block vector candidate list corresponding to the current block based on the first template — 102

Determine a block vector corresponding to the current block based on the block vector candidate list corresponding to the current block, and determine a prediction value of the current block based on the block vector — 103

**FIG. 18**

EP 4 694 123 A1

**Description**

TECHNICAL FIELD

Embodiments of the disclosure relate to the field of video encoding and decoding technologies, and particularly to a method for encoding and decoding, a bitstream, an encoder, a decoder, and a storage medium.

BACKGROUND

Intra Template Matching Prediction (Intra TMP) is a technique in which a template of a coding block is used to search for a matching template with the lowest cost within the predefined search range in the current picture based on the preset cost function, and the best matching reconstruction block corresponding to the matching template is taken as a prediction block of the current coding block.

However, in actual coding processing, there will be problems of large deviation and low prediction accuracy in related technologies, thus reducing the compression efficiency and performance.

SUMMARY

Embodiments of the disclosure provide a method for encoding and decoding, a bitstream, an encoder, a decoder, and a storage medium, which can improve the compression efficiency and the encoding and decoding performance.

The technical solution of the embodiments of the disclosure can be realized as follows.

In a first aspect, an embodiment of the disclosure provides a method for decoding, which is applied to a decoder, the method includes the following operations.

A first template corresponding to a current block is determined, where the first template includes one or more candidate templates in a template set corresponding to the current block.

A block vector candidate list corresponding to the current block is determined based on the first template.

A block vector corresponding to the current block is determined based on the block vector candidate list corresponding to the current block, and a prediction value of the current block is determined based on the block vector.

In a second aspect, an embodiment of the disclosure provides a method for encoding, which is applied to an encoder, the method includes the following operations.

A first template corresponding to a current block is determined, where the first template includes one or more candidate templates in a template set corresponding to the current block.

A block vector candidate list corresponding to the current block is determined based on the first template.

A block vector corresponding to the current block is determined based on the block vector candidate list corresponding to the current block, and a prediction value of the current block is determined based on the block vector.

In a third aspect, an embodiment of the disclosure provides a bitstream, where the bitstream is generated by bit encoding information to be encoded. The information to be encoded includes at least one of: template matching prediction identification information, first template indication information, second template indication information, third template indication information, index identification information, or a prediction difference value.

In a fourth aspect, an embodiment of the disclosure provides an encoder including a first determination unit.

The first determination unit is configured to determine a first template corresponding to a current block, where the first template includes one or more candidate templates in a template set corresponding to the current block; determine a block vector candidate list corresponding to the current block based on the first template; and determine a block vector corresponding to the current block based on the block vector candidate list corresponding to the current block, and determine a prediction value of the current block based on the block vector.

In a fifth aspect, an embodiment of the disclosure provides an encoder including a first memory and a first processor.

The first memory is configured to store a computer program executable on the first processor.

The first processor is configured to run the computer program to perform the method of the second aspect.

In a sixth aspect, an embodiment of the disclosure provides a decoder including a second determination unit.

The second determination unit is configured to determine a first template corresponding to a current block, where the first template includes one or more candidate templates in a template set corresponding to the current block; determine a block vector candidate list corresponding to the current block based on the first template; and determine a block vector corresponding to the current block based on the block vector candidate list corresponding to the current block, and determine a prediction value of the current block based on the block vector.

In a seventh aspect, an embodiment of the disclosure provides a decoder including a second memory and a second processor.

The second memory is configured to store a computer program executable on the second processor.

The second processor is configured to run the computer program to perform the method of the first aspect.

In an eighth aspect, an embodiment of the disclosure provides a computer readable storage medium storing a computer program that, when executed, performs the method of the first aspect or the method of the second aspect.

Embodiments of the disclosure provide a method for encoding and decoding, a bitstream, an encoder, a decoder, and a storage medium. The encoder or decoder determines a first template corresponding to a current block, where the first template includes one or more candidate templates in a template set corresponding to the current block; determines a block vector candidate list corresponding to the current block based on the first template; and determines a block vector corresponding to the current block based on the block vector candidate list corresponding to the current block, and determines a prediction value of the current block based on the block vector. Thus, in the embodiments of the disclosure, an Intra TMP prediction method that combines multiple candidates with multiple templates is proposed, where a block vector candidate list including at least one block vector of the current block may be selected and determined, and a first template including at least one candidate template may be selected to construct the block vector candidate list, thereby realizing the combination of Intra TMP multi-candidate and multi-selection at the template level. That is to say, the method for encoding and decoding proposed in the embodiments of the disclosure, on one hand, realizes the Intra TMP multi-candidate by constructing the block vector candidate list corresponding to the current block; on the other hand, it provides multiple selections at the template level by using the first template corresponding to the current block that includes one or more candidate templates, thereby improving the compression efficiency and enhancing the encoding and decoding performance.

BRIEF DESCRIPTION OF THE DRAWINGS

FIG. 1 is a basic schematic flowchart of a video encoder and decoder.

FIG. 2 is a schematic diagram of a positional relationship between a current block and reference samples.

FIG. 3 is a schematic diagram showing the use of four reference rows/columns in an intra prediction method.

FIG. 4 is a schematic diagram of nine modes of the intra prediction for a 4×4 block in H.264.

FIG. 5 is a schematic diagram of 35 intra prediction modes used by HEVC.

FIG. 6 is a schematic diagram of 67 intra modes used by VVC.

FIG. 7 is a schematic diagram of a wide-angle mode.

FIG. 8 is a schematic diagram of 66 prediction modes used by AVS3.

FIG. 9 is a schematic diagram of a screen content.

FIG. 10 is a schematic diagram of an inter prediction.

FIG. 11 is a schematic diagram of an Intra TMP.

FIG. 12 is a first schematic diagram of searching.

FIG. 13 is a second schematic diagram of searching.

FIG. 14 is a first schematic diagram of template types.

FIG. 15 is a schematic block diagram of components of an encoder.

FIG. 16 is a schematic block diagram of components of an encoder.

FIG. 17 is a schematic diagram of a network architecture of an encoding and decoding system.

FIG. 18 is a schematic flowchart of a method for decoding according to an embodiment of the disclosure.

FIG. 19 is a second schematic diagram of template types.

FIG. 20 is a schematic diagram of candidate templates.

FIG. 21 is a schematic flowchart of a method for encoding according to an embodiment of the disclosure.

FIG. 22 is a schematic structural diagram of composition of an encoder.

FIG. 23 is a schematic structural diagram of hardware of an encoder.

FIG. 24 is a schematic structural diagram of composition of a decoder.

FIG. 25 is a schematic structural diagram of hardware of a decoder.

FIG. 26 is a schematic structural diagram of composition of an encoding and decoding system.

DETAILED DESCRIPTION

In order to provide a more detailed understanding of the features and technical content of the embodiments of the present disclosure, the implementation of the embodiments of the present disclosure will be described in detail below in conjunction with the drawings, which are provided for illustration only, and are not intended to limit the embodiments of the present disclosure.

Unless otherwise defined, all technologies and scientific terms used herein have a same meaning as would normally be understood by those skilled in the art of the present disclosure. The terms used herein are only for a purpose of describing the embodiments of the present disclosure and are not intended to limit the present disclosure.

In the following description, reference is made to "some embodiments", which describe a subset of all possible embodiments. However, it should be understood that "some embodiments" may be a same subset or different subsets of all the possible embodiments and may be combined with each other without conflict. It should further be noted that related terms "first\ second\ third" in the embodiments of the present disclosure are used only to distinguish similar objects rather than representing a particular order for objects. It should be understood that "first\ second\ third" may be interchanged in a particular order or a priority order, so that the embodiments of the present disclosure described herein can be implemented in an order other than that illustrated or described herein.

Prior to further detailed description of the embodiments of the present disclosure, related nouns and terms in the embodiments of the present disclosure will be explained, and the related nouns and terms in the embodiments of the present disclosure are applicable for the following interpretation:

Coding block (CB);
Block Matching (BM);
Coding Unit (CU);
Block Vector (BV);
Sum of Absolute Difference (SAD);
Sum of Absolute Transformed Difference (SATD);
Mean Square Error (MSE);
Sum of Squared Differences (SSD);
Mean Absolute Deviation (MAD);
Mean Square Differences (MSD);
Normalized Correlation Coefficient (NCC);
H.266/Versatile Video Coding (VVC);
VVC Test Model (VTM);
Intra Template Matching Prediction (Intra TMP);
Enhanced Compression Model (ECM).

It can be understood that in video pictures, a first colour component, a second colour component and a third colour component are generally used to characterize a CB. These three colour components are a luma component, a blue chroma component and a red chroma component, respectively. Specifically, the luma component is typically represented by a symbol Y, the blue chroma component is typically represented by a symbol Cb or U, and the red chroma component is typically represented by a symbol Cr or V. In this way, the video picture can be represented in an YCbCr format or in a YUV format.

**EP 4 694 123 A1**

Video encoding and decoding standards are usually based on block-based hybrid coding framework. Each picture/sub-picture/frame in a video is partitioned into Largest Coding Units (LCUs) or Coding Tree Units (CTUs) which are squares with the same size (for example, 128×128, 64×64, etc.). Each LCU or CTU may also be partitioned into rectangular Coding Units (CUs) based on rules. The coding unit may be further partitioned into Prediction Units (PUs) and/or Transform Units (TUs). The hybrid coding framework includes a Prediction module, a Transform module, a Quantization module, an Entropy Coding module, an In Loop Filter module and other modules. The prediction module may include an intra prediction and an inter prediction. The inter prediction includes a motion estimation and a motion compensation. Because there is a strong correlation between neighbouring samples in the video, the spatial redundancy between the neighbouring samples can be eliminated by using the intra prediction method in video encoding and decoding technologies. Because there is a strong similarity between neighbouring pictures in the video, the temporal redundancy between the neighbouring pictures is eliminated by using the inter prediction method in video encoding and decoding technologies, so that the encoding and decoding efficiency can be improved.

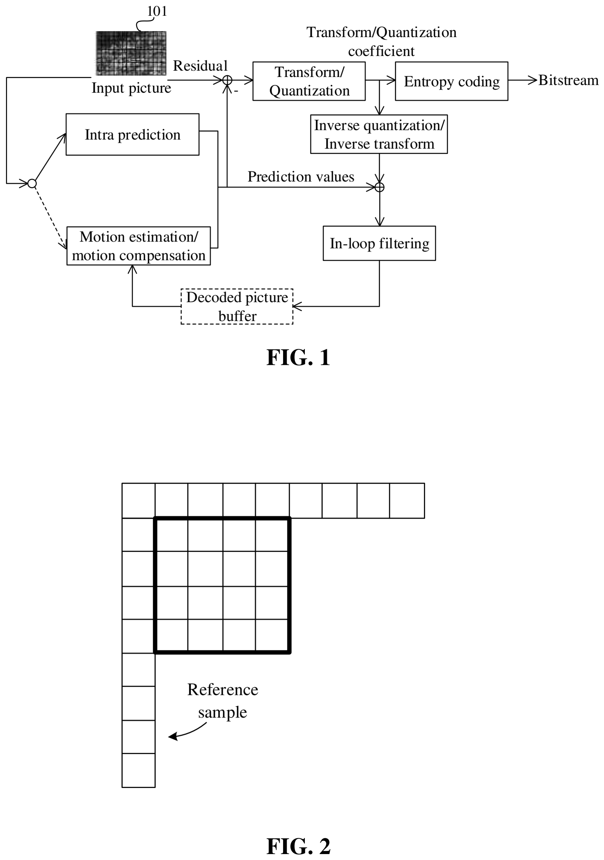

The basic flow of the video encoder and decoder is as illustrated in FIG. 1. At the encoding end, a picture 101 is partitioned into blocks, an intra prediction or an inter prediction is performed on a current block to generate a prediction block of the current block, the prediction block is subtracted from an original block of the current block to obtain a residual block, the residual block is transformed and quantized to obtain a quantization coefficient matrix, and the quantization coefficient matrix is subjected to entropy coding and output to a bitstream. At the decoding end (not illustrated in the FIG. 1), an intra prediction or an inter prediction is performed on a current block to generate a prediction block of the current block, and on the other hand, a bitstream is parsed to obtain a quantization coefficient matrix, the quantization coefficient matrix is inversely quantized and inversely transformed to obtain a residual block, and the prediction block and the residual block are added to obtain a reconstructed block. A reconstructed picture is composed of reconstructed blocks, and picture-based or block-based in loop filtering is performed on the reconstructed picture to obtain a decoded picture. The encoding end also needs similar operations to the decoding end to obtain the decoded picture. At the encoding side, the decoded picture may serve as a reference picture for inter prediction, for subsequent pictures. Block partitioning information, prediction information, transform information, quantization information, entropy coding information, in-loop filter information and other mode information or parameter information determined by the encoding end are output to the bitstream if necessary. The decoding end, by parsing and analyzing existing information, determines the same block partitioning information, prediction information, transform information, quantization information, entropy coding information, in-loop filter information and other mode information or parameter information as those at the encoding end, so as to ensure that the decoded picture obtained by the encoding end is the same as the decoded picture obtained by the decoding end. The decoded picture obtained by the encoding end is usually referred to as the reconstructed picture. The current block may be partitioned into prediction units during predicting, the current block may be partitioned into transform units during transforming, and the partitioning of the prediction unit and the transformation unit may be different.

The above is the basic flow of the video encoder and decoder under the block-based hybrid coding framework. With the development of the technology, some modules or steps of the framework or the flow may be optimized. The method for encoding and decoding provided in the embodiments of the disclosure are applicable to, but are not limited to, the basic flow of the video encoder and decoder under the block-based hybrid coding framework. It is known to those of ordinary skill in the art that, with the evolution of encoders and decoders and the emergence of new business scenarios, the methods provided in the embodiments of the disclosure are also applicable to similar technical problems.

The current block may be a current coding unit (CU) or a current prediction unit (PU) or the like.

It can be understood that there is strong spatial correlation between neighbouring portions or neighbouring samples in a picture, and intra prediction is a method for predicting by using the spatial correlation between encoded and decoded samples around the current block and samples inside the current block. For example, as illustrated in FIG. 2, the white 4×4 block is the current block, and the gray samples in the left column and the top row of the current block are the reference samples of the current block, and in the intra prediction, these reference samples are used to predict the current block. These reference samples may already be all available, i.e. all have been encoded or decoded. There may also be some unavailable portions, for example, if the current block is the leftmost side of the frame, then the reference samples on the left side of the current block is unavailable. Or, when encoding or decoding the current block, the bottom-left part of the current block has not been encoded or decoded, thus the reference samples at the bottom-left is unavailable. For cases where the reference samples are unavailable, the available reference samples or certain values or certain methods may be used to fill or not fill the unavailable reference samples.

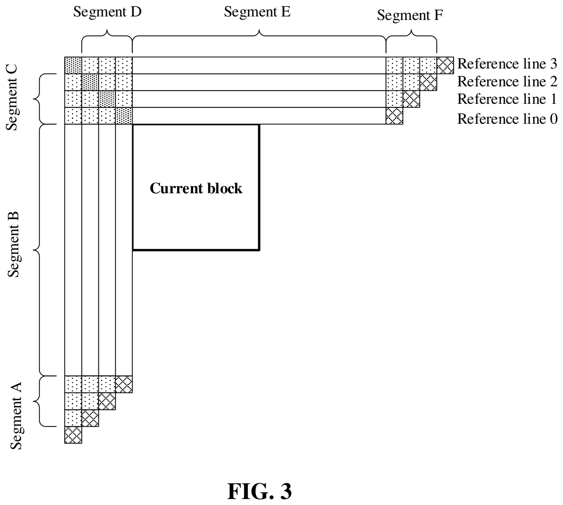

The Multiple Reference Line (MRL) intra prediction method can use more reference samples, thereby improving the coding efficiency. As illustrated in FIG. 3, an example using four reference rows/columns is illustrated.

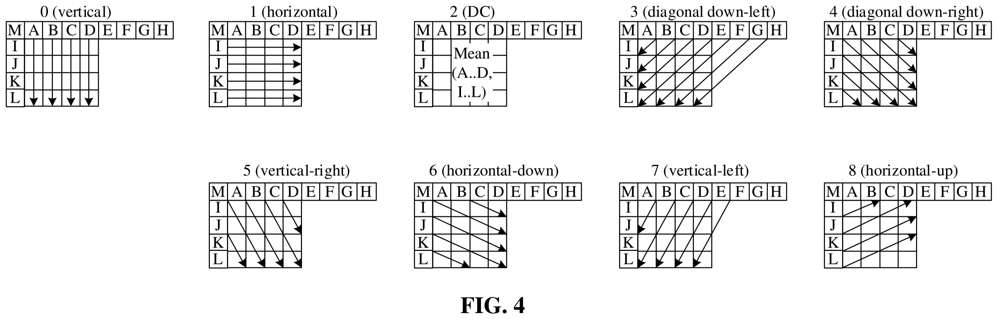

There are multiple prediction modes for the intra prediction, and FIG. 4 illustrates nine modes of the intra prediction for a 4×4 block in H.264. In Mode 0, the samples above the current block are copied to the current block in the vertical direction as the prediction values. In mode 1, the reference samples on the left are copied to the current block in the horizontal direction as the prediction values. In mode 2 (i.e., DC mode), the average value of eight points (A to D and I to L) is taken as the prediction value of all points. In modes 3 to 8, the reference samples are copied to the corresponding positions of the current block based on a respective angle (thus the modes 3 to 8 are also called angular prediction modes), respectively. Since some positions within the current block may not exactly correspond to the reference samples, the weighted average of the reference samples or fractional-samples (fractional-pixels) of the reference samples obtained by the interpolation may be used.

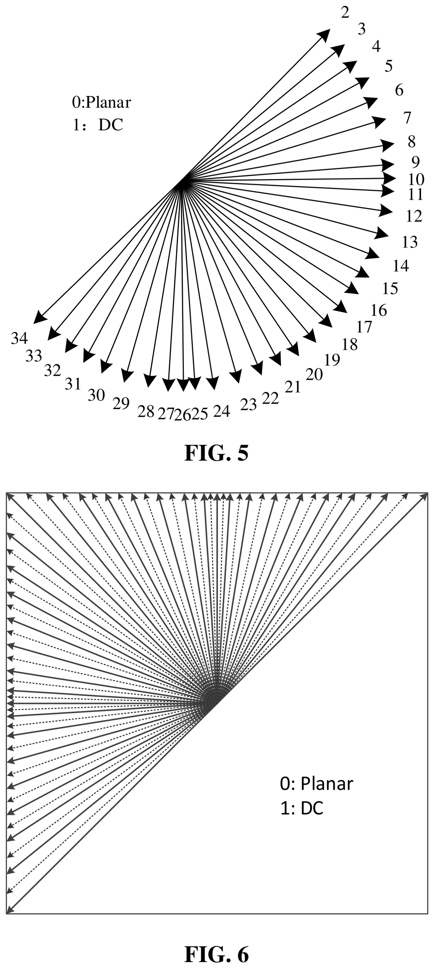

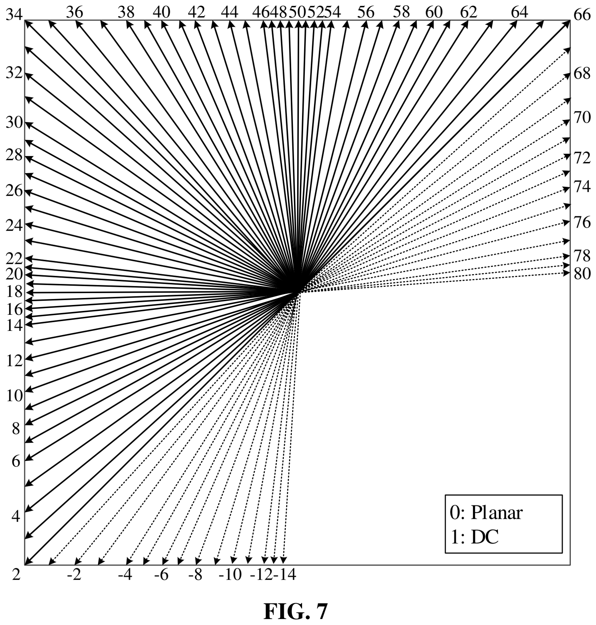

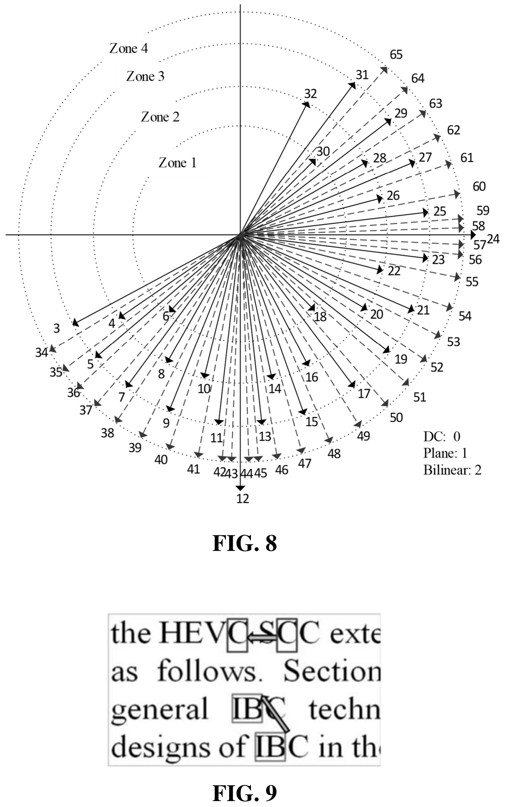

In addition, there are modes such as Plane and Planar, and with the development of technologies and the expansion of blocks, there are more and more angular prediction modes. As illustrated in FIG. 5, the intra prediction modes used by HEVC include a total of 35 prediction modes including Planar mode, DC mode and 33 angular modes. As illustrated in FIG. 6, the intra modes used by VVC include a total of 67 prediction modes including Planar mode, DC mode and 65 angular modes. In addition to the above 67 modes, VVC also provides wide-angle modes for some rectangular blocks with large differences between the length and the width. For example, the modes (the two ranges -14 ~-1 and 67 ~ 80) indicated by the dotted lines in FIG. 7 will replace some conventional modes. As illustrated in FIG. 8, AVS3 uses a total of 66 prediction modes including DC mode, Plane mode, Bilinear mode, PCM mode, and 62 angular modes.

A video consists of multiple pictures. To make videos appear smooth, each second of the video contains dozens or even hundreds of frames, such as 24 frames per second, 30 frames per second, 50 frames per second, 60 frames per second, or 120 frames per second. Therefore, there is a very obvious temporal redundancy in the video. Or, in other words, there are more temporal correlations in the video. In the inter prediction, the temporal correlations are used to improve the compression efficiency. In the inter prediction, "motions" are often used to take advantage of the temporal correlations. A very simple "motion" model is that an object is in a certain position of the corresponding picture at a certain moment, and after a certain time, the object is translated to another position of the corresponding picture at this moment. This is the basic and commonly used translation motion in video encoding and decoding. In the inter prediction, motion information is used to represent the "motion". The basic motion information includes information of a reference frame (also called a reference picture) and information of a Motion Vector (MV). The encoder or decoder determines the reference picture according to the information of the reference picture, and determines the coordinates of the reference block according to the information of the motion vector and the coordinates of the current block. In the reference picture, the reference block is determined using the coordinates of the reference block. Using a determined reference block as the prediction block is the most basic prediction method in inter prediction.

The motion in the video is not all such simple motion. Even the motion that can be regarded as translation will have subtle changes over time, including subtle deformation, changes of the brightness and the noise. More than one reference block may be used for prediction of the current block, thereby achieving a better prediction effect. For example, two reference blocks are used for prediction of the current block. The two reference blocks may be one forward reference block and one backward reference block. It is also allowed that both the reference blocks are forward reference blocks or backward reference blocks. The forward means that the time corresponding to the reference picture is before the current frame, and the backward means that the time corresponding to the reference picture is after the current frame. In other words, the forward means that the position of the reference picture in the video is located before the current frame, and the backward means that the position of the reference picture in the video is located after the current frame. In other words, the forward means that the Picture Order Count (POC) of the reference picture is smaller than the POC of the current frame, and the backward means that the POC of the reference picture is larger than the POC of the current frame. Future video encoding and decoding standards may support prediction of multiple reference blocks. A simple method for generating a prediction block using two reference blocks is to average the pixel values of the corresponding positions of the two reference blocks to obtain the prediction block. In order to obtain a better prediction effect, a weighted average may also be used, such as Bi-prediction with CU-level weight (BCW) used by VVC. The Geometric partitioning mode (GPM) in VVC may also be understood as a special bidirectional prediction. In order to be able to use the bidirectional prediction, it is naturally necessary to be able to find two reference blocks, thus two sets of reference picture information and motion vector information are needed.

The motion in the video is not just simple translation, but also scaling, rotation and distortion, and various kinds of complex motions. Affine is used in VVC to simulate some of these simple motions. The affine model in VVC uses two or three control points, from which the motion vector of each sub-block in the current block is derived using the linear model. The reason why only motion vectors are mentioned here instead of motion information is that both of them point to the same reference picture. It can be understood that ordinary translational motion is to find an "entire block" from the reference picture, while the affine is to find a group of "sub-blocks" from the reference picture that are not one by one. The above are all categories of unidirectional prediction, and the affine can also realize the bidirectional prediction or prediction of more "reference blocks". The reference block mentioned here is composed of sub-blocks. In a specific implementation, one piece of unidirectional motion information in the data structure of the affine motion information may include information of one reference picture and information of two to three motion vectors, or information of 2 or 3 sets of reference pictures and information of motion vectors, where the information of these reference pictures are the same.

Intra Block Copy (IBC) can significantly improve the compression efficiency of screen content coding, thus the IBC is used for the screen content coding from HEVC to VVC. The screen content is different from camera captured content. The screen content is generated by a computer, has no noise, contains text and computer graphics, etc., and has clear boundaries. There are a lot of repeated contents in the screen content. As illustrated in FIG. 9, the contents in the two boxes of the first row are repeated, and the contents in the box of the third row and the contents in the box of the fourth row are repeated.

As mentioned above, in the inter prediction, a reference block on a reference picture is taken as a prediction block of the current block, and the reference picture is not the current picture. The IBC finds a block from the encoded or decoded part (called the reconstructed part) of the current picture as the prediction block of the current block. The IBC is also called intra picture block compensation or current picture referencing (CPR). In this embodiment, the name of the IBC is not limited, and the above names are equivalent and may be used interchangeably unless otherwise specified.

The IBC uses a Block Vector (BV) to represent the positional difference between the current block and the reference block. The encoder determines the best matching block for the current block by a block matching method within the search range, and encodes the BV. There are many methods for encoding the BV, which will not be repeated here. The IBC may be regarded as an intra prediction method, or may be regarded as another kind of prediction method independent of the intra prediction and the inter prediction.

The method of Template Matching (TM) was first used in the inter prediction. This method uses the correlation between neighbouring samples to use some areas around the current block as templates. When encoding or decoding the current block, the left and top sides of the current block have been encoded or decoded according to the encoding order. Certainly, when implemented by the hardware decoder, it may not be guaranteed that its left and top sides have been decoded when starting to decode the current block. Note that this discussion refers specifically to inter blocks. For example, in HEVC, when an inter-coded block generates a prediction block, it does not require surrounding reconstructed samples. Therefore, the prediction process for inter blocks can be performed in parallel. However, the intra-coded block requires the reconstructed samples on the left and top sides as reference samples. Theoretically, the left and top sides of the current block are available, that is to say, the hardware design can be adjusted accordingly. Relatively speaking, the right and bottom sides of the current block are unavailable under the coding order specified in video standards (such as VVC).

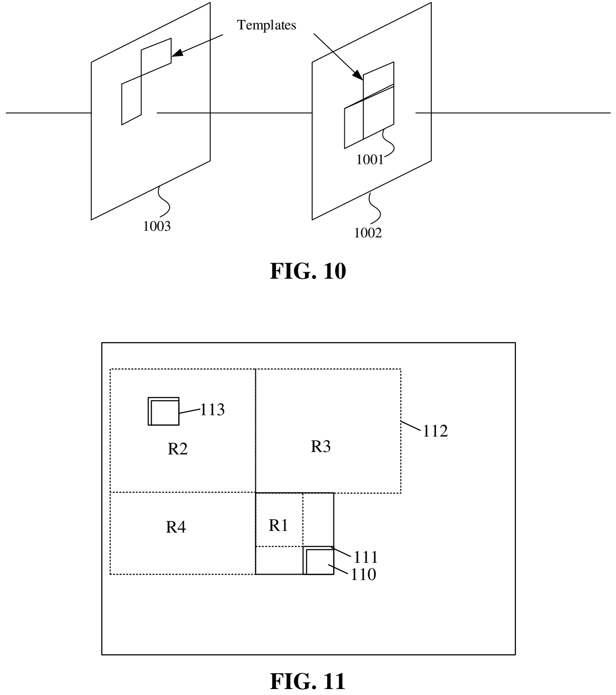

As illustrated in FIG. 10, the left and top rectangular areas of the current block 1001 are set as the template. The height of the left template portion is generally the same as the height of the current block 1001, and the width of the top template portion is generally the same as the width of the current block 1001, although they can also be different. The best matching position of the template is sought in the reference frame 1003 of the current frame 1002 to determine the motion information or motion vector of the current block 1001. This process can be roughly described as searching within a certain range around a starting position in a reference frame. The search rules (such as search scope, search step size, etc.) may be set in advance. Every time it moves to a position, the matching degree between the template corresponding to the position and the template around the current block is calculated. The matching degree can be measured by some distortion costs, such as sum of absolute difference (SAD), sum of absolute transformed difference (SATD), or mean-square error (MSE). The smaller the value of SAD, SATD, or MSE is, the higher the matching degree is. Herein, the transform used by SATD may be a Hadamard transform. The cost is calculated with the prediction block of the template corresponding to the position and the reconstruction block of the template around the current block. In addition to searching at integer-pixel positions, fractional-pixel position searching can also be performed. The motion information of the current block is determined based on the position with the highest matching degree found during the search. Using the correlation between neighbouring samples, the motion information suitable for the template may also be the motion information suitable for the current block. Certainly, the template matching method may not be applicable to all blocks, so some methods can be used to determine whether the current block uses the above template matching method, such as using a control switch to indicate whether the template matching method is used in the current block. Template matching techniques include, for example, decoder side motion vector derivation (DMVD). Both the encoder and the decoder can use the template to perform searching, thereby deriving motion information or finding better motion information based on existing motion information. Instead of transmitting a specific motion vector or motion vector difference, it ensures encoding and decoding consistency by having both the encoder and decoder perform the same search procedure according to identical rules. The template matching method can improve the compression performance, but it needs to perform "searching" in the decoder, which increases the complexity of the decoder.

The Intra TMP is also a kind of prediction technique. It has been mentioned above that the TM can reduce the overhead for encoding the MV, that is, the TM can reduce the overhead for encoding the BV. One example is that the matching block found by the TM is directly used as the prediction block of the Intra TMP mode of the current block without encoding the BV.

An example of the Intra TMP is illustrated in FIG. 11, an inverted L-shaped area 111 at the top-left corner of the current block 110 is used as a template, and searching is performed in a search range 112, where the search range is a reconstructed area, and the illustrated area 112 includes the current CTU (R1), the CTU on the top-left side (R2), the CTU on the top side (R3), and the CTU on the left side (R4). This is an example, and the search range may be different in actual application. In the example illustrated in FIG. 11, the best Matching block 113 is found in R2.

As introduced previously, an important reason why IBC can significantly improve compression efficiency for screen content coding is that many repeated blocks can be found within screen content. Additionally, screen content typically has sharp edges, and in terms of colour (luma and chroma), there are often large areas filled with identical colours (luma and chroma). Camera captured content also contains approximately repeated blocks. Even considering the effects of noise, subtle variations in luma, perspective angles, and other factors, it is undeniable that repeated textures do exist in camera captured content.

In the Intra TMP, the best matching block found by the template matching will be taken as the final prediction block. That is, in the related technologies, when decoding the current block, there is a flag to determine whether the Intra TMP is used for the current block. If the Intra TMP is used for the current block, the decoder will use the template matching method to find a best matching block, and determine the value of the best matching block as the prediction value of the current block. As we know, although the template has a strong correlation with the current block, the template itself is not the current block. Therefore, the best matching block found using the template (actually the position of the current block corresponding to the best matching block of the template) may not necessarily be the best matching block for the current block. However, the decoder does not have the current block when searching, thus it can only use the best matching block found by the template as the best matching block found by the Intra TMP.

In order to further improve the accuracy for prediction, N candidates can be configured for the Intra TMP, or a candidate list intraTmpCandList [N] with length N can be configured for the Intra TMP. When encoding, if the Intra TMP is used for the current block, after encoding the flag, it is necessary to encode an index to determine which of the N candidates is selected by the current block. Accordingly, the syntax for decoding is as follows, intra_tmp_flag is the flag of the Intra TMP, and if the intra_tmp_flag is true, intra_tmp_idx is then parsed, and intra_tmp_idx represents the index of the selected candidate.

```
intra_tmp_flag
if (intra_tmp_flag)
 {
intra_tmp_idx
 }
```

The decoder sets the block corresponding to intraTmpCandList[intra_tmp_idx] as the block selected by the Intra TMP. In other words, the decoder sets the BV corresponding to intraTmpCandList[intra_tmp_idx] as the BV selected by the Intra TMP.

When constructing the intraTmpCandList, for each BV searched by Intra TMP, the cost on the template under that BV is calculated. The cost on the template is generally the cost of matching the template of the current block and the template of a block with the same size as the current block determined by the current BV. This cost may be SAD, SATD, SSE, or the like. The Intra TMP can sort the searched blocks or searched BVs in ascending order based on these costs, and the top N candidates are the N candidates for the intraTmpCandList. Or, only the top N candidates with the lowest cost are maintained, and the candidates ranked more than N can be directly discarded, thus saving the calculation amount.

Generally, blocks corresponding to neighbouring BVs are relatively close to each other, especially if the BV supports a fractional-pixel accuracy, such as 1/2, 1/4, 1/8, 1/16 accuracy, or the like. Then, if sorting is performed solely based on the costs on the templates without proper control, it is easy for multiple candidates to cluster into a very small range. Therefore, some controls are needed here to prevent the BV candidates in the intraTmpCandList from being overly concentrated.

Further, in the searching process, there is no need to exhaustively search every possible BV in sequential order. For example, the usual searching order is from left to right and from top to bottom. Generally speaking, the BV of the entire pixel can be searched sequentially. If the currently searched BV is (x0, y0), then the next one is (x0+1, y0), provided that the boundary of the search range has not been reached. But here a sparse search may be performed first. For example, for the BV of the entire pixel, if the currently searched BV is (x0, y0), then the next one is (x0+3, y0), provided that the boundary of the searching range has not been reached. That is, the template matching is performed every certain number of pixels, in other words, the template matching is performed every certain step size. The step size here may be a preset value, such as 2, 3, 4, 8, or the like. Certainly, the same processing can be done in the vertical direction. K BVs with the lowest cost are first found, where K may be equal to N, or may be greater than or less than N. This processing may be realized by constructing a list, that is, constructing a candidate list with a length of K. Then, on the basis of the K BVs with the lowest costs, the improvement is made in a small range on the basis of each BV. If the above searching interval is 3 pixels, then the improved range here can be set to $3 \times 3$, and the improved BV can be used to construct a candidate list with a length of N. In this way, N BV candidates can be obtained.

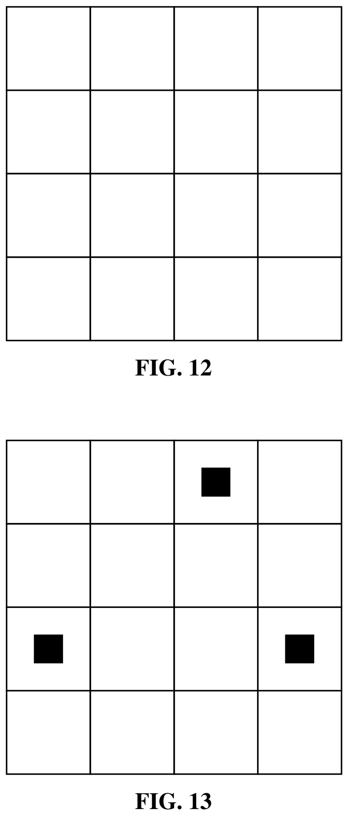

FIG. 12 is a first diagram of the searching, and FIG. 13 is a second diagram of the searching. As illustrated in the FIGs, for example, assuming N is 3, the first step is to perform a first searching based on a preset step size, and the top-left corner of the searched block is illustrated by dark dots in FIG. 12. Certain number of sorted BVs are found, such as 3 BVs, and the top-left corner of the corresponding block is illustrated by the dark dots in FIG. 13. Here, the horizontal step size is 3, and the vertical step size is also 3.

The second step is to perform a second searching on the basis of the sorted 3 BVs. At this time, the search range is 4×4, as illustrated by the dark dots in FIG. 13. Each BV within every 3×3 range participates in the sorting for the intraTmpCandList, and if the BV with the minimum cost remains the previous BV, re-sorting may not be necessary.

If the fractional-pixel accuracy is supported, the subsequent refinement can be continued to the fractional-pixel BV. For example, on the basis of the entire pixel BV selected in the second step, 1/2 pixel searching is performed within one pixel range of up, down, left and right.

It should be noted that the construction of the candidate list will be performed at both the encoding end and the decoding end, so as to ensure that the candidate list obtained at the encoding end and the candidate list obtained at the decoding end are consistent.

In the process of binarizing the intra_tmp_idx, considering that sorting is performed for the intraTmpCandList, statistically speaking, the earlier a candidate appears in the list, the higher its probability of being selected. Therefore, variable length coding is set for the binarization and the inverse binarization of intra_tmp_idx, as illustrated in Table 1 below, or the truncated unary is used.

Table 1

| intra_tmp_idx | Binary symbol | |
|---|---|---|
| 0 | 1 | |
| 1 | 0 | 1 |
| 2 | 0 | 0 |
| Bin index | 0 | 1 |

Certainly, if the probability is similar, a fixed-length coding or the truncated binary may be used.

If N is relatively large, the earlier candidates have higher probabilities, the later ones have lower probabilities, and the probabilities of the later candidates become increasingly similar. Therefore, shorter codewords can be allocated to the earlier candidates and longer codewords to the later ones, with some of the later candidates sharing the same codeword length. For example, in an example illustrated in Table 2, N is 15, indices 3 to 6 use codewords with the same length, indices 7 to 14 use codewords with the same length, and x in the table can be obtained using the truncated binary.

Table 2

| intra_tmp_idx | Binary symbol | | | | |
|---|---|---|---|---|---|
| 0 | 1 | 1 | | | |
| 1 | 1 | 0 | 0 | | |
| 2 | 1 | 0 | 1 | | |
| 3~6 | 0 | x | x | x | |
| 7~14 | 0 | x | x | x | x |

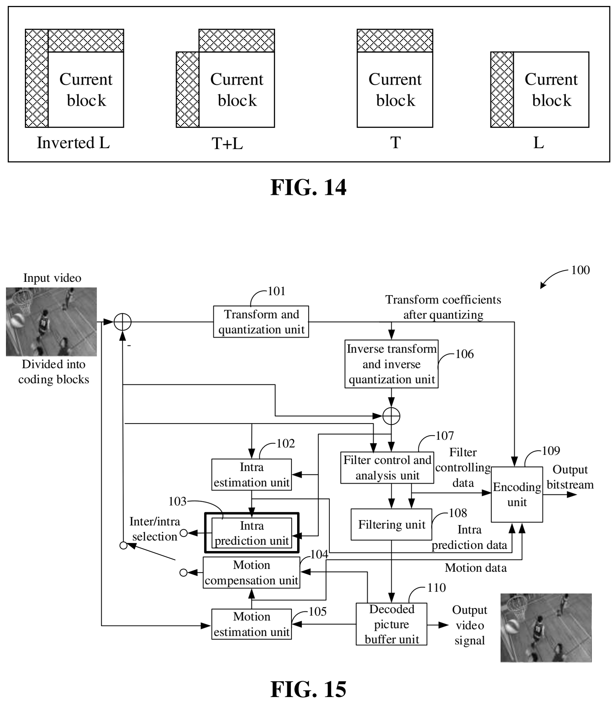

FIG. 14 is a diagram of template types. As illustrated in FIG. 14, the template currently used by the Intra TMP in the ECM is an inverted L-shaped template including the left neighboring reconstructed samples, the top neighboring reconstructed samples, and the top-left neighboring reconstructed samples. In some other techniques using the template matching, some templates do not use the top-left neighbouring samples.

In addition to the complete template, part areas of the complete template may also be used as templates, such as the top template and the left template illustrated in FIG. 14. Here, for the convenience of expression, the complete templates (inverted L or T + L) are collectively referred to as TL templates, the top template is referred to as T template, and the left template is referred to as L template. A variety of different templates can provide more options. Using template matching involves utilizing the template to estimate the current block, under the assumption that a block with high matching similarity to the template will also exhibit high matching similarity with the current block. But the video content is diverse, especially the pictures captured by a camera. Assuming the texture changes on both sides near the left edge of the current block, using only the T template may be more suitable than using the TL template. Similarly, assuming the texture changes above and below near the top edge of the current block, using only the L template may be more suitable than using the TL template.

Certainly, the reconstructed sample on the top-right side, the reconstructed sample on the bottom-left side, or the like, may also be added into the template. For example, the T template extends a certain distance to the right except the part illustrated in the FIG. 14, and the L template extends a certain distance downward except the part illustrated in the FIG. 14. In other words, in addition to the T template and the L template, a top-right template, a bottom-left template, or the like, are added.

In summary, the Intra TMP multiple-candidate method uses the template to filter a small subset of promising candidates from a vast number of possible BVs, after which the encoder selects one candidate to determine the reference block or prediction block for the current block. Due to the correlation between the current block and the template, the template can effectively filter out most of the unreasonable BV, and on the other hand, the encoder can access the original pixel value of the current block, thus the encoder can make a more accurate judgment than the decoder. In this way, better compression efficiency can be achieved by using the cooperation of the encoder and the decoder.

Because the template cannot represent the current block, the Intra TMP multi-candidate provides multiple choices to improve the compression efficiency, while templates with different shapes provide multiple choices at the template level. Therefore, the combination of the Intra TMP multi-candidate and the multi-type templates can provide better compression efficiency.

Embodiments of the disclosure provide a method for encoding and decoding, a bitstream, an encoder, a decoder, and a storage medium. The encoder or decoder determines a first template corresponding to a current block, where the first template includes one or more candidate templates in a template set corresponding to the current block; determines a block vector candidate list corresponding to the current block based on the first template; and determines a block vector corresponding to the current block based on the block vector candidate list corresponding to the current block, and determines a prediction value of the current block based on the block vector. Thus, in the embodiments of the disclosure, an Intra TMP prediction method that combines multiple candidates with multiple templates is proposed, where a block vector candidate list including at least one block vector of the current block may be selected and determined, and a first template including at least one candidate template may be selected to construct the block vector candidate list, thereby realizing the combination of Intra TMP multi-candidate and multi-selection at the template level. That is to say, the method for encoding and decoding proposed in the embodiments of the disclosure, on one hand, realizes the Intra TMP multi-candidate by constructing the block vector candidate list corresponding to the current block; on the other hand, it provides multiple selections at the template level by using the first template corresponding to the current block that includes one or more candidate templates, thereby improving the compression efficiency and enhancing the encoding and decoding performance.

Hereinafter, embodiments of the disclosure will be described in detail in conjunction with the drawings.

Referring to FIG. 15, a block diagram of compositions of an encoder provided by an embodiment of the disclosure is illustrated. As illustrated in FIG. 15, the encoder (specifically, a "video encoder") 100 may include a transform and quantization unit 101, an intra estimation unit 102, an intra prediction unit 103, a motion compensation unit 104, a motion estimation unit 105, an inverse transform and inverse quantization unit 106, a filter control and analysis unit 107, a filtering unit 108, an encoding unit 109 and a decoded picture buffer unit 110, etc. The filtering unit 108 can implement DeBlocking Filter (DBF) filtering and Sample Adaptive Offset (SAO) filtering, and the encoding unit 109 can implement head information coding and Context-based Adaptive Binary Arithmetic Coding (CABAC). For an input original video signal, a video coding block can be obtained by dividing through a Coding Tree Unit (CTU), and then the video coding block is transformed by the transform and quantization unit 101 based on residual picture information obtained after an intra prediction or an inter prediction, including transforming the residual information from a picture domain to a transform domain, and quantizing obtained transform coefficients to further reduce a bit rate. The intra estimation unit 102 and the intra prediction unit 103 are used to perform the intra prediction on the video coding block, specifically, the intra estimation unit 102 and the intra prediction unit 103 are used to determine an intra prediction mode to be used to encode the video coding block. The motion compensation unit 104 and the motion estimation unit 105 are used to perform the inter prediction coding of the received video coding block with respect to one or more blocks of one or more reference pictures to provide temporal prediction information. A motion estimation performed by the motion estimation unit 105 is a process of generating motion vectors that can be used to estimate the motion of the video coding block, and then a motion compensation is performed by the motion compensation unit 104 based on the motion vectors determined by the motion estimation unit 105. After determining the intra prediction mode, the intra prediction unit 103 is further used to supply selected intra prediction data to the encoding unit 109, and the motion estimation unit 105 transmits the motion vector data determined by calculating to the encoding unit 109. Furthermore, the inverse transform and inverse quantization unit 106 is used for a reconstruction of the video coding block, a residual block is reconstructed in the picture domain. Blocking artifacts of the reconstructed residual block are removed through the filter control and analysis unit 107 and the filtering unit 108, and then the reconstructed residual block is added to a prediction block in a picture of the decoded picture buffer unit 110, to generate the reconstructed video coding block. The encoding unit 109 is used for encoding various encoding parameters and quantized transform coefficients. In a CABAC-based coding algorithm, context contents can be based on neighbouring coding blocks, and can be used to code information indicating the determined intra prediction mode, and a bitstream of the video signal is outputted. The decoded picture buffer unit 110 is used to store the reconstructed video coding block for a prediction reference. As the video picture encoding performs, new reconstructed video coding blocks are continuously generated and all of these reconstructed video coding blocks are stored in the decoded picture buffer unit 110.

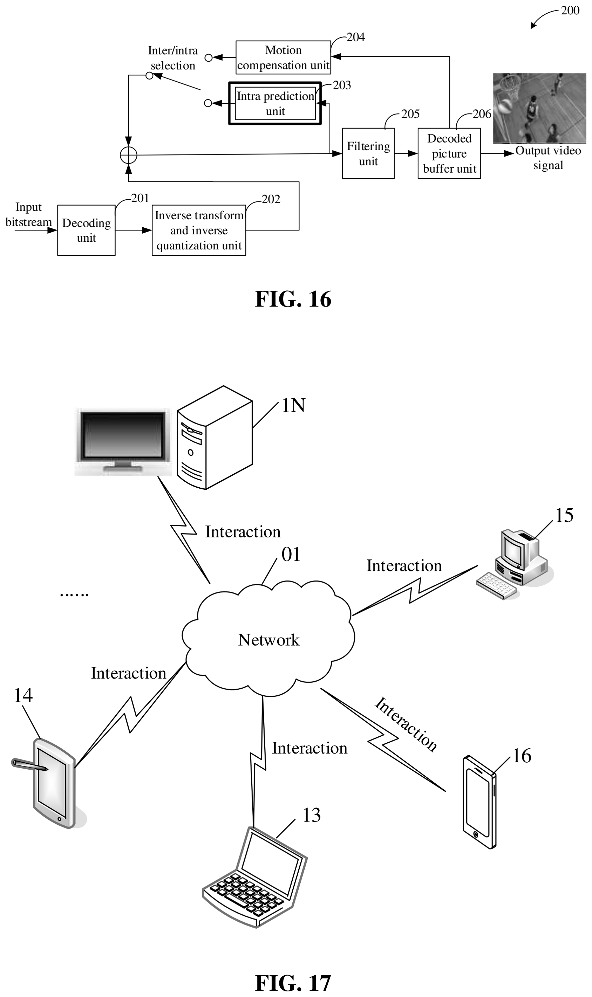

Referring to FIG. 16, a block diagram of compositions of a decoder provided by an embodiment of the disclosure is illustrated. As illustrated in FIG. 16, the decoder (specifically, a "video decoder") 200 includes a decoding unit 201, an inverse transform and inverse quantization unit 202, an intra prediction unit 203, a motion compensation unit 204, a filtering unit 205 and a decoded picture buffer unit 206, etc. The decoding unit 201 can implement a head information decoding and a CABAC decoding, and the filtering unit 205 can implement a DBF filtering and a SAO filtering. After an input video signal is encoded as described in FIG. 15, a bitstream of the video signal is outputted. The bitstream is inputted into the video decoding system 200, and firstly passes through the decoding unit 201 to obtain decoded transform coefficients. The transform coefficients are processed by the inverse transform and inverse quantization unit 202 to generate a residual block in a picture domain. The intra prediction unit 203 can be used to generate prediction data of a current video coding block based on the determined intra prediction mode and data from previously decoded block of a current picture or image. The motion compensation unit 204 is used to determine prediction information for the video coding block by parsing motion vectors and other associated syntax elements, and use the prediction information to generate a prediction block of the video coding block being decoded. The decoded video block is formed by summing the residual block from the inverse transform and inverse quantization unit 202 and the corresponding prediction block generated by the intra prediction unit 203 or the motion compensation unit 204. Blocking artifacts of the decoded video signal are removed through the filtering unit 205, so that the video quality can be improved. Then the decoded video block is stored in the decoded picture buffer unit 206. The decoded picture buffer unit 206 stores a reference picture for subsequent intra prediction or motion compensation, at the same time, the decoded picture buffer unit 206 is also used to output the video signal, i.e. a recovered original video signal is obtained.

Further, an embodiment of the disclosure further provides a network architecture of an encoding and decoding system including an encoder and a decoder, where FIG. 17 illustrates a diagram of a network architecture of an encoding and decoding system provided by an embodiment of the disclosure. As illustrated in FIG. 17, the network architecture includes one or more electronic device(s) 13 to 1N and a communication network 01, the electronic device(s) 13 to 1N can perform video interaction through the communication network 01. The electronic devices may be various types of devices with video encoding and decoding functions in the implementation process, for example, the electronic device may include a smart phone, a tablet computer, a personal computer, a personal digital assistant, a navigator, a digital phone, a video phone, a television, a sensing device, a server, or the like, which are not specifically limited by the embodiments of the disclosure. Here, the decoder or the encoder described in the embodiments of the disclosure may be the above-described electronic device.

The methods of the embodiments of the disclosure are mainly applied to the intra prediction unit 103 as illustrated in FIG. 15 and the intra prediction unit 203 as illustrated in FIG. 16. That is, the embodiments of the disclosure may be applied to the encoder or the decoder, or may be applied to both the encoder and the decoder, which are not specifically limited by the embodiments of the disclosure.

It should also be noted that, when applied to the intra prediction unit 103, the "current block" specifically refers to a coding block to be currently subjected to intra prediction; when applied to the intra prediction unit 203, the "current block" specifically refers to a decoding block to be currently subjected to intra prediction.

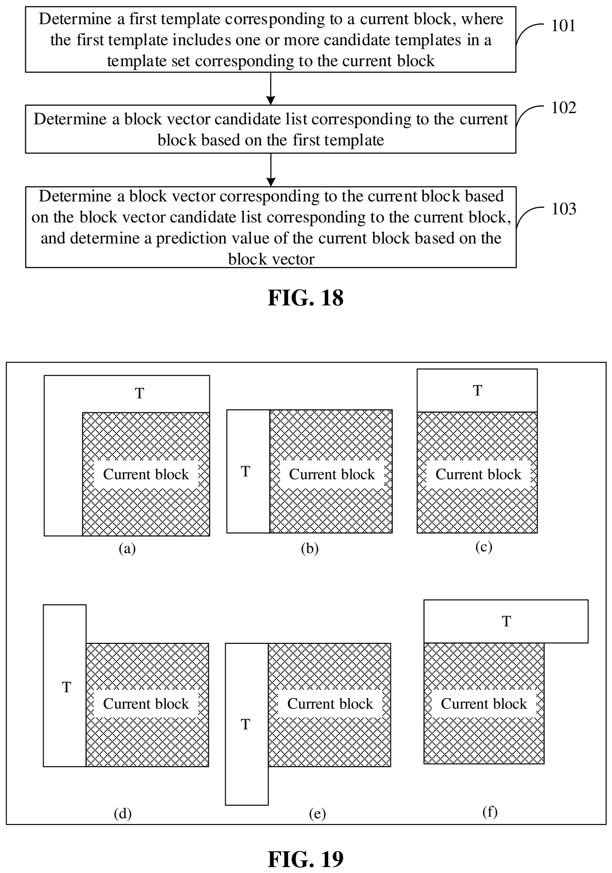

An embodiment of the disclosure provides a method for decoding, and the method for decoding is applied to a decoder. FIG. 18 is a flowchart of the method for decoding according to an embodiment of the disclosure. As illustrated in FIG. 18, a method in which the decoder performs the decoding processing may include the following operations 101 to 103.

At the operation 101: a first template corresponding to a current block is determined, where the first template includes one or more candidate templates in a template set corresponding to the current block.

In an embodiment of the disclosure, the first template corresponding to the current block may be determined first.

It should be noted that the method for decoding according to the embodiment of the disclosure is applied to a decoder. Further, the method for decoding may include an intra prediction method, more specifically, a colour component prediction method. Here, the video picture may be divided into multiple decoding blocks, and each decoding block may include a first colour component, a second colour component, and a third colour component. The current block in the embodiment of the disclosure refers to a decoding block currently to be intra-predicted in the video picture.

Here, when the first colour component is required to be predicted, the component to be predicted is the first colour component. When the second colour component is required to be predicted, the component to be predicted is the second colour component. When the third colour component is required to be predicted, the component to be predicted is the third colour component. In addition, assuming that prediction for the first colour component is performed in the current block, and the first colour component is a luma component, that is, the component to be predicted is a luma component, the current block may also be referred to as a luma block. Alternatively, assuming that prediction for the second colour component is performed in the current block, and the second colour component is a chroma component, that is, the component to be predicted is a chroma component, the current block may also be referred to as a chroma block.

It is noted that, in the embodiment of the disclosure, the first template corresponding to the current block may include an arbitrary number of candidate templates in the template set corresponding to the current block. The candidate template corresponding to the current block includes multiple candidate templates with different template types.

It can be understood that, in the embodiment of the disclosure, the template set corresponding to the current block may first be constructed based on different template types, and then an arbitrary number of candidate templates may be selected from the template set as the first template corresponding to the current block.

For example, in the embodiment of the disclosure, FIG. 19 is a second diagram of template types. As illustrated in FIG. 19, when the top-left reference samples, the top reference samples and the left reference samples are all available, the template shape is illustrated in (a); when only the left reference samples are available, the template shape is illustrated in (b); when only the top reference samples are available, the template shape is illustrated in (c); when only the left and top-left reference samples are available, the template shape is illustrated in (d); when only the left reference samples and the bottom-left reference samples are available, the template shape is illustrated in (e); when only the top reference samples and the top-right reference samples are available, the template shape is illustrated in (f).

Further, in the embodiment of the disclosure, when constructing the template set corresponding to the current block based on the template type, the template reference samples of the current block may be determined based on the template types and the template sizes corresponding to the template types, and then the candidate templates of the current block may be determined based on the template reference samples, and finally the construction of the template set is completed.

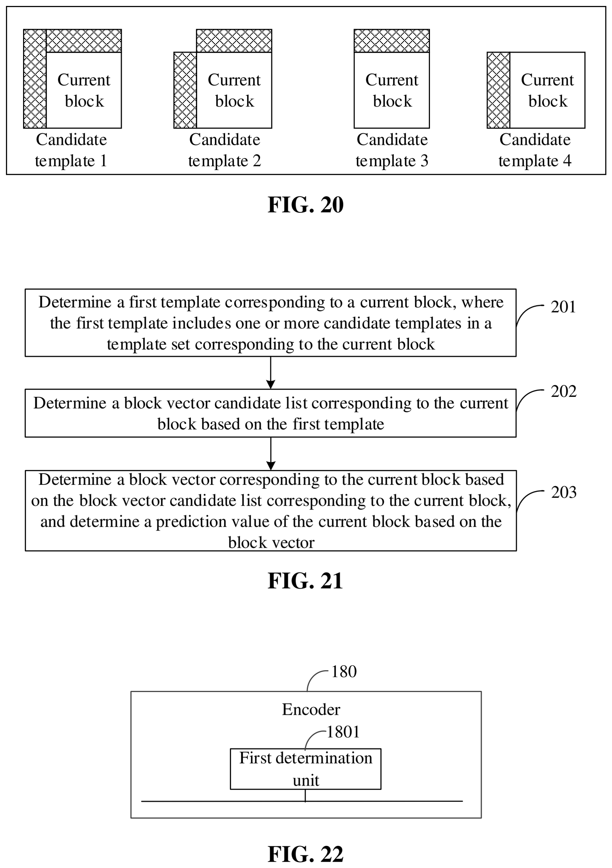

For example, in the embodiment of the disclosure, FIG. 20 is a diagram of candidate templates. As illustrated in FIG. 20, for the corresponding four different template types, the finally generated candidate templates of the current block may also include four types, such as candidate template 1 (TL template), candidate template 2 (TL template), candidate template 3 (T template), and candidate template 4 (L template).

Further, in the embodiment of the disclosure, the first template corresponding to the current block is determined based on the candidate templates in the template set, where the first template may include an arbitrary number of candidate templates.

It is noted that, in the embodiment of the disclosure, the first candidate template in the template set may be a template including the left neighboring reconstructed samples and the top neighboring reconstructed samples of the current block, for example, the TL template. The second candidate template in the template set may be a template including the top neighboring reconstructed samples of the current block, such as the T template. The third candidate template in the template set may be a template including the left neighboring reconstructed samples of the current block, such as the L template.

For example, in some embodiments, the first template corresponding to the current block may be the first candidate template in the template set corresponding to the current block, such as the candidate template 1.

For example, in some embodiments, the first template corresponding to the current block may include the first candidate template and the second candidate template in the template set corresponding to the current block, such as the candidate template 1 and the candidate template 3.

For example, in some embodiments, the first template corresponding to the current block may include the first candidate template, the second candidate template, and the third candidate template in the template set corresponding to the current block, such as the candidate template 1, the candidate template 3, and the candidate template 4.

Further, in the embodiment of the disclosure, a bitstream is decoded to determine template matching prediction identification information corresponding to the current block. In a case that a value of the template matching prediction identification information is a first value, determination process of the first template is performed, that is, the process of determining the first template proposed in the operation 101 may be performed.

It can be understood that, in the embodiment of the disclosure, the template matching prediction identification information may be used to determine whether the template matching prediction is used for the current block, that is, the template matching prediction identification information may indicate whether the current block is subjected to prediction processing by Intra TMP.

For example, in some embodiments, by decoding a bitstream, a variable serving as the template matching prediction identification information can be determined, thereby enabling the determination of the template matching prediction identification information based on the value of this variable.

It is noted that, in the disclosure, the value of the template matching prediction identification information may be a first value or a second value. Specifically, when the value of the template matching prediction identification information is different, the method for determining the prediction value of the current block is also different. Specifically, based on the value of the template matching prediction identification information, when determining the prediction value of the current block, the Intra TMP may be used or may be not used.

For example, in some embodiments, the template match prediction identification information may be understood as a flag bit indicating whether the Intra TMP is performed. If the value of the template matching prediction identification information is the first value, the prediction value of the current block may be determined by using the Intra TMP. If the value of the template matching prediction identification information is the second value, the Intra TMP may be not used to determine the prediction value of the current block.

For example, in some embodiments, the first value may be set to 1 and the second value may be set to 0. Alternatively, the first value may be set to true and the second value may be set to false. The disclosure makes no limitations whatsoever.

For example, in some embodiments, the flag intra_tmp_flag may be used to represent the template match prediction identification information, that is, the intra_tmp_flag is used as the flag of the Intra TMP.

For example, in some embodiments, if the value of the intra_tmp_flag is 1, it may indicate that the Intra TMP is selected to determine the prediction value of the current block; if the value of the intra_tmp_flag is 0, it may indicate that the Intra TMP is not selected to determine the prediction value of the current block.

It can be understood that, in the embodiment of the disclosure, when the value of the template matching prediction identification information is the first value, that is, after it is determined that the Intra TMP is used to determine the prediction value of the current block based on the value of the template matching prediction identification information, the determination process of the first template corresponding to the current block may be performed.

Further, in the embodiment of the disclosure, when determining the first template corresponding to the current block, the bitstream is decoded to determine the first template indication information corresponding to the current block. In a case that a value of the first template indication information is a third value, it is determined that the first template is a first candidate template.

It is noted that, in the embodiment of the disclosure, the first candidate template may be one candidate template in the template set corresponding to the current block. For example, the first candidate template may be the TL template in the template set.

It can be understood that, in the embodiment of the disclosure, the first template indication information may be used to determine whether the first candidate template is used for the current block, that is, the first template indication information may indicate whether the current block uses the first candidate template to perform prediction processing of Intra TMP for the current block.

For example, in some embodiments, by decoding the bitstream, a variable serving as the first template indication information can be determined, thereby enabling the determination of the first template indication information based on the value of this variable.

It is noted that, in the disclosure, the value of the first template indication information may be a third value or a fourth value. Specifically, based on the value of the first template indication information, when performing the Intra TMP, it may be selected to use the first candidate template, or it may be selected to use another template instead of using the first candidate template, for example, the template other than the first candidate template in the template set.

For example, in some embodiments, the third value may be set to 0 and the fourth value to 1. Alternatively, the third value may be set to true and the fourth value may be set to false. The disclosure makes no limitations whatsoever.

For example, in some embodiments, the flag intra_tmp_alternative_template_flag may be used to represent the first template indication information. For example, if the value of intra_tmp_alternative_template_flag is 0, it may indicate that the first candidate template is determined as the first template corresponding to the current block; if the value of intra_tmp_alternative_template_flag is 1, it may indicate that the first candidate template is not determined as the first template corresponding to the current block, but another template is then selected as the first template corresponding to the current block.

Accordingly, in the embodiment of the disclosure, after the first template indication information corresponding to the current block is determined, if the value of the first template indication information is the fourth value, it may be determined that the first template is not the first candidate template, thus second template indication information corresponding to the current block needs to be further determined.

Further, in the embodiment of the disclosure, when determining the first template corresponding to the current block, the bitstream is decoded to determine the second template indication information corresponding to the current block. In a case that a value of the second template indication information is a fifth value, it may be determined that the first template is a second candidate template. In a case that the value of the second template indication information is the sixth value, it may be determined that the first template is a third candidate template.

In the embodiment of the disclosure, the second candidate template and the third candidate template may be one candidate template in the template set corresponding to the current block, respectively. For example, the second candidate template may be the T template in the template set, and the third candidate template may be the L template in the template set.

It can be understood that, in the embodiment of the disclosure, the second template indication information may be used to determine whether the second candidate template and/or the third candidate template are used for the current block, that is, the second template indication information may indicate whether the second candidate template and/or the third candidate template is used to perform prediction processing of Intra TMP for the current block.

For example, in some embodiments, by decoding the bitstream, a variable serving as the second template indication information can be determined, thereby enabling the determination of the second template indication information based on the value of this variable.

It is noted that, in the disclosure, the value of the second template indication information may be a fifth value or a sixth value. Specifically, based on the value of the second template indication information, the second candidate template or the third candidate template may be used when performing the Intra TMP.

For example, in some embodiments, the fifth value may be set to 0 and the sixth value to 1. Alternatively, the fifth value may be set to true and the sixth value may be set to false. The disclosure makes no limitations whatsoever.

For example, in some embodiments, a flag intra_tmp_template_idx may be used to represent the second template indication information. For example, if the value of the intra_tmp_template_idx is 0, it may indicate that the second candidate template is determined as the first template corresponding to the current block. If the value of the intra_tmp_template_idx is 1, it may indicate that the third candidate template is determined as the first template corresponding to the current block.

That is to say, in the embodiments of the disclosure, it is possible to indicate in the bitstream which candidate template in the template set is the first template corresponding to the current block. For example, the first template is indicated by using the first template indication information and the second template indication information.

For example, in some embodiments, taking three candidate templates including the TL template, the T template, and the L template as examples, the first candidate template is the TL template, the second candidate template is the T template, the third candidate template is the L template, the flag intra_tmp_flag represents the template matching prediction identification information, the flag intra_tmp_alternative_template_flag represents the first template indication information, and the flag intra_tmp_template_idx represents the second template indication information, then the information in the bitstream can be decoded as follows.

```
intra_tmp_flag
if(intra_tmp_flag){
    intra_tmp_alternative_template_flag
    if(intra_tmp_alternative_template_flag) {
        intra_tmp_template_idx
    }
    intra_tmp_idx
}
```

Here, the template matching prediction identification information intra_tmp_flag indicates whether the Intra TMP is used for the current block, if the Intra TMP is used for the current block, the decoder parses the intra_tmp_alternative_template_flag, the first template indication information intra_tmp_alternative_template_flag indicates whether another template is used for the current block. If the value of the intra_tmp_alternative_template_flag is 0, it is indicated that the TL template is used for the current block. If the value of the intra_tmp_alternative_template_flag is 1, the decoder parses the intra_tmp_template_idx, the second template indication information intra_tmp_template_idx indicates that the T template or the L template is used for the current block. For example, if the value of the intra_tmp_template_idx is 0, it is indicated that the T template is used for the current block, if the value of the intra_tmp_template_idx is 1, it is indicated that the L template is used for the current block.

Further, in the embodiment of the disclosure, when determining the first template corresponding to the current block, the bitstream is decoded to determine third template indication information corresponding to the current block. In a case that the value of the third template indication information is a seventh value, it is determined that the first template is the first candidate template. In a case that the value of the third template indication information is an eighth value, it is determined that the first template is the second candidate template. In a case that the value of the third template indication information is a ninth value, it is determined that the first template is the third candidate template.

It is noted that in the embodiment of the disclosure, the first candidate template, the second candidate template, and the third candidate template may be one candidate template in the template set corresponding to the current block, respectively. For example, the first candidate template may be the TL template in the template set, the second candidate template may be the T template in the template set, and the third candidate template may be the L template in the template set.

It can be understood that, in the embodiment of the disclosure, the third template indication information may be used to determine whether the first candidate template and/or the second candidate template and/or the third candidate template are used for the current block, that is, the third template indication information may indicate whether the first candidate template and/or the second candidate template and/or the third candidate template are used to perform prediction processing of the Intra TMP for the current block.

For example, in some embodiments, by decoding the bitstream, a variable serving as the third template indication information can be determined, thereby enabling the determination of the third template indication information based on the value of this variable.

It is noted that in the disclosure, the value of the third template indication information may be a seventh value, an eighth value, or a ninth value. Specifically, based on the value of the third template indication information, the first candidate template, the second candidate template or the third candidate template may be selected to be used when performing the Intra TMP.

For example, in some embodiments, the seventh value may be 0, the eighth value may be 1, and the ninth value may be 2, which are not limited in the disclosure.

For example, in some embodiments, the flag intra_tmp_template_idx may be used to represent the third template indication information. For example, if the value of the intra_tmp_template_idx is 0, it may indicate that the first candidate template is determined as the first template corresponding to the current block. If the value of the intra_tmp_template_idx is 1, it may indicate that the second candidate template is determined as the first template corresponding to the current block. If the value of the intra_tmp_template_idx is 2, it may indicate that the third candidate template is determined as the first template corresponding to the current block.

That is to say, in the embodiments of the disclosure, it is possible to indicate in the bitstream which candidate template in the template set is the first template corresponding to the current block. For example, the first template is indicated by using the third template indication information.

For example, in some embodiments, the first template indication information intra_tmp_alternative_template_flag and the second template indication information intra_tmp_template_idx may be merged into the same syntax element intra_tmp_template_idx, that is, the third template indication information.

For example, in some embodiments, three candidate templates including the TL template, the T template, and the L template are taken as examples, the first candidate template is the TL template, the second candidate template is the T template, the third candidate template is the L template, and the flag intra_tmp_template_idx represents the third template indication information, the information in the bitstream can be decoded as follows.

```
intra_tmp_flag
if (intra_tmp_flag) {
    intra_tmp_template_idx
    }
intra_tmp_idx
    }
```

Here, the template matching prediction identification information intra_tmp_flag indicates whether the Intra TMP is used for the current block, if the Intra TMP is used for the current block, the decoder parses the intra_tmp_template_idx, the third template indication information intra_tmp_template_idx indicates that the TL template, the T template, or the L template is used for the current block, if the value of the intra_tmp_template_idx is 0, it is indicated that the TL template is used for the current block. If the value of the intra_tmp_template_idx is 1, it is indicated that the T template is used for the current block. If the value of the intra_tmp_template_idx is 2, it is indicated that the L template is used for the current block.

Further, in the embodiment of the disclosure, when determining the first template corresponding to the current block, the bitstream is decoded to determine a candidate index corresponding to the current block. In a case that a value of the candidate index is less than or equal to a preset threshold, it is determined that the first template is a first candidate template.

Accordingly, in the embodiment of the disclosure, after decoding the bitstream to determine the candidate index corresponding to the current block, if the value of the candidate index is greater than the preset threshold, the bitstream is decoded to determine the third template indication information corresponding to the current block. If the value of the third template indication information is a seventh value, it is determined that the first template is the first candidate template. If the value of the third template indication information is an eighth value, it is determined that the first template is the second candidate template. If the value of the third template indication information is the ninth value, it is determined that the first template is the third candidate template.

It is noted that, in the embodiment of the disclosure, the preset threshold may be used to determine whether to directly use the first candidate template. Herein, if the value of the candidate index corresponding to the current block is greater than (or greater than or equal to) the preset threshold, the third template indication information is selected to continue to be used to determine the first template to be used. If the value of the candidate index corresponding to the current block is less than or equal to (or less than) the preset threshold, the first candidate template may be directly determined as the first template corresponding to the current block.

It can be understood that, in the embodiment of the disclosure, the candidate index corresponding to the current block can be determined by decoding the bitstream first, and whether to select the first candidate template in the template set as the first template is determined by combining the candidate index with a preset threshold. This approach effectively gives the first candidate template a higher priority over other candidate templates, i.e., prioritizing the determination of whether to use the first candidate template.

It should be understood that, since the TL template covers a larger neighbouring area, and in most cases the texture is continuous from both the left and top sides, the TL template generally has greater reference value compared to the individual T template or the individual L template. Therefore, the TL template is selected in most cases, while the individual T and L templates are more often used as supplementary options. Based on this distribution pattern, the TL template can be allocated a higher priority compared to the T and L templates.

That is to say, in the embodiment of the disclosure, the candidate index of the current block may be used to indirectly determine whether to use a TL template having the higher priority, and in this case, it may be indicated in the bitstream which candidate template in the template set is the first template corresponding to the current block. For example, the first template is indicated by using the third template indication information.

For example, in some embodiments, three candidate templates including the TL template, the T template, and the L template are taken as examples, the first candidate template is the TL template, the second candidate template is the T template, the third candidate template is the L template, and the flagintra_tmp_template_idx represents the third template indication information, the information in the bitstream can be decoded as follows.

intra_tmp_flag

if (intra_tmp_flag) {

intra_tmp_idx

 if (intra_tmp_idx > THR) {

  intra_tmp_template_idx

 }

}

The template matching prediction identification information intra_tmp_flag indicates whether the Intra TMP is used for the current block, and if the Intra TMP is used for the current block, the decoder first parses the intra_tmp_idx and then parses the intra_tmp_template_idx. Whether to parse the intra_tmp_template_idx depends on the value of the intra_tmp_idx. If the value of the intra_tmp_idx is less than or equal to (or less than) the preset threshold THR, the TL template is used by default, otherwise, that is, the value of the intra_tmp_idx is greater than (or greater than or equal to) the preset threshold THR, it is required to parse the intra_tmp_template_idx to determine which template is used for the current block. The third template indication information intra_tmp_template_idx indicates that a TL template, a T template, or an L template is used for the current block, and if the value of the intra_tmp_template_idx is 0, it is indicated that the TL template is used for the current block, if the value of intra_tmp_template_idx is 1, it is indicated that the T template is used for the current block, and if the value of intra_tmp_template_idx is 2, it is indicated that the L template is used for the current block.

As can be seen, in the embodiment of the disclosure, by using the candidate index in combination with the preset threshold to determine whether the TL template in the template set is to be used, a few candidates with smaller indices are not required to distinguish which specific template to use, but using the TL template by default. This reduces unnecessary overhead, as the TL template is typically selected for these candidates in most cases. It can also be considered that the indices of candidates for the T template and the L template do not start from 0, but start from the THR, which is equivalent to allocating a longer binary symbol string to the T template and the L template.

It should be noted that, in the embodiment of the disclosure, it is possible to indicate in the bitstream which one or more candidate templates in the template set is/are the first template corresponding to the current block. For example, the first template is indicated by using the first template indication information and/or the second template indication information and/or the third template indication information. Certainly, it is also possible to select not to indicate in the bitstream which candidate template(s) to use, but instead directly construct the block vector candidate list for the current block based on multiple candidate templates in the template set.

Further, in the embodiment of the disclosure, the first template corresponding to the current block may include multiple candidate templates in the template set. For example, the first template may include three candidate templates: the first candidate template (such as the TL template), the second candidate template (such as the T template), and the third candidate template (such as the L template).

Accordingly, in the embodiment of the disclosure, the block vector candidate list may be constructed directly using multiple possible candidate templates, where each block vector in the list may be obtained by template matching using one of the TL template, the L template, or the T template.

For example, in some embodiments, if it is not indicated in the bitstream which candidate template or templates to use, the syntax element may be decoded as follows.

```
intra_tmp_flag
If (intra_tmp_flag)
{
    intra_tmp_idx
}
```

Here, the intra_tmp_flag is the flag of the Intra TMP, and if the intra_tmp_flag is true, it is continued to parse the intra_tmp_idx, which indicates the candidate index.

At the operation 102, a block vector candidate list corresponding to the current block is determined based on the first template.

In the embodiment of the disclosure, after the first template corresponding to the current block is determined, the block vector candidate list corresponding to the current block may be further determined based on the first template.

It is noted that in the embodiment of the disclosure, the block vector candidate list corresponding to the current block may include at least one block vector obtained after searching based on the first template corresponding to the current block.

Further, in the embodiment of the disclosure, after the first template corresponding to the current block is determined, a search parameter corresponding to the first template may be selected to be determined based on the first template.

It can be understood that in the embodiment of the disclosure, the search parameter includes at least one of: a search range, a search order, or a list length. Herein, the search range is used to determine the range of a search area in which the search is performed, the search order is used to determine the sequence of the horizontal search and the vertical search for performing the search, and the list length is used to determine the length of the finally generated block vector candidate list.

That is to say, in the embodiment of the disclosure, in the procedure of constructing the block vector candidate list based on the selected first template, when constructing the list based on different templates, the search method used (including the search range, the search order, or the like) and the list length may be the same or different.

For example, in some embodiments, if the determined first template is the first candidate template, that is, in a case where it is determined to use the TL template, the list length of the block vector candidate list is set to 15. If the determined first template is the second candidate template or the third candidate template, that is, in the case where it is determined to use the T template or the L template, the list length of the block vector candidate list is set to 8.

For example, in some embodiments, if the determined first template is the second candidate template, that is, in a case where it is determined to use the T template, the list length of the block vector candidate list is set to 8. If the determined first template is the third candidate template, that is, in the case where it is determined that the L template is used, the list length of the block vector candidate list is set to 4.

Further, in the embodiment of the disclosure, after the search parameter corresponding to the first template is determined, the search may be further performed based on the search parameter and the first template, and then the block vector candidate list corresponding to the current block may be determined.

That is to say, in the embodiment of the disclosure, in the procedure of determining the block vector candidate list corresponding to the current block based on the first template, a reference may be made to the first reference template. Specifically, the search parameter determined by the first template may be used in the procedure of performing the search.

Further, in the embodiment of the disclosure, the search may be performed based on the search parameter corresponding to the current block and the first template, to finally determine the block vector candidate list. Specifically, the block vector candidate list corresponding to the current block is finally determined by performing the search based on the search parameter, such as the search range, the search order, and the list length, corresponding to the current block.

Further, in the embodiment of the disclosure, when determining the block vector candidate list corresponding to the current block based on the first template, the preset search area corresponding to the first template may be determined first. Then, the search may be performed in the preset search area to determine the block vector candidate list corresponding to the current block.

It should be noted that, in the embodiment of the disclosure, the preset search area is a reconstructed portion in the current picture, and is limited by the size of the search range. The preset search area here is actually a set of all search points. Since the shape of the area is usually not represented by a single rectangular area, in a specific implementation, the search may also be performed in multiple rectangular areas, and then the search results for different area can be synthesized to obtain the final best matching block and the best block vector.

Further, in the embodiment of the disclosure, when searching in the preset search area to determine the block vector candidate list corresponding to the current block, the search points in the preset search area may be traversed, and matching costs between matching templates and the first template are determined based on a preset matching criterion, where each of the matching templates corresponds to a respective one of the search points in the preset search area. Then, a block vector candidate list may be determined based on the matching costs.

It should be noted that, in the embodiment of the disclosure, the block vector candidate list corresponding to the current block includes one or more block vectors corresponding to the current block obtained by searching, and one or more candidate templates corresponding to the one or more block vectors.

That is to say, in the embodiment of the disclosure, the number of the block vectors determined by searching may be one or more, for example, if the length of the block vector candidate list is N, N block vectors of the current block may be determined, where N is an integer greater than 0.

Accordingly, in the embodiment of the disclosure, when searching in the preset search area to determine the block vector candidate list corresponding to the current block, the search points in the preset search area may be traversed, and the matching costs between the matching templates and the first template may be determined based on the preset matching criterion, where each of the matching templates corresponds to a respective one of the search points in the preset search area. Finally, N block vectors and N candidate templates corresponding to the N block vectors can be determined based on the matching costs, and a corresponding block vector candidate list can be finally generated.

That is to say, in the embodiment of the disclosure, searching for and determining N block vectors corresponding to N matching templates within a preset search area (i.e., the procedure of searching for and determining the block vectors corresponding to the N matching templates) may include: determining the value of N, which represents the number of the candidate templates; determining the matching template comparison criterion; and recording the N block vectors corresponding to the N selected matching templates (i.e., the N selected candidate templates).

It should be noted that, in the embodiment of the disclosure, the preset matching criterion includes any one of cost functions for measuring the mode, such as Sum of Absolute Difference (SAD), Sum of Absolute Transformed Difference (SATD), Sum of Squared Differences (SSE), Mean Absolute Deviation (MAD), an Mean Absolute Error (MAE), Mean Square Error (MSE), or Normalized Correlation Coefficient (NCC).

Further, in the embodiment of the disclosure, when determining the block vector candidate list corresponding to the current block based on the matching costs (i.e., determining N block vectors and N candidate templates corresponding to the N block vectors (i.e., the list length of the block vector candidate list is N)), N minimum matching costs may be first determined among the matching costs between the matching templates and the first template, where each of the matching templates corresponds to a respective one of the search points in the preset search area. Then, N block vectors and N candidate templates corresponding to N minimum matching costs are determined.

It should be noted that, in the embodiment of the disclosure, when performing a search, a search strategy that may be adopted may include, but is not limited to, a search method based on different search step sizes, for example, a coarse search based on a first search step size and/or a fine search based on a second search step size, where the first search step size is larger than the second search step size.

Further, in the embodiment of the disclosure, initial block vectors and initial matching templates may be determined by traversing the search points in the preset search area based on the first search step size, where each of the initial block vectors corresponds to a respective one of the initial matching templates. Then a first search area is determined based on the initial matching templates, where the first search area is smaller than a preset search area. Finally, the search points in the first search area can be traversed based on the second search step size, to determine the block vectors and the candidate templates, thereby determining the corresponding block vector candidate list, where the first search step size is larger than the second search step size.

It can be seen that in the embodiment of the disclosure, in the procedure of the search, there is no need to exhaustively search every possible BV in sequential order, for example, the usual search order is from left to right and from top to bottom. Generally speaking, the BV of the entire pixel can be searched sequentially. If the currently searched BV is (x0, y0), then the next one is (x0+1, y0), provided that the boundary of the search range has not been reached. In the disclosure, a sparse search may be performed first, such as the BV of the entire pixel. If the currently searched BV is (x0, y0), the next one is (x0+3, y0), provided that the boundary of the search range has not been reached. That is to say, template matching is performed every constant number of pixels, or template matching may be performed every constant step size. The step size here may be a preset value, such as 2, 3, 4, 8, or the like. Certainly, the same processing can be done in the vertical direction. K BVs with the lowest costs are first found. K may be equal to N, or may be greater than or less than N. This procedure may be accomplished by building a list. Then on the basis of the K BVs with the lowest costs, the improvement is made in a small range on the basis of each BV. If the above search interval is 3 pixels, then the improved range here may be set to $3\times3$, and the improved BV may be used to construct the block vector candidate list with a length of N, thus N candidates of the BVs may be obtained.

For example, in some embodiments, for example, N is set to 3, the first search can be performed based on a preset step size to find a certain number, such as 3, of sorted BVs. Here, the horizontal step size is 3, and the vertical step size is 3, either. Then, a second search is performed on the basis of the sorted three BVs, the search range for the second search is $3\times3$, and each BV in each $3\times3$ range participates in the sorting for the block vector candidate list intraTmpCand-List.

It should be noted that, in the embodiment of the disclosure, if the fractional-pixel accuracy is supported, the subsequent refinement can be continued to the fractional-pixel BV. For example, a 1/2-pixel search is performed within a range of one pixel to the left, right, top, and bottom around the BV of the entire pixel selected in the second step.

Note that in the embodiment of the disclosure, if one or some candidate templates to be used is not indicated in the bitstream, it is required to compare the matching costs of different candidate templates in the procedure of directly constructing the block vector candidate list corresponding to the current block based on the multiple candidate templates in the template set. At this time, since the sizes or pixels of different candidate templates are different, it is required to uniformly adjust the matching costs of different candidate templates when comparing the matching costs of different candidate templates.

It can be understood that in the embodiment of the disclosure, in the procedure of adjusting the matching costs of different candidate templates, the corresponding initial cost may be adjusted by using the pixel parameter corresponding to the candidate template, or the template coefficient corresponding to the candidate template may be determined, and then the corresponding initial cost may be adjusted by using the template coefficient.

Further, in the embodiment of the disclosure, in the procedure of constructing the block vector candidate list, the search points in the preset search area may be traversed, and the initial costs between the matching templates and the first template may be determined based on the preset matching criterion, where each of the matching templates corresponds to a respective one of the search points in the preset search area. Then the initial costs are adjusted based on the pixel parameters corresponding to the candidate templates, to determine the matching costs between the matching templates corresponding to the search points in the preset search area and the first template. Finally, the block vector candidate list may be determined based on the matching costs.

That is to say, in the embodiment of the disclosure, if multiple candidate templates, such as the TL template, the L template, and the T template, are directly used to construct the block vector candidate list, each block vector in the block vector candidate list may be obtained by template matching using one of the TL template, the L template, or the T template. In this case, the basic principle for constructing the block vector candidate list is to sort the matching costs of different candidate templates.

It can be understood that, in the embodiment of the disclosure, if the matching costs of several types of different candidate templates are directly compared, the final result is not accurate because the numbers of pixels in different candidate templates are different. Taking the matching cost is SAD as an example, it is unreasonable to directly compare the SAD of different templates. For example, for the same BV, the SAD of the TL template is equal to the SAD of the T template plus the SAD of the L template.

For example, in some embodiments, when comparing the matching costs of different candidate templates, it is possible to choose to adjust the matching costs (initial costs) based on the pixel parameters of the different templates. The pixel parameter may be the number of pixels corresponding to the candidate template. For example, when pixel parameters are used to adjust the matching costs (initial costs), the initial cost (such as SAD) corresponding to one candidate template can be divided by the number (pixel parameters) of pixels corresponding to the candidate template, to obtain the absolute value of the average difference (adjusted matching cost). This division result can be called the average absolute difference (AAD), that is, the finally determined matching cost may be the corresponding AAD.

It can be understood that, in the embodiment of the disclosure, after the initial costs are adjusted based on the pixel parameters of different templates to obtain the matching costs (AADs) corresponding to different candidate templates, the influencing factor that the numbers of pixels of different candidate templates are different can be removed, thus the matching costs of different candidate templates can be compared to finally generate the corresponding block vector candidate list.

Further, in the embodiment of the disclosure, if the first template includes multiple candidate templates in the template set, a template coefficient corresponding to each of the multiple candidate templates may be firstly determined.

It should be noted that when determining the template coefficient corresponding to each of the candidate templates, the template coefficient may be determined based on a size parameter corresponding to the candidate template, the template coefficient may be determined based on a pixel parameter corresponding to the candidate template, or the template coefficients of different candidate templates may be set based on a preset value.

It can be understood that in the embodiment of the disclosure, different candidate templates may correspond to different template coefficients, and the matching costs of different templates are uniformly adjusted by using the template coefficients corresponding to different candidate templates, thus a more reasonable and accurate block vector candidate list can be obtained while sorting the matching costs.

Further, in the embodiment of the disclosure, in the procedure of constructing the block vector candidate list, the search points in the preset search area may be traversed, and the initial costs between the matching templates and the first template may be determined based on the preset matching criterion, where each of the matching templates corresponds to a respective one of the search points in the preset search area. Then, the initial costs can be adjusted based on the template coefficients to determine the matching costs between the matching templates corresponding to the search points in the preset search area and the first template. Finally, the block vector candidate list can be determined based on the matching costs.

For example, in some embodiments, when comparing the matching costs of different candidate templates, it is possible to choose to perform the comparison based on the template coefficients of different templates. For example, the SADs of different candidate templates are multiplied by a coefficient (template coefficient) to adjust the initial costs of different candidate templates, thus different candidate templates can be compared by using the adjusted matching costs.

It should be noted that, in the embodiment of the disclosure, assuming that the TL template includes the T template and the L template, the number of pixels of the TL template is always the largest, thus only the T template and the L template can be multiplied by the template coefficient, but the TL template is not required, or the template coefficient of the TL template can be set to 1.

For example, in some embodiments, the initial cost SAD of the TL template is denoted as $SAD_{TL}$, the initial cost SAD of the T template is denoted as $SAD_T$, the initial cost SAD of the L template is denoted as $SAD_L$. The matching cost of the TL template used for comparison with other templates is denoted as $COST_{TL}$, the matching cost of the T template is denoted as $COST_T$, the matching cost of the L template is denoted as $COST_L$.

Then, the corresponding template coefficients are used respectively, for example, the template coefficient of the TL template is 1, and the template coefficient of the T template is $COEF_T$, the template coefficient of the TL template is $COEF_L$. It can be determined that: $COST_{TL} = SAD_{TL}$, $COST_T = SAD_T * COEF_T$, $COST_L = SAD_L * COEF_L$.

Herein, $COEF_T$ and $COEF_L$ may be calculated by using the number of pixels of the candidate template. $COEF_T$ and $COEF_L$ with different block sizes may be calculated in advance.

For example, in some embodiments, in a case that the TL template does not contain the top-left portion, i.e., the TL template is equal to the T template plus the L template, if the width of the current block is equal to the height of the current block, $COEF_T$ equals to 2, $COEF_L$ equals to 2. However, it is still unavoidable that $COEF_T$ or $COEF_L$ is a fractional value. For example, if the width is twice the height, $COEF_T$ equals to 1.5, $COEF_L$ equals to 3.

Then, after the adjustment using the corresponding template coefficients, it is determined that: $COST_{TL} = SAD_{TL} * COEF_{TL}$, $COST_T = SAD_T * COEF_T$, $COST_L = SAD_L * COEF_L$.

Here, $COEF_{TL}$, $COEF_T$ and $COEF_L$ may be calculated by using the numbers of pixels of the several templates. $COEF_{TL}$, $COEF_T$ and $COEF_L$ with different block sizes may be calculated in advance.

For example, in some embodiments, in a case that the TL template does not contain the top-left portion, i.e., the TL template is equal to the T template plus the L template, if the width of the current block is equal to the height of the current block, $COEF_{TL}$ equals to 1, $COEF_T$ equals to 2, $COEF_L$ equals to 2. For example, if the width is twice the height, $COEF_{TL}$ equals to 2, $COEF_T$ equals to 3, $COEF_L$ equals to 6. The method for calculating the template coefficient of a specified template may be: dividing the least common multiple of the number of pixels of all templates by the number of pixels of the specified template.

It can be understood that in the embodiment of the disclosure, for the matching cost of the TL template, the matching cost of the T template, and the matching cost of the L template of the same BV, if the matching degree (such as the above AAD) of the T template and the matching degree of the L template are different, even if they are only slightly different, then for the $COST_T$ or $COST_L$ calculated based on the pixel ratio, there must be one less than $COST_{TL}$. That is to say, if the template coefficients of multiple candidate templates (such as the TL template, the T template and the L template) are adjusted by using pixel parameters or size parameters, and then the matching cost of the TL template, the matching cost of the T template and the matching cost of the L template are directly compared after the adjustment, the TL template will suffer in most cases. That is to say, directly using the above method for comparison would result in different BVs being compared only based on the portion with higher matching degree. However, in fact, because the TL template covers a larger neighbouring area and texture is usually continuous from both the left and top sides, it is unreasonable to unrestrictedly replace the TL template with the individual T template or the L template.

It should be noted that in the embodiment of the disclosure, the template coefficient corresponding to the candidate template can be optionally set based on a preset value, and thus the adjustment range to the matching cost can be reasonably controlled.

For example, in some embodiments, when the template coefficient corresponding to the candidate template is set based on the preset value, the template coefficient of the T template and/or the L template may be set to a value larger than the value of the template coefficient of the TL template.

For example, in the embodiment of the disclosure, when the template coefficient corresponding to the candidate template is set based on the preset value, the $COST_T$ or $COST_L$ may be enlarged for comparison with $COST_{TL}$. Such a setting method for the template coefficients can not only eliminate the influence of the number of pixels, but also take into account that the TL template suffers disadvantages compared with the T template and the L template in general, for which they are necessary to be adjusted. For example, $COST_T$ or $COST_L$ is multiplied by a factor greater than 1.

It should be noted that in the embodiment of the disclosure, if the first template includes multiple candidate templates in the template set, and each block vector in the block vector candidate list may be obtained by template matching using one of the TL template, the L template, or the T template, the number of block vectors corresponding to any type of the candidate template in the block vector candidate list may be optionally limited.

Further, in the embodiment of the disclosure, an upper threshold corresponding to each of the plurality of candidate templates is determined, and the number of block vectors corresponding to the candidate template in the block vector candidate list is determined based on the upper threshold. Herein, the value of the upper threshold may be less than or equal to the list length of the block vector candidate list.

That is to say, in the embodiment of the disclosure, the number of candidates (block vectors) selected based on the T template and the L template from the same block vector candidate list may be limited. For example, an upper limit of the number of candidates (block vectors) selected based on the T template and/or the L template is set, and when the number of candidates (block vectors) selected based on the T template and/or the L template from the block vector candidate list reaches the upper limit, no attempt is made to add the candidates (block vectors) selected based on the T template and/or the L template into the block vector candidate list.

Further, in the embodiment of the disclosure, when multiple types of candidate templates are directly used to construct the block vector candidate list, that is, in a case where the first template includes more than one candidate template, for example, the first template at least includes a first candidate template, a second candidate template, and a third candidate template, a second search area may be determined based on the first candidate template, and search points in the second search area may be traversed based on the first search step size to determine initial block vectors. Then, a third search area is determined based on the initial block vectors and the first template, and search points in the third search area are traversed based on a second search step size to determine the block vector candidate list, where the first search step size is larger than the second search step size.

It can be understood that, in the embodiment of the disclosure, an initial search can first be performed using the first candidate template in the first template and with a first search step size to obtain a preliminary search result, from which the initial block vectors are selected. Subsequently, using this initial block vector as a reference point, the matching costs of the multiple candidate templates included in the first template can be compared and adjusted, and a further refinement search can be performed with a second search step size. In this way, the construction of the block vector candidate list can be ultimately completed.

For example, in the embodiment of the disclosure, assuming that the first candidate template is the TL template, when performing the first search (the coarse search with the first search step size) of the Intra TMP multi-candidate, a second search area can be determined based on the TL template first, and after traversing the search points in the second search area, a certain number of BVs, that is, initial block vectors, can be filtered out based on the matching costs corresponding to the first candidate template, and these BVs are used as reference points of the second search (i.e., an improvement search based on the second search step size). Then, the matching among the TL template, the T template and the L template of several BVs is analyzed. If it is found that $COST_T$ or $COST_L$ corresponding to a BV vary greatly, or if $COST_T$ or $COST_L$ is greater than a preset value, it is possible to choose to use a template with a high matching degree among the T templates or the L templates to perform an improved search, that is, candidate templates other than the first candidate template in the first template are used to continue the search. On the contrary, if $COST_T$ or $COST_L$ corresponding to a BV have little difference, then the TL template is still used to improve the search, that is, the first candidate template is used to continue the search.

Further, in the embodiment of the disclosure, if the first template at least includes a first candidate template, a second candidate template, and a third candidate template, searching may be performed based on the first candidate template to determine a first list corresponding to the first candidate template. Searching may be performed based on the second candidate template to determine a second list corresponding to the second candidate template. Searching may be performed based on the third candidate template to determine a third list corresponding to the third candidate template. The first list is adjusted based on the second list and the third list to determine the block vector candidate list.

It should be noted that, in the embodiments of the disclosure, the list lengths of the second list and the third list may be the same or different, which is not limited in the disclosure.

It should be noted that, in a case where the first template is not indicated in the bitstream, only one block vector candidate list is constructed, thereby eliminating the need to use a syntax element in the bitstream to indicate which template is selected. However, because the template matching costs between different templates cannot be directly compared, it is necessary to formulate certain rules to enable that they can be put into the same block vector candidate list. Here, a straightforward method is to sort the candidates from one type of candidate template based on their matching costs, while candidates from other different candidate templates are not sorted using the matching costs of the type of candidate template, but are instead placed directly into predefined positions in the list.

For example, in some embodiments, it is assumed that the first candidate template is the TL template, the second candidate template is the T template, the third candidate template is the L template, and the list length of the block vector candidate list is N. Then, a first list with a length of N can be constructed by using the TL template first. Herein, the template matching costs of the searched BVs can be calculated based on the preset search method, and the template matching costs can be sorted, and the one with the smaller cost can be placed in the front position, and finally the first list can be generated. It is also possible to specify that the maximum number of T and L templates that can be placed into the final block vector candidate list is M. Since a duplicate-checking operation is required when adding candidates into the list, the actual number placed may be less than M. Then, the search based on the T template and the L template can be continued to generate the corresponding second list and the corresponding third list, respectively. Finally, the block vectors and the corresponding candidate templates in the second list and the third list can be sequentially placed into the first list, to complete the adjustment to the first list, thereby obtaining the corresponding block vector candidate list.

For example, in some embodiments, an example is that N is 15 and M is 2, that is, the length of the finally generated block vector candidate list is 15, the number of candidates of the T template can be at most 2, and the number of candidates of the L template can be at most 2.

For example, in some embodiments, an example is that N is 19 and M is 3, that is, the length of the finally generated block vector candidate list is 19, the number of candidates of the T template can be at most 3, and the number of candidates of the L template can be at most 3.

Further, in the embodiment of the disclosure, if the first template at least includes a first candidate template, a second candidate template, and a third candidate template, searching is performed based on the first candidate template, the second candidate template, and the third candidate template to determine a first list corresponding to the first candidate template, a second list corresponding to the second candidate template, and a third list corresponding to the third candidate template, respectively. The first list is adjusted based on the second list and the third list to determine the block vector candidate list.

That is, in the embodiment of the disclosure, it is also possible to select to perform searching based on the first candidate template, the second candidate template, and the third candidate template to obtain the corresponding first list, second list, and third list. Then, the corresponding block vector candidate list is generated based on the first list, the second list and the third list.

For example, in some embodiments, regarding the search process, one approach is that the T and L templates can share the search process of the TL template. Since the matching costs of the T and L templates can be computed simultaneously when calculating the matching costs of the TL template, this method does not significantly increase the overall search complexity. For example, in the same search process, lists are constructed for the TL template, the T template and the L template, respectively, and after the searching is completed, the three lists are integrated into the final block vector candidate list.

For example, in some embodiments, the T template and the L template may also use separate search processes from the TL template. Certainly, it is also possible to share part of the search process while keeping the rest separate, which is not particularly limited in the disclosure.

Further, in the embodiment of the disclosure, when adjusting the first list based on the second list and the third list to determine the block vector candidate list, a first starting position corresponding to the second list and a second starting position corresponding to the third list may be determined first. Then, block vectors in the second list are added into the first list based on the first starting position, and block vectors in the third list are added into the first list based on the second starting position to obtain the block vector candidate list.

It should be noted that in the embodiment of the disclosure, the first starting position may determine the starting position when the block vectors in the second list are added into the first list. The second starting position may determine the starting position when the block vectors in the third list are added into the first list. Here, the first starting position and the second starting position may be the same or different.

Further, in the embodiment of the disclosure, when adding the block vectors in the second list into the first list based on the first starting position, block vectors present in the second list and not present in the first list are added into the first starting position of the first list. When adding the block vector in the third list into the first list based on the second starting position, block vectors present in the third list and not present in the first list are added into the second starting position of the first list.

For example, in some embodiments, it may be indicated that the position with the smallest index in which the T template and the L template can be placed is Pos, or the foremost position is Pos, that is, the first starting position and the second starting position are Pos. Herein, Pos can be calculated based on N and M, such as Pos = N - 1 - M × 2. The foremost positions in which the T template and the L template can be placed into the list may be formulated, respectively.

For example, in some embodiments, assuming that the first candidate template is the TL template, the second candidate template is the T template, the third candidate template is the L template, and the list length of the block vector candidate list is N, that is, the list length of the first list is X, and the list lengths of the second list and the third list are N, on the basis of the first list of the TL template, candidates of the T template and the L template may be placed into the first list, to generate the block vector candidate list. Herein, X T template candidates and X L template candidates with the best template matching costs can be found by a preset search method, and X T template candidates and X L template candidates can respectively be used to construct temporary lists with a length of X, that is, the second list and the third list. To attempt inserting the candidates from the T and L templates into the final block vector candidate list, a duplicate-checking operation can be performed first. If a BV identical to the candidate to be inserted from the second list or the third list already exists in the first list, the candidate to be inserted will not be inserted. If no such identical BV exists in the first list, the candidate at the specified first starting position or second starting position in the first list, along with all subsequent candidates, are shifted backward by one position, and then the candidate to be inserted is placed at the indicated starting position in the first list. Specifically, each time a candidate is inserted into the first list, the specified first starting position or second starting position is moved forward by one position, continuing until either M candidates have been inserted or all X candidates in the temporary list have been checked.

It should be noted that, in the embodiments of the present application, whether the first, second, and third lists are obtained through separate searches or through a simultaneous search, the search method may include performing an initial sparse search using a first search step size, followed by a refinement search using a second search step size.

For example, in some embodiments, for the sparse search in the first step, during the search process, there is no need to exhaustively search every possible BV in sequential order. For example, the usual searching order is from left to right and from top to bottom. Generally speaking, the BV of the entire pixel can be searched sequentially. If the currently searched BV is (x0, y0), then the next one is (x0+1, y0), provided that the boundary of the search range has not been reached. But here a sparse search may be performed first. For example, for the BV of the entire pixel, if the currently searched BV is (x0, y0), then the next one is (x0+3, y0), provided that the boundary of the searching range has not been reached. That is, template matching is performed every fixed number of pixels, or template matching can be performed every fixed step size. The step size here may be a preset value, such as 2, 3, 4, 8, or the like. Certainly, the same processing can be done in the vertical direction. K BVs with the lowest TL template costs are first found. K may be equal to N, or may be greater than or less than N. This procedure may be accomplished by building a list. X' BVs with the lowest T template costs and X' BVs with the lowest L template costs are found. X' may be equal to M, or may be greater than or less than M. This procedure may be accomplished by building a list. That is to say, in this step of the search process, the template matching costs for the TL, T, and L templates are evaluated and sorted simultaneously for each BV, meaning that the three templates share the same sparse search process.

For example, in some embodiments, for the improvement search of the second step, on the basis of the K BVs with the lowest TL template costs, the improvement is made in a small range on the basis of each BV. If the above search interval is 3 pixels, then the improved range here can be set to $3 \times 3$, and the improved BV can be used to construct a block vector candidate list with a length of N. Then, on the basis of X' BVs with the lowest T template costs and L template costs, the improvement is made in a small range on the basis of each BV. If the above search interval is 3 pixels, then the improved range here can be set to $3 \times 3$, and the improved BV can be used to construct a temporary block vector candidate list of the T template and a temporary block vector candidate list of the L template, the length of the temporary block vector candidate list are X. Then, based on the above method, the list (with a length of N) of the TL template, the list (with a length of X) of the T template and the list (with a length of X) of the L template are integrated into the final block vector candidate list.

For example, in some embodiments, N = 15, K = 2N, M = 2, X = 4, X' = 2X.

It should be noted that, in the embodiment of the disclosure, if the fractional-pixel accuracy is supported, the subsequent refinement can be continued to the fractional-pixel BV. For example, a 1/2-pixel search is performed within a range of one pixel to the left, right, top, and bottom around the BV of the entire pixel selected in the second step.

It can be understood that in the embodiment of the disclosure, the common sparse search process does not significantly increase the complexity of the search, and the respective improved search ranges of the TL template, the T template, and the L template can be found using a wide range sparse search. The improvement search can be tailored to different templates, making it more targeted.

At the operation 103, a block vector corresponding to the current block is determined based on the block vector candidate list corresponding to the current block, and a prediction value of the current block is determined based on the block vector.

In the embodiment of the disclosure, after the block vector candidate list corresponding to the current block is determined based on the first template, the block vector corresponding to the current block may be further determined based on the block vector candidate list corresponding to the current block, and the prediction value of the current block may be further determined based on the block vector.

It should be noted that, in the embodiment of the disclosure, if the value of the template matching prediction identification information is the first value, that is, it is determined that the prediction processing is performed on the current block using the prediction method of Intra TMP based on the value of the template matching prediction identification information, the bitstream may be further decoded to determine index identification information corresponding to the current block. Next, a candidate index corresponding to the current block may be determined based on the index identification information.

It can be understood that in the embodiment of the disclosure, the index identification information corresponding to the current block may determine the index of the block vector corresponding to the current block from the block vector candidate list, that is, the candidate index corresponding to the current block may be determined by the index identification information.

It should be noted that in the embodiments of the disclosure, if the list lengths of the block vector candidate lists generated using different candidate templates are different, it is required to parse syntax the element indicating the template, such as the first template indication information intra_tmp_alternative_template_flag and/or the second template indication information intra_tmp_template_idx, and then parse the candidate index intra_tmp_idx.

Further, in the embodiment of the disclosure, if the corresponding list length, binarization method and inverse binarization method, context model, or the like are the same regardless of which candidate template is used as the first template of the current block, it may be considered that the candidate index intra_tmp_idx does not depend on the syntax elements indicating the template, such as the first template indication information intra_tmp_alternative_template_flag and/or the second template indication information intra_tmp_template_idx, thus the syntax elements indicating the template (such as intra_tmp_alternative_template_flag and/or intra_tmp_template_idx) and the intra_tmp_idx can be parsed in any order.

Further, in the embodiment of the disclosure, if different candidate templates are selected as the first template of the current block, and at least one of the corresponding list length, binarization method and inverse binarization method, context model, or the like may be different, and then it may be considered that the candidate index intra_tmp_idx depends on the syntax elements indicating the template, such as the first template indication information intra_tmp_alternative_template_flag and/or the second template indication information intra_tmp_template_idx, thus it is required to first parse the syntax elements indicating the template (such as intra_tmp_alternative_template_flag and/or intra_tmp_template_idx), and then parse the intra_tmp_idx.

Further, in the embodiment of the disclosure, if the value of the first template indication information is the third value, the index identification information is determined based on a first context. If the value of the first template indication information is the fourth value, the index identification information is determined based on a second context.

It can be understood that in the embodiment of the disclosure, after the first template indication information intra_tmp_alternative_template_flag is parsed, a context used in the encoding and decoding process may be determined based on the first template indication information, that is, a context model (a CABAC context model) in the encoding and decoding process may be determined using the first template indication information. Certainly, the second template indication information may also be used to determine the context model in the encoding and decoding process, which is not limited in the disclosure.

It should be noted that, in the embodiment of the disclosure, different context models (CABAC context models) may be set when performing the binarization or inverse binarization encoding and decoding, That is, the probabilities of the binary symbols based on context encoding for the two cases are cumulatively counted and updated separately. That is, the encoder or decoder may select a set of context models based on the value of the syntax element indicating the template such as the first template indication information intra_tmp_alternative_template_flag and/or the second template indication information intra_tmp_template_idx.

For example, in some embodiments, one set of context models/one context model contextModel0 is selected if the value of the intra_tmp_alternative_template_flag is 0, and one set of context models/one context model contextModel1 is selected if the value of intra_tmp_alternative_template_flag is 1.

Further, in the embodiment of the disclosure, in the procedure of determining the candidate index corresponding to the current block based on the index identification information, if the value of the first template indication information is a third value, the candidate index is determined based on the index identification information and a first inverse binarization strategy. If the value of the first template indication information is a fourth value, the candidate index is determined based on the index identification information and a second inverse binarization strategy.

It can be understood that in the embodiment of the disclosure, after the first template indication information intra_tmp_alternative_template_flag is parsed, the inverse binarization strategy used in the process of determining the candidate index can be determined based on the first template indication information, that is, the inverse binarization method is determined using the first template indication information. Certainly, the second template indication information may also be used to determine the binarization method (at the encoding end) or the inverse binarization method (at the decoding end) in the encoding and decoding process, which is not limited in the disclosure.

It should be noted that in the embodiment of the disclosure, the binarization and inverse binarization methods of the candidate index intra_tmp_idx may be different based on the difference in the value of the template indication information. Even if the block vector candidate lists generated using different candidate templates have the same list length, they may follow different probability distribution rules, thus different binarization and inverse binarization methods may be set.

For example, in some embodiments, in one scenario (for example, using the TL template), the probability of selecting the first few candidates with very small indices is significantly higher than that of other candidates with larger indices. Therefore, the binarization and inverse binarization methods allocate shorter binary symbols to the first few candidates with very small indices, and longer binary symbols to other candidates with larger indices.

For example, in some embodiments, in another scenario (for example, using the T template or L template), the probabilities of selecting the first few candidates with very small indices are similar to those of other candidates with larger indices. Therefore, the binarization and inverse binarization methods allocate binary symbols with lengths that differ less significantly, or even use equal binary symbol lengths, for these candidates.

That is, in the embodiment of the disclosure, the encoder or decoder selects a set of binarization or inverse binarization methods based on the value of the syntax element indicating the template, such as intra_tmp_alternative_template_flag and/or intra_tmp_template_idx.

For example, in some embodiments, if the value of the first template indication information intra_tmp_alternative_template_flag is 0, a first binarization and inverse binarization method is selected, which is illustrated in Table 3.

Table 3

| Symbol | BinIdx0 | BinIdx1 | BinIdx2 |
|--------|---------|---------|---------|
| 0 | 1 | | |
| 1 | 0 | 1 | |
| 2 | 0 | 0 | 1 |
| 3 | 0 | 0 | 0 |

For example, in some embodiments, if the value of the first template indication information intra_tmp_alternative_template_flag is 1, a second binarization and inverse binarization method is selected, which is illustrated in Table 4.

Table 4

| Symbol | BinIdx0 | BinIdx1 |
|--------|---------|---------|
| 0 | 0 | 0 |
| 1 | 0 | 1 |
| 2 | 1 | 0 |
| 3 | 1 | 1 |

The Symbol in Tables 3 and 4 corresponds to the candidate index intra_tmp_idx.

It should be noted that, in the embodiment of the disclosure, at the decoding end, an inverse binarization method is used by the decoder, and based on the correspondence table between the Symbol and the binary symbol, if a certain binary symbol is encoded using the context mode, a context model is selected, and the bitstream is read to determine the value of the Symbol. At the encoding end, the encoder uses a binarization method, based on the correspondence table between the Symbol and binary symbol, if a certain binary symbol is encoded using the context mode, a context model is selected, and the content to be written into the bitstream is determined based on the value of the Symbol. Here, the Symbol corresponds to the intra_tmp_idx.

Further, in the embodiment of the disclosure, when performing the binarization or inversion binarization of intra_tmp_idx, for the case of using only the TL template, or for any scenario combining multiple candidates and multiple templates, if the list length N of the block vector candidate list is relatively large, then the earlier candidates have higher probabilities, the later ones have lower probabilities, and the probabilities of the later candidates become increasingly similar. Therefore, shorter codewords can be allocated to the earlier candidates and longer codewords to the later ones, with some of the later candidates sharing the same codeword length.

For example, in some embodiments, it is assumed that the list length N of the block vector candidate list is 15, codewords with the same length are used for the indices 3 to 6, codewords with the same length are used for the indices 7 to 14, and specific binarization and inverse binarization are illustrated in Table 5.

Table 5

| intra_tmp_idx | binary symbol | | | | |
|---------------|---|---|---|---|---|
| 0 | 1 | 1 | | | |
| 1 | 1 | 0 | 0 | | |
| 2 | 1 | 0 | 1 | | |
| 3~6 | 0 | x | x | x | |
| 7~14 | 0 | x | x | x | x |
| BinIdx | 0 | 1 | 2 | 3 | 4 |

Here, the x in the table can be obtained using truncated binary. The context model-based coding method may be used for the binary symbol whose BinIdx is 0, and when the value of the binary symbol whose BinIdx is 0 is 1 (corresponding to the above case where the intra_tmp_idx is 0, 1, 2), the context model-based coding method may be used for the binary symbol whose BinIdx is 1. A bypass coding method may be used for the binary symbol represented by x.

For example, in some embodiments, it is assumed that the list length N of the block vector candidate list is 19, codewords with the same length are used for the indices 3 to 18, and the specific binarization and inverse binarization are illustrated in Table 6.

Table 6

| intra_tmp_idx | binary symbol | | | | |
|---|---|---|---|---|---|
| 0 | 1 | 1 | | | |
| 1 | 1 | 0 | 0 | | |
| 2 | 1 | 0 | 1 | | |
| 3~18 | 0 | x | x | x | x |
| BinIdx | 0 | 1 | 2 | 3 | 4 |

Here, the x in the table can be obtained using truncated binary. The context model-based coding method may be used for the binary symbol whose BinIdx is 0, and when the value of the binary symbol whose BinIdx is 0 is 1 (corresponding to the above case where the intra_tmp_idx is 0, 1, 2), the context model-based coding method may be used for the binary symbol whose BinIdx is 1. A bypass coding method may be used for the binary symbol represented by x.

Accordingly, in the embodiment of the disclosure, the encoder converts a value of the syntax element (such as the intra_tmp_idx) into a corresponding binary symbol (bin), and then converts the binary symbol into binary bits (bits) using an entropy coding engine. The entropy coding (decoding) engine of the decoder converts binary bits (bits) into a binary symbol, and then converts the binary symbol (bin) into a value of the syntax element.

It should be noted that, in the embodiment of the disclosure, the context model-based coding method and the bypass coding method are two modes of the entropy coding engine. When encoding, the entropy coding engine converts the binary symbol into binary bits in the bitstream. When decoding, the entropy coding engine converts the binary bits in the bitstream into the binary symbol. The context model-based coding method can be understood as follows: for a specific value (0 or 1) of a binary symbol of a syntax element, the more frequently it appears in a given context, the more likely the entropy coding engine is to allocate fewer binary bits to represent that binary symbol value, and more binary bits to represent the other binary symbol value. For example, if the value '1' occurs more frequently for a certain binary symbol of a syntax element, then fewer binary bits are used to encode '1', and more binary bits are used to encode '0'. The bypass coding method can be equivalent to using an equal probability model. Therefore, the bypass coding method has higher throughput than the context model-based mode. However, the context model-based mode theoretically has higher compression efficiency.

For example, in some embodiments, assuming that the list length N of the block vector candidate list is 19, and the specific binarization and inverse binarization are illustrated in Table 7.

Table 7

| intra_tmp_idx | binary symbol | | | | |
|---|---|---|---|---|---|
| 0 | 1 | 1 | | | |
| 1 | 1 | 0 | 0 | | |
| 2 | 1 | 0 | 1 | | |
| 3~6 | 0 | 1 | 1 | x | x |
| 7~10 | 0 | 1 | 0 | y | y |
| 11~18 | 0 | 0 | z | z | z |
| BinIdx | 0 | 1 | 2 | 3 | 4 |

Here, x, y, z in the same row of the table may be obtained by using the truncated binary, respectively. That is, the last two binary symbols in the indices 3 to 6 are obtained using truncated binary coding, the last two binary symbols in the indices 7 to 10 are obtained by the truncated binary, and the last three binary symbols in the indices 11 to 18 are obtained by the truncated binary. Here, the context model-based coding method may be used for the binary symbol whose BinIdx is 0.

It can be understood that in the embodiment of the disclosure, when the value of the binary symbol whose BinIdx is 0 is 1 (corresponding to the above case where the intra_tmp_idx is 0, 1, or 2), the context model-based coding method may be used for the binary symbol whose BinIdx is 1.

It can be understood that in the embodiment of the disclosure, when the value of the binary symbol whose BinIdx is 0 is 0 (corresponding to the above case where the intra_tmp_idx is greater than 2), the context model-based coding method and the context model different from the case where the intra_tmp_idx is 0, 1, or 2 may be used for the binary symbol whose BinIdx is 1.

It can be understood that in the embodiment of the disclosure, when the value of the binary symbol whose BinIdx is 0 is 0, and the binary symbol whose BinIdx is 1 is 1 (corresponding to the above case where the intra_tmp_idx is 3 to 10), the context model-based coding method may be used for the binary symbol whose BinIdx is 2.

It can be understood that in the embodiment of the disclosure, the bypass coding method may be used for the binary symbols represented by x, y, and z described above.

It should be noted that in the embodiment of the disclosure, the above values of 0 and 1 are examples, and it is also acceptable if the values of 0 and 1 are reversed but the result is equivalent; equivalently, the order of the binary symbols obtained from truncated binary can be swapped.

Further, in the embodiment of the disclosure, after the candidate index corresponding to the current block is determined, when the block vector corresponding to the current block is determined based on the block vector candidate list corresponding to the current block, the block vector corresponding to the current block may be determined from the block vector candidate list based on the candidate index.

That is to say, in the embodiment of the disclosure, the block vector indicated by the candidate index and corresponding to the current block in the block vector candidate list may be determined as the block vector corresponding to the current block.

Further, in the embodiment of the disclosure, after determining the block vector corresponding to the current block based on the block vector candidate list corresponding to the current block, and determining the prediction value of the current block based on the block vector, a reconstructed value of the current block may be further determined according to the prediction value of the current block.

It should be noted that in the embodiment of the disclosure, the bitstream may be decoded first to determine the prediction difference value (residual) corresponding to the current block. Then, the reconstructed value of the current block may be further determined based on the prediction difference value and the prediction value.

In summary, according to the method for decoding proposed in the operations 101 to 103, the Intra TMP multi-candidate realized by constructing the block vector candidate list corresponding to the current block can provide multiple choices, and the first template corresponding to the current block that may include one or more candidate templates can provide multiple choices at the template level, and the combination of the two can improve the compression efficiency to obtain better compression performance.

That is to say, the method for encoding and decoding proposed in the embodiment of the disclosure can combine the Intra TMP multi-candidate and the multi-selection at the template level. In the process of combining the two, one implementation method is to indicate which template to use in the bitstream, and the other implementation is to use different templates to construct the same block vector candidate list, instead of indicating which template to use in the bitstream.

An embodiment of the disclosure provides a method for decoding, the decoder determines a first template corresponding to a current block, where the first template includes one or more candidate templates in a template set corresponding to the current block; determines a block vector candidate list corresponding to the current block based on the first template; and determines a block vector corresponding to the current block based on the block vector candidate list corresponding to the current block, and determines a prediction value of the current block based on the block vector. Thus, in the embodiments of the disclosure, an Intra TMP prediction method that combines multiple candidates with multiple templates is proposed, where a block vector candidate list including at least one block vector of the current block may be selected and determined, and a first template including at least one candidate template may be selected to construct the block vector candidate list, thereby realizing the combination of Intra TMP multi-candidate and multi-selection at the template level. That is to say, the method for encoding and decoding proposed in the embodiments of the disclosure, on one hand, realizes the Intra TMP multi-candidate by constructing the block vector candidate list corresponding to the current block; on the other hand, it provides multiple selections at the template level by using the first template corresponding to the current block that includes one or more candidate templates, thereby improving the compression efficiency and enhancing the encoding and decoding performance.

An embodiment of the disclosure proposes a method for encoding, which is applied to an encoder. FIG. 21 is a flowchart of the method for encoding proposed in the embodiment of the disclosure. As illustrated in FIG. 21, a method in which the encoder performs the encoding processing may include the following operations 201 to 203.

At the operation 201: a first template corresponding to a current block is determined, where the first template includes one or more candidate templates in a template set corresponding to the current block.

In an embodiment of the disclosure, the first template corresponding to the current block may be determined first.

It should be noted that the method for encoding according to the embodiment of the disclosure is applied to an

EP 4 694 123 A1

encoder. Further, the method for encoding may include an intra prediction method, more specifically, a colour component prediction method. Here, the video picture may be divided into multiple coding blocks, and each coding block may include a first colour component, a second colour component, and a third colour component. The current block in the embodiment of the disclosure refers to a coding block currently to be intra-predicted in the video picture.

Here, when the first colour component is required to be predicted, the component to be predicted is the first colour component. When the second colour component is required to be predicted, the component to be predicted is the second colour component. When the third colour component is required to be predicted, the component to be predicted is the third colour component. In addition, assuming that prediction for the first colour component is performed in the current block, and the first colour component is a luma component, that is, the component to be predicted is a luma component, the current block may also be referred to as a luma block. Alternatively, assuming that prediction for the second colour component is performed in the current block, and the second colour component is a chroma component, that is, the component to be predicted is a chroma component, the current block may also be referred to as a chroma block.

It is noted that, in the embodiment of the disclosure, the first template corresponding to the current block may include an arbitrary number of candidate templates in the template set corresponding to the current block. The candidate template corresponding to the current block includes multiple candidate templates with different template types.

It can be understood that, in the embodiment of the disclosure, the template set corresponding to the current block may first be constructed based on different template types, and then an arbitrary number of candidate templates may be selected from the template set as the first template corresponding to the current block.

For example, in the embodiment of the disclosure, as illustrated in FIG. 19, when the top-left reference samples, the top reference samples and the left reference samples are all available, the template shape is illustrated in (a); when only the left reference samples are available, the template shape is illustrated in (b); when only the top reference samples are available, the template shape is illustrated in (c); when only the left and top-left reference samples are available, the template shape is illustrated in (d); when only the left reference samples and the bottom-left reference samples are available, the template shape is illustrated in (e); when only the top reference samples and the top-right reference samples are available, the template shape is illustrated in (f).

Further, in the embodiment of the disclosure, when constructing the template set corresponding to the current block based on the template type, the template reference samples of the current block may be determined based on the template types and the template sizes corresponding to the template types, and then the candidate templates of the current block may be determined based on the template reference samples, and finally the construction of the template set is completed.

For example, in the embodiment of the disclosure, as illustrated in FIG. 20, for the corresponding four different template types, the finally generated candidate templates of the current block may also include four types, such as candidate template 1 (TL template), candidate template 2 (TL template), candidate template 3 (T template), and candidate template 4 (L template).

Further, in the embodiment of the disclosure, the first template corresponding to the current block is determined based on the candidate templates in the template set, where the first template may include an arbitrary number of candidate templates.

It is noted that, in the embodiment of the disclosure, the first candidate template in the template set may be a template including the left neighboring reconstructed samples and the top neighboring reconstructed samples of the current block, for example, the TL template. The second candidate template in the template set may be a template including the top neighboring reconstructed samples of the current block, such as the T template. The third candidate template in the template set may be a template including the left neighboring reconstructed samples of the current block, such as the L template.

For example, in some embodiments, the first template corresponding to the current block may be the first candidate template in the template set corresponding to the current block, such as the candidate template 1.

For example, in some embodiments, the first template corresponding to the current block may include the first candidate template and the second candidate template in the template set corresponding to the current block, such as the candidate template 1 and the candidate template 3.

For example, in some embodiments, the first template corresponding to the current block may include the first candidate template, the second candidate template, and the third candidate template in the template set corresponding to the current block, such as the candidate template 1, the candidate template 3, and the candidate template 4.

Further, in the embodiment of the disclosure, template matching prediction identification information corresponding to the current block is determined. In a case that a value of the template matching prediction identification information is a first value, determination process of the first template is performed, that is, the process of determining the first template proposed in the operation 201 may be performed.

It can be understood that, in the embodiment of the disclosure, the template matching prediction identification information may be used to determine whether the template matching prediction is used for the current block, that is, the template matching prediction identification information may indicate whether the current block is subjected to prediction processing by Intra TMP.

For example, in some embodiments, a variable serving as the template matching prediction identification information can be determined, thereby enabling the determination of the template matching prediction identification information based on the value of this variable.

It is noted that, in the disclosure, the value of the template matching prediction identification information may be a first value or a second value. Specifically, when the value of the template matching prediction identification information is different, the method for determining the prediction value of the current block is also different. Specifically, based on the value of the template matching prediction identification information, when determining the prediction value of the current block, the Intra TMP may be used or may be not used.

For example, in some embodiments, the template match prediction identification information may be understood as a flag bit indicating whether the Intra TMP is performed. If the value of the template matching prediction identification information is the first value, the prediction value of the current block may be determined by using the Intra TMP. If the value of the template matching prediction identification information is the second value, the Intra TMP may be not used to determine the prediction value of the current block.

For example, in some embodiments, the first value may be set to 1 and the second value may be set to 0. Alternatively, the first value may be set to true and the second value may be set to false. The disclosure makes no limitations whatsoever.

For example, in some embodiments, the flag intra_tmp_flag may be used to represent the template match prediction identification information, that is, the intra_tmp_flag is used as the flag of the Intra TMP.

For example, in some embodiments, if the value of the intra_tmp_flag is 1, it may indicate that the Intra TMP is selected to determine the prediction value of the current block; if the value of the intra_tmp_flag is 0, it may indicate that the Intra TMP is not selected to determine the prediction value of the current block.

It can be understood that, in the embodiment of the disclosure, when the value of the template matching prediction identification information is the first value, that is, after it is determined that the Intra TMP is used to determine the prediction value of the current block based on the value of the template matching prediction identification information, the determination process of the first template corresponding to the current block may be performed.

Further, in the embodiment of the disclosure, when determining the first template corresponding to the current block, the first template indication information corresponding to the current block is determined. In a case that a value of the first template indication information is a third value, it is determined that the first template is a first candidate template.

It is noted that, in the embodiment of the disclosure, the first candidate template may be one candidate template in the template set corresponding to the current block. For example, the first candidate template may be the TL template in the template set.

It can be understood that, in the embodiment of the disclosure, the first template indication information may be used to determine whether the first candidate template is used for the current block, that is, the first template indication information may indicate whether the current block uses the first candidate template to perform prediction processing of Intra TMP for the current block.

For example, in some embodiments, a variable serving as the first template indication information can be determined, thereby enabling the determination of the first template indication information based on the value of this variable.

It is noted that, in the disclosure, the value of the first template indication information may be a third value or a fourth value. Specifically, based on the value of the first template indication information, when performing the Intra TMP, it may be selected to use the first candidate template, or it may be selected to use another template instead of using the first candidate template, for example, the template other than the first candidate template in the template set.

For example, in some embodiments, the third value may be set to 0 and the fourth value to 1. Alternatively, the third value may be set to true and the fourth value may be set to false. The disclosure makes no limitations whatsoever.

For example, in some embodiments, the flag intra_tmp_alternative_template_flag may be used to represent the first template indication information. For example, if the value of intra_tmp_alternative_template_flag is 0, it may indicate that the first candidate template is determined as the first template corresponding to the current block; if the value of intra_tmp_alternative_template_flag is 1, it may indicate that the first candidate template is not determined as the first template corresponding to the current block, but another template is then selected as the first template corresponding to the current block.

Accordingly, in the embodiment of the disclosure, after the first template indication information corresponding to the current block is determined, if the value of the first template indication information is the fourth value, it may be determined that the first template is not the first candidate template, thus second template indication information corresponding to the current block needs to be further determined.

Further, in the embodiment of the disclosure, when determining the first template corresponding to the current block, the second template indication information corresponding to the current block is determined. In a case that a value of the second template indication information is a fifth value, it may be determined that the first template is a second candidate template. In a case that the value of the second template indication information is the sixth value, it may be determined that the first template is a third candidate template.

In the embodiment of the disclosure, the second candidate template and the third candidate template may be one candidate template in the template set corresponding to the current block, respectively. For example, the second candidate template may be the T template in the template set, and the third candidate template may be the L template in the template set.

It can be understood that, in the embodiment of the disclosure, the second template indication information may be used to determine whether the second candidate template and/or the third candidate template are used for the current block, that is, the second template indication information may indicate whether the second candidate template and/or the third candidate template is used to perform prediction processing of Intra TMP for the current block.

For example, in some embodiments, a variable serving as the second template indication information can be determined, thereby enabling the determination of the second template indication information based on the value of this variable.

It is noted that, in the disclosure, the value of the second template indication information may be a fifth value or a sixth value. Specifically, based on the value of the second template indication information, the second candidate template or the third candidate template may be used when performing the Intra TMP.

For example, in some embodiments, the fifth value may be set to 0 and the sixth value to 1. Alternatively, the fifth value may be set to true and the sixth value may be set to false. The disclosure makes no limitations whatsoever.

For example, in some embodiments, a flag intra_tmp_template_idx may be used to represent the second template indication information. For example, if the value of the intra_tmp_template_idx is 0, it may indicate that the second candidate template is determined as the first template corresponding to the current block. If the value of the intra_tmp_template_idx is 1, it may indicate that the third candidate template is determined as the first template corresponding to the current block.

That is to say, in the embodiments of the disclosure, it is possible to indicate in the bitstream which candidate template in the template set is the first template corresponding to the current block. For example, the first template is indicated by using the first template indication information and the second template indication information.

For example, in some embodiments, taking three candidate templates including the TL template, the T template, and the L template as examples, the first candidate template is the TL template, the second candidate template is the T template, and the third candidate template is the L template. The template matching prediction identification information intra_tmp_flag indicates whether the Intra TMP is used for the current block, if the Intra TMP is used for the current block, the intra_tmp_alternative_template_flag is determined, the first template indication information intra_tmp_alternative_template_flag indicates whether another template is used for the current block. If the value of the intra_tmp_alternative_template_flag is 0, it is indicated that the TL template is used for the current block. If the value of the intra_tmp_alternative_template_flag is 1, the intra_tmp_template_idx is determined, and the second template indication information intra_tmp_template_idx indicates that the T template or the L template is used for the current block. For example, if the value of the intra_tmp_template_idx is 0, it is indicated that the T template is used for the current block, if the value of the intra_tmp_template_idx is 1, it is indicated that the L template is used for the current block.

Further, in the embodiment of the disclosure, when determining the first template corresponding to the current block, third template indication information corresponding to the current block is determined. In a case that the value of the third template indication information is a seventh value, it is determined that the first template is the first candidate template. In a case that the value of the third template indication information is an eighth value, it is determined that the first template is the second candidate template. In a case that the value of the third template indication information is a ninth value, it is determined that the first template is the third candidate template.

It is noted that in the embodiment of the disclosure, the first candidate template, the second candidate template, and the third candidate template may be one candidate template in the template set corresponding to the current block, respectively. For example, the first candidate template may be the TL template in the template set, the second candidate template may be the T template in the template set, and the third candidate template may be the L template in the template set.

It can be understood that, in the embodiment of the disclosure, the third template indication information may be used to determine whether the first candidate template and/or the second candidate template and/or the third candidate template are used for the current block, that is, the third template indication information may indicate whether the first candidate template and/or the second candidate template and/or the third candidate template are used to perform prediction processing of the Intra TMP for the current block.

For example, in some embodiments, a variable serving as the third template indication information can be determined, thereby enabling the determination of the third template indication information based on the value of this variable.

It is noted that in the disclosure, the value of the third template indication information may be a seventh value, an eighth value, or a ninth value. Specifically, based on the value of the third template indication information, the first candidate template, the second candidate template or the third candidate template may be selected to be used when performing the Intra TMP.

For example, in some embodiments, the seventh value may be 0, the eighth value may be 1, and the ninth value may be 2, which are not limited in the disclosure.

For example, in some embodiments, the flag intra_tmp_template_idx may be used to represent the third template indication information. For example, if the value of the intra_tmp_template_idx is 0, it may indicate that the first candidate template is determined as the first template corresponding to the current block. If the value of the intra_tmp_template_idx is 1, it may indicate that the second candidate template is determined as the first template corresponding to the current block. If the value of the intra_tmp_template_idx is 2, it may indicate that the third candidate template is determined as the first template corresponding to the current block.

That is to say, in the embodiments of the disclosure, it is possible to indicate in the bitstream which candidate template in the template set is the first template corresponding to the current block. For example, the first template is indicated by using the third template indication information.

For example, in some embodiments, the first template indication information intra_tmp_alternative_template_flag and the second template indication information intra_tmp_template_idx may be merged into the same syntax element intra_tmp_template_idx, that is, the third template indication information.

For example, in some embodiments, three candidate templates including the TL template, the T template, and the L template are taken as examples, the first candidate template is the TL template, the second candidate template is the T template, and the third candidate template is the L template. The template matching prediction identification information intra_tmp_flag indicates whether the Intra TMP is used for the current block, if the Intra TMP is used for the current block, the intra_tmp_template_idx is determined, the third template indication information intra_tmp_template_idx indicates that the TL template, the T template, or the L template is used for the current block, if the value of the intra_tmp_template_idx is 0, it is indicated that the TL template is used for the current block. If the value of the intra_tmp_template_idx is 1, it is indicated that the T template is used for the current block. If the value of the intra_tmp_template_idx is 2, it is indicated that the L template is used for the current block.

Further, in the embodiment of the disclosure, when determining the first template corresponding to the current block, a candidate index corresponding to the current block is determined. In a case that a value of the candidate index is less than or equal to a preset threshold, it is determined that the first template is a first candidate template.

Accordingly, in the embodiment of the disclosure, after decoding the bitstream to determine the candidate index corresponding to the current block, if the value of the candidate index is greater than the preset threshold, the third template indication information corresponding to the current block is determined. If the value of the third template indication information is a seventh value, it is determined that the first template is the first candidate template. If the value of the third template indication information is an eighth value, it is determined that the first template is the second candidate template. If the value of the third template indication information is the ninth value, it is determined that the first template is the third candidate template.

It is noted that, in the embodiment of the disclosure, the preset threshold may be used to determine whether to directly use the first candidate template. Herein, if the value of the candidate index corresponding to the current block is greater than (or greater than or equal to) the preset threshold, the third template indication information is selected to continue to be used to determine the first template to be used. If the value of the candidate index corresponding to the current block is less than or equal to (or less than) the preset threshold, the first candidate template may be directly determined as the first template corresponding to the current block.

It can be understood that, in the embodiment of the disclosure, the candidate index corresponding to the current block can be determined, and whether to select the first candidate template in the template set as the first template is determined by combining the candidate index with a preset threshold. This approach effectively gives the first candidate template a higher priority over other candidate templates, i.e., prioritizing the determination of whether to use the first candidate template.

It should be understood that, since the TL template covers a larger neighbouring area, and in most cases the texture is continuous from both the left and top sides, the TL template generally has greater reference value compared to the individual T template or the individual L template. Therefore, the TL template is selected in most cases, while the individual T and L templates are more often used as supplementary options. Based on this distribution pattern, the TL template can be allocated a higher priority compared to the T and L templates.

That is to say, in the embodiment of the disclosure, the candidate index of the current block may be used to indirectly determine whether to use a TL template having the higher priority, and in this case, it may be indicated in the bitstream which candidate template in the template set is the first template corresponding to the current block. For example, the first template is indicated by using the third template indication information.

For example, in some embodiments, three candidate templates including the TL template, the T template, and the L template are taken as examples, the first candidate template is the TL template, the second candidate template is the T template, and the third candidate template is the L template. The template matching prediction identification information intra_tmp_flag indicates whether the Intra TMP is used for the current block, and if the Intra TMP is used for the current block, the intra_tmp_idx is first determined and then the intra_tmp_template_idx is parsed. Whether to parse the intra_tmp_template_idx depends on the value of the intra_tmp_idx. If the value of the intra_tmp_idx is less than or equal to (or less than) the preset threshold THR, the TL template is used by default, otherwise, that is, the value of the intra_tmp_idx is greater than (or greater than or equal to) the preset threshold THR, it is required to parse the intra_tmp_template_idx to determine which template is used for the current block. The third template indication information intra_tmp_template_idx indicates that a TL template, a T template, or an L template is used for the current block, and if the value of the intra_tmp_template_idx is 0, it is indicated that the TL template is used for the current block, if the value of intra_tmp_template_idx is 1, it is indicated that the T template is used for the current block, and if the value of intra_tmp_template_idx is 2, it is indicated that the L template is used for the current block.

As can be seen, in the embodiment of the disclosure, by using the candidate index in combination with the preset threshold to determine whether the TL template in the template set is to be used, a few candidates with smaller indices are not required to distinguish which specific template to use, but using the TL template by default. This reduces unnecessary overhead, as the TL template is typically selected for these candidates in most cases. It can also be considered that the indices of candidates for the T template and the L template do not start from 0, but start from the THR, which is equivalent to allocating a longer binary symbol string to the T template and the L template.

It should be noted that, in the embodiment of the disclosure, it is possible to indicate in the bitstream which one or more candidate templates in the template set is/are the first template corresponding to the current block. For example, the first template is indicated by using the first template indication information and/or the second template indication information and/or the third template indication information. Certainly, it is also possible to select not to indicate in the bitstream which candidate template(s) to use, but instead directly construct the block vector candidate list for the current block based on multiple candidate templates in the template set.

Further, in the embodiment of the disclosure, the first template corresponding to the current block may include multiple candidate templates in the template set. For example, the first template may include three candidate templates: the first candidate template (such as the TL template), the second candidate template (such as the T template), and the third candidate template (such as the L template).

Accordingly, in the embodiment of the disclosure, the block vector candidate list may be constructed directly using multiple possible candidate templates, where each block vector in the list may be obtained by template matching using one of the TL template, the L template, or the T template.

For example, in some embodiments, if it is not indicated in the bitstream which candidate template or templates to use, the intra_tmp_flag is the flag of the Intra TMP, and if the intra_tmp_flag is true, it is continued to determine the intra_tmp_idx, which indicates the candidate index.

At the operation 202, a block vector candidate list corresponding to the current block is determined based on the first template.

In the embodiment of the disclosure, after the first template corresponding to the current block is determined, the block vector candidate list corresponding to the current block may be further determined based on the first template.

It is noted that in the embodiment of the disclosure, the block vector candidate list corresponding to the current block may include at least one block vector obtained after searching based on the first template corresponding to the current block.

Further, in the embodiment of the disclosure, after the first template corresponding to the current block is determined, a search parameter corresponding to the first template may be selected to be determined based on the first template.

It can be understood that in the embodiment of the disclosure, the search parameter includes at least one of: a search range, a search order, or a list length. Herein, the search range is used to determine the range of a search area in which the search is performed, the search order is used to determine the sequence of the horizontal search and the vertical search for performing the search, and the list length is used to determine the length of the finally generated block vector candidate list.

That is to say, in the embodiment of the disclosure, in the procedure of constructing the block vector candidate list based on the selected first template, when constructing the list based on different templates, the search method used (including the search range, the search order, or the like) and the list length may be the same or different.

For example, in some embodiments, if the determined first template is the first candidate template, that is, in a case where it is determined to use the TL template, the list length of the block vector candidate list is set to 15. If the determined first template is the second candidate template or the third candidate template, that is, in the case where it is determined to use the T template or the L template, the list length of the block vector candidate list is set to 8.

For example, in some embodiments, if the determined first template is the second candidate template, that is, in a case where it is determined to use the T template, the list length of the block vector candidate list is set to 8. If the determined first template is the third candidate template, that is, in the case where it is determined that the L template is used, the list length of the block vector candidate list is set to 4.

Further, in the embodiment of the disclosure, after the search parameter corresponding to the first template is determined, the search may be further performed based on the search parameter and the first template, and then the block vector candidate list corresponding to the current block may be determined.

That is to say, in the embodiment of the disclosure, in the procedure of determining the block vector candidate list corresponding to the current block based on the first template, a reference may be made to the first reference template. Specifically, the search parameter determined by the first template may be used in the procedure of performing the search.

Further, in the embodiment of the disclosure, the search may be performed based on the search parameter corresponding to the current block and the first template, to finally determine the block vector candidate list. Specifically, the block vector candidate list corresponding to the current block is finally determined by performing the search based on the search parameter, such as the search range, the search order, and the list length, corresponding to the current block.

Further, in the embodiment of the disclosure, when determining the block vector candidate list corresponding to the current block based on the first template, the preset search area corresponding to the first template may be determined first. Then, the search may be performed in the preset search area to determine the block vector candidate list corresponding to the current block.

It should be noted that, in the embodiment of the disclosure, the preset search area is a reconstructed portion in the current picture, and is limited by the size of the search range. The preset search area here is actually a set of all search points. Since the shape of the area is usually not represented by a single rectangular area, in a specific implementation, the search may also be performed in multiple rectangular areas, and then the search results for different area can be synthesized to obtain the final best matching block and the best block vector.

Further, in the embodiment of the disclosure, when searching in the preset search area to determine the block vector candidate list corresponding to the current block, the search points in the preset search area may be traversed, and matching costs between matching templates and the first template are determined based on a preset matching criterion, where each of the matching templates corresponds to a respective one of the search points in the preset search area. Then, a block vector candidate list may be determined based on the matching costs.

It should be noted that, in the embodiment of the disclosure, the block vector candidate list corresponding to the current block includes one or more block vectors corresponding to the current block obtained by searching, and one or more candidate templates corresponding to the one or more block vectors.

That is to say, in the embodiment of the disclosure, the number of the block vectors determined by searching may be one or more, for example, if the length of the block vector candidate list is N, N block vectors of the current block may be determined, where N is an integer greater than 0.

Accordingly, in the embodiment of the disclosure, when searching in the preset search area to determine the block vector candidate list corresponding to the current block, the search points in the preset search area may be traversed, and the matching costs between the matching templates and the first template may be determined based on the preset matching criterion, where each of the matching templates corresponds to a respective one of the search points in the preset search area. Finally, N block vectors and N candidate templates corresponding to the N block vectors can be determined based on the matching costs, and a corresponding block vector candidate list can be finally generated.

That is to say, in the embodiment of the disclosure, searching for and determining N block vectors corresponding to N matching templates within a preset search area (i.e., the procedure of searching for and determining the block vectors corresponding to the N matching templates) may include: determining the value of N, which represents the number of the candidate templates; determining the matching template comparison criterion; and recording the N block vectors corresponding to the N selected matching templates (i.e., the N selected candidate templates).

It should be noted that, in the embodiment of the disclosure, the preset matching criterion includes any one of cost functions for measuring the mode, such as Sum of Absolute Difference (SAD), Sum of Absolute Transformed Difference (SATD), Sum of Squared Differences (SSE), Mean Absolute Deviation (MAD), an Mean Absolute Error (MAE), Mean Square Error (MSE), or Normalized Correlation Coefficient (NCC).

Further, in the embodiment of the disclosure, when determining the block vector candidate list corresponding to the current block based on the matching costs (i.e., determining N block vectors and N candidate templates corresponding to the N block vectors (i.e., the list length of the block vector candidate list is N)), N minimum matching costs may be first determined among the matching costs between the matching templates and the first template, where each of the matching templates corresponds to a respective one of the search points in the preset search area. Then, N block vectors and N candidate templates corresponding to N minimum matching costs are determined.

It should be noted that, in the embodiment of the disclosure, when performing a search, a search strategy that may be adopted may include, but is not limited to, a search method based on different search step sizes, for example, a coarse search based on a first search step size and/or a fine search based on a second search step size, where the first search step size is larger than the second search step size.

Further, in the embodiment of the disclosure, initial block vectors and initial matching templates may be determined by traversing the search points in the preset search area based on the first search step size, where each of the initial block vectors corresponds to a respective one of the initial matching templates. Then a first search area is determined based on the initial matching templates, where the first search area is smaller than a preset search area. Finally, the search points in the first search area can be traversed based on the second search step size, to determine the block vectors and the candidate templates, thereby determining the corresponding block vector candidate list, where the first search step size is larger than the second search step size.

It can be seen that in the embodiment of the disclosure, in the procedure of the search, there is no need to exhaustively search every possible BV in sequential order, for example, the usual search order is from left to right and from top to bottom. Generally speaking, the BV of the entire pixel can be searched sequentially. If the currently searched BV is (x0, y0), then the next one is (x0+1, y0), provided that the boundary of the search range has not been reached. In the disclosure, a sparse search may be performed first, such as the BV of the entire pixel. If the currently searched BV is (x0, y0), the next one is (x0+3, y0), provided that the boundary of the search range has not been reached. That is to say, template matching is performed every constant number of pixels, or template matching may be performed every constant step size. The step size here may be a preset value, such as 2, 3, 4, 8, or the like. Certainly, the same processing can be done in the vertical direction. K BVs with the lowest costs are first found. K may be equal to N, or may be greater than or less than N. This procedure may be accomplished by building a list. Then on the basis of the K BVs with the lowest costs, the improvement is made in a small range on the basis of each BV. If the above search interval is 3 pixels, then the improved range here may be set to 3×3, and the improved BV may be used to construct the block vector candidate list with a length of N, thus N candidates of the BVs may be obtained.

For example, in some embodiments, for example, N is set to 3, the first search can be performed based on a preset step size to find a certain number, such as 3, of sorted BVs. Here, the horizontal step size is 3, and the vertical step size is 3, either. Then, a second search is performed on the basis of the sorted three BVs, the search range for the second search is 3×3, and each BV in each 3×3 range participates in the sorting for the block vector candidate list intraTmpCand-List.

It should be noted that, in the embodiment of the disclosure, if the fractional-pixel accuracy is supported, the subsequent refinement can be continued to the fractional-pixel BV. For example, a 1/2-pixel search is performed within a range of one pixel to the left, right, top, and bottom around the BV of the entire pixel selected in the second step.

Note that in the embodiment of the disclosure, if one or some candidate templates to be used is not indicated in the bitstream, it is required to compare the matching costs of different candidate templates in the procedure of directly constructing the block vector candidate list corresponding to the current block based on the multiple candidate templates in the template set. At this time, since the sizes or pixels of different candidate templates are different, it is required to uniformly adjust the matching costs of different candidate templates when comparing the matching costs of different candidate templates.

It can be understood that in the embodiment of the disclosure, in the procedure of adjusting the matching costs of different candidate templates, the corresponding initial cost may be adjusted by using the pixel parameter corresponding to the candidate template, or the template coefficient corresponding to the candidate template may be determined, and then the corresponding initial cost may be adjusted by using the template coefficient.

Further, in the embodiment of the disclosure, in the procedure of constructing the block vector candidate list, the search points in the preset search area may be traversed, and the initial costs between the matching templates and the first template may be determined based on the preset matching criterion, where each of the matching templates corresponds to a respective one of the search points in the preset search area. Then the initial costs are adjusted based on the pixel parameters corresponding to the candidate templates, to determine the matching costs between the matching templates corresponding to the search points in the preset search area and the first template. Finally, the block vector candidate list may be determined based on the matching costs.

That is to say, in the embodiment of the disclosure, if multiple candidate templates, such as the TL template, the L template, and the T template, are directly used to construct the block vector candidate list, each block vector in the block vector candidate list may be obtained by template matching using one of the TL template, the L template, or the T template. In this case, the basic principle for constructing the block vector candidate list is to sort the matching costs of different candidate templates.

It can be understood that, in the embodiment of the disclosure, if the matching costs of several types of different candidate templates are directly compared, the final result is not accurate because the numbers of pixels in different candidate templates are different. Taking the matching cost is SAD as an example, it is unreasonable to directly compare the SAD of different templates. For example, for the same BV, the SAD of the TL template is equal to the SAD of the T template plus the SAD of the L template.

For example, in some embodiments, when comparing the matching costs of different candidate templates, it is possible to choose to adjust the matching costs (initial costs) based on the pixel parameters of the different templates. The pixel parameter may be the number of pixels corresponding to the candidate template. For example, when pixel parameters are used to adjust the matching costs (initial costs), the initial cost (such as SAD) corresponding to one candidate template can be divided by the number (pixel parameters) of pixels corresponding to the candidate template, to obtain the absolute value of the average difference (adjusted matching cost). This division result can be called the average absolute difference (AAD), that is, the finally determined matching cost may be the corresponding AAD.

It can be understood that, in the embodiment of the disclosure, after the initial costs are adjusted based on the pixel parameters of different templates to obtain the matching costs (AADs) corresponding to different candidate templates, the influencing factor that the numbers of pixels of different candidate templates are different can be removed, thus the matching costs of different candidate templates can be compared to finally generate the corresponding block vector candidate list.

Further, in the embodiment of the disclosure, if the first template includes multiple candidate templates in the template set, a template coefficient corresponding to each of the candidate templates may be firstly determined.

It should be noted that when determining the template coefficient corresponding to each of the candidate templates, the template coefficient may be determined based on a size parameter corresponding to the candidate template, the template coefficient may be determined based on a pixel parameter corresponding to the candidate template, or the template coefficients of different candidate templates may be set based on a preset value.

It can be understood that in the embodiment of the disclosure, different candidate templates may correspond to different template coefficients, and the matching costs of different templates are uniformly adjusted by using the template coefficients corresponding to different candidate templates, thus a more reasonable and accurate block vector candidate list can be obtained while sorting the matching costs.

Further, in the embodiment of the disclosure, in the procedure of constructing the block vector candidate list, the search points in the preset search area may be traversed, and the initial costs between the matching templates and the first template may be determined based on the preset matching criterion, where each of the matching templates corresponds to a respective one of the search points in the preset search area. Then, the initial costs can be adjusted based on the template coefficients to determine the matching costs between the matching templates corresponding to the search points in the preset search area and the first template. Finally, the block vector candidate list can be determined based on the matching costs.

For example, in some embodiments, when comparing the matching costs of different candidate templates, it is possible to choose to perform the comparison based on the template coefficients of different templates. For example, the SADs of different candidate templates are multiplied by a coefficient (template coefficient) to adjust the initial costs of different candidate templates, thus different candidate templates can be compared by using the adjusted matching costs.

It should be noted that, in the embodiment of the disclosure, assuming that the TL template includes the T template and the L template, the number of pixels of the TL template is always the largest, thus only the T template and the L template can be multiplied by the template coefficient, but the TL template is not required, or the template coefficient of the TL template can be set to 1.

For example, in some embodiments, the initial cost SAD of the TL template is denoted as $SAD_{TL}$, the initial cost SAD of the T template is denoted as $SAD_T$, the initial cost SAD of the L template is denoted as $SAD_L$. The matching cost of the TL template used for comparison with other templates is denoted as $COST_{TL}$, the matching cost of the T template is denoted as $COST_T$, the matching cost of the L template is denoted as $COST_L$.

Then, the corresponding template coefficients are used respectively, for example, the template coefficient of the TL template is 1, and the template coefficient of the T template is $COEF_T$, the template coefficient of the TL template is $COEF_L$. It can be determined that: $COST_{TL} = SAD_{TL}$, $COST_T = SAD_T * COEF_T$, $COST_L = SAD_L * COEF_L$.

Herein, $COEF_T$ and $COEF_L$ may be calculated by using the number of pixels of the candidate template. $COEF_T$ and $COEF_L$ with different block sizes may be calculated in advance.

For example, in some embodiments, in a case that the TL template does not contain the top-left portion, i.e., the TL template is equal to the T template plus the L template, if the width of the current block is equal to the height of the current block, $COEF_T$ equals to 2, $COEF_L$ equals to 2. However, it is still unavoidable that $COEF_T$ or $COEF_L$ is a fractional value. For example, if the width is twice the height, $COEF_T$ equals to 1.5, $COEF_L$ equals to 3.

Then, after the adjustment using the corresponding template coefficients, it is determined that: $COST_{TL} = SAD_{TL} * COEF_{TL}$, $COST_T = SAD_T * COEF_T$, $COST_L = SAD_L * COEF_L$.

Here, $COEF_{TL}$, $COEF_T$ and $COEF_L$ may be calculated by using the numbers of pixels of the several templates. $COEF_{TL}$, $COEF_T$ and $COEF_L$ with different block sizes may be calculated in advance.

For example, in some embodiments, in a case that the TL template does not contain the top-left portion, i.e., the TL template is equal to the T template plus the L template, if the width of the current block is equal to the height of the current block, $COEF_{TL}$ equals to 1, $COEF_T$ equals to 2, $COEF_L$ equals to 2. For example, if the width is twice the height, $COEF_{TL}$ equals to 2, $COEF_T$ equals to 3, $COEF_L$ equals to 6. The method for calculating the template coefficient of a specified template may be: dividing the least common multiple of the number of pixels of all templates by the number of pixels of the specified template.

It can be understood that in the embodiment of the disclosure, the matching cost of the TL template, the matching cost of the T template, and the matching cost of the L template of the same BV are included. If the matching degree (such as the above AAD) of the T template and the matching degree of the L template are different, even if they are only slightly different, then for the $COST_T$ or $COST_L$ calculated based on the pixel ratio, there must be one less than $COST_{TL}$. That is to say, if the template coefficients of multiple candidate templates (such as the TL template, the T template and the L template) are adjusted by using pixel parameters or size parameters, and then the matching cost of the TL template, the matching cost of the T template and the matching cost of the L template are directly compared after the adjustment, the TL template will suffer in most cases. That is to say, directly using the above method for comparison would result in different BVs being compared only based on the portion with higher matching degree. However, in fact, because the TL template covers a larger neighbouring area and texture is usually continuous from both the left and top sides, it is unreasonable to unrestrictedly replace the TL template with the individual T template or the L template.

It should be noted that in the embodiment of the disclosure, the template coefficient corresponding to the candidate template can be optionally set based on a preset value, and thus the adjustment range to the matching cost can be reasonably controlled.

For example, in some embodiments, when the template coefficient corresponding to the candidate template is set based on the preset value, the template coefficient of the T template and/or the L template may be set to a value larger than the value of the template coefficient of the TL template.

For example, in the embodiment of the disclosure, when the template coefficient corresponding to the candidate template is set based on the preset value, the $COST_T$ or $COST_L$ may be enlarged for comparison with $COST_{TL}$. Such a setting method for the template coefficients can not only eliminate the influence of the number of pixels, but also take into account that the TL template suffer disadvantages compared with the T template and the L template in general, for which they are necessary to be adjusted For example, $COST_T$ or $COST_L$ is multiplied by a factor greater than 1.

It should be noted that in the embodiment of the disclosure, if the first template includes multiple candidate templates in the template set, and each block vector in the block vector candidate list may be obtained by template matching using one of the TL template, the L template, or the T template, the number of block vectors corresponding to any type of the candidate template in the block vector candidate list may be optionally limited.

Further, in the embodiment of the disclosure, an upper threshold corresponding to each of the plurality of candidate templates is determined, and the number of block vectors corresponding to the candidate template in the block vector candidate list is determined based on the upper threshold. Herein, the value of the upper threshold may be less than or equal to the list length of the block vector candidate list.

That is to say, in the embodiment of the disclosure, the number of candidates (block vectors) selected based on the T template and the L template from the same block vector candidate list may be limited. For example, an upper limit of the number of candidates (block vectors) selected based on the T template and/or the L template is set, and when the number of candidates (block vectors) selected based on the T template and/or the L template from the block vector candidate list reaches the upper limit, no attempt is made to add the candidates (block vectors) selected based on the T template and/or the L template into the block vector candidate list.

Further, in the embodiment of the disclosure, when multiple types of candidate templates are directly used to construct the block vector candidate list, that is, in a case where the first template includes more than one candidate template, for example, the first template at least includes a first candidate template, a second candidate template, and a third candidate template, a second search area may be determined based on the first candidate template, and search points in the second search area may be traversed based on the first search step size to determine initial block vectors. Then, a third search area is determined based on the initial block vectors and the first template, and search points in the third search area are traversed based on a second search step size to determine the block vector candidate list, where the first search step size is larger than the second search step size.

It can be understood that, in the embodiment of the disclosure, an initial search can first be performed using the first candidate template in the first template and with a first search step size to obtain a preliminary search result, from which the initial block vectors are selected. Subsequently, using this initial block vector as a reference point, the matching costs of the multiple candidate templates included in the first template can be compared and adjusted, and a further refinement search can be performed with a second search step size. In this way, the construction of the block vector candidate list can be ultimately completed.

For example, in the embodiment of the disclosure, assuming that the first candidate template in the first template is the TL template, when performing the first search (the coarse search with the first search step size) of the Intra TMP multi-candidate, a second search area can be determined based on the TL template first, and after traversing the search points in the second search area, a certain number of BVs, that is, initial block vectors, can be filtered out based on the matching costs corresponding to the first candidate template, and these BVs are used as reference points of the second search step size. Then, the matching among the TL template, the T template and the L template of several BVs is analyzed. If it is found that $COST_T$ or $COST_L$ corresponding to a BV vary greatly, or if $COST_T$ or $COST_L$ is greater than a preset value, it is possible to choose to use a template with a high matching degree among the T templates or the L templates to perform an improved search, that is, candidate templates other than the first candidate template in the first template are used to continue the search. On the contrary, if $COST_T$ or $COST_L$ corresponding to a BV have little difference, then the TL template is still used to improve the search, that is, the first candidate template is used to continue the search.

Further, in the embodiment of the disclosure, if the first template at least includes a first candidate template, a second candidate template, and a third candidate template, searching may be performed based on the first candidate template to determine a first list corresponding to the first candidate template. Searching may be performed based on the second candidate template to determine a second list corresponding to the second candidate template. Searching may be performed based on the third candidate template to determine a third list corresponding to the third candidate template. The first list is adjusted based on the second list and the third list to determine the block vector candidate list.

It should be noted that, in the embodiments of the disclosure, the list lengths of the second list and the third list may be the same or different, which is not limited in the disclosure.

It should be noted that, in a case where the first template is not indicated in the bitstream, only one block vector candidate list is constructed, thereby eliminating the need to use a syntax element in the bitstream to indicate which template is selected. However, because the template matching costs between different templates cannot be directly compared, it is necessary to formulate certain rules to enable that they can be put into the same block vector candidate list. Here, a straightforward method is to sort the candidates from one type of candidate template based on their matching costs, while candidates from other different candidate templates are not sorted using the matching costs of the type of candidate template, but are instead placed directly into predefined positions in the list.

For example, in some embodiments, it is assumed that the first candidate template is the TL template, the second candidate template is the T template, the third candidate template is the L template, and the list length of the block vector candidate list is N. Then, a first list with a length of N can be constructed by using the TL template first. Herein, the template matching costs of the searched BVs can be calculated based on the preset search method, and the template matching costs can be sorted, and the one with the smaller cost can be placed in the front position, and finally the first list can be generated. It is also possible to specify that the maximum number of T and L templates that can be placed into the final block vector candidate list is M. Since a duplicate-checking operation is required when adding candidates into the list, the actual number placed may be less than M. Then, the search based on the T template and the L template can be continued to generate the corresponding second list and the corresponding third list, respectively. Finally, the block vectors and the corresponding candidate templates in the second list and the third list can be sequentially placed into the first list, to complete the adjustment to the first list, thereby obtaining the corresponding block vector candidate list.

For example, in some embodiments, an example is that N is 15 and M is 2, that is, the length of the finally generated block vector candidate list is 15, the number of candidates of the T template can be at most 2, and the number of candidates of the L template can be at most 2.

For example, in some embodiments, an example is that N is 19 and M is 3, that is, the length of the finally generated block vector candidate list is 19, the number of candidates of the T template can be at most 3, and the number of candidates of the L template can be at most 3.

Further, in the embodiment of the disclosure, if the first template at least includes a first candidate template, a second candidate template, and a third candidate template, searching is performed based on the first candidate template, the second candidate template, and the third candidate template to determine a first list corresponding to the first candidate template, a second list corresponding to the second candidate template, and a third list corresponding to the third candidate template, respectively. The first list is adjusted based on the second list and the third list to determine the block vector candidate list.

That is, in the embodiment of the disclosure, it is also possible to select to perform searching based on the first candidate template, the second candidate template, and the third candidate template to obtain the corresponding first list, second list, and third list. Then, the corresponding block vector candidate list is generated based on the first list, the second list and the third list.

For example, in some embodiments, regarding the search process, one approach is that the T and L templates can share the search process of the TL template. Since the matching costs of the T and L templates can be computed simultaneously when calculating the matching costs of the TL template, this method does not significantly increase the overall search complexity. For example, in the same search process, lists are constructed for the TL template, the T template and the L template, respectively, and after the searching is completed, the three lists are integrated into the final block vector candidate list.

For example, in some embodiments, the T template and the L template may also use separate search processes from the TL template. Certainly, it is also possible to share part of the search process while keeping the rest separate, which is not particularly limited in the disclosure.

Further, in the embodiment of the disclosure, when adjusting the first list based on the second list and the third list to determine the block vector candidate list, a first starting position corresponding to the second list and a second starting position corresponding to the third list may be determined first. Then, block vectors in the second list are added into the first list based on the first starting position, and block vectors in the third list are added into the first list based on the second starting position to obtain the block vector candidate list.

It should be noted that in the embodiment of the disclosure, the first starting position may determine the starting position when the block vectors in the second list are added into the first list. The second starting position may determine the starting position when the block vector in the third list are added into the first list. Here, the first starting position and the second starting position may be the same or different.

Further, in the embodiment of the disclosure, when adding the block vectors in the second list into the first list based on the first starting position, block vectors present in the second list and not present in the first list are added into the first starting position of the first list. When adding the block vectors in the third list into the first list based on the second starting position, block vectors present in the third list and not present in the first list are added into the second starting position of the first list.

For example, in some embodiments, it may be indicated that the position with the smallest index in which the T template and the L template can be placed is Pos, or the foremost position is Pos, that is, the first starting position and the second starting position are Pos. Herein, Pos can be calculated from N and M, such as Pos = N - 1-M $\times$ 2. The foremost positions in which the T template and the L template can be placed into the list may be formulated, respectively.

For example, in some embodiments, assuming that the first candidate template is the TL template, the second candidate template is the T template, the third candidate template is the L template, and the list length of the block vector candidate list is N, that is, the list length of the first list is X, and the list lengths of the second list and the third list are N, on the basis of the first list of the TL template, candidates of the T template and the L template may be placed into the first list, to generate the block vector candidate list. Herein, X T template candidates and X L template candidates with the best template matching costs can be found by a preset search method, and X T template candidates and X L template candidates can respectively be used to construct temporary lists with a length of X, that is, the second list and the third list. To attempt inserting the candidates from the T and L templates into the final block vector candidate list, a duplicate-checking operation can be performed first. If a BV identical to the candidate to be inserted from the second list or the third list already exists in the first list, the candidate will not be inserted. If no such identical BV exists in the first list, the candidate at the specified first starting position or second starting position in the first list, along with all subsequent candidates, are shifted backward by one position, and then the candidate to be inserted is placed at the indicated starting position in the first list. Specifically, each time a candidate is inserted into the first list, the specified first starting position or second starting position is moved forward by one position, continuing until either M candidates have been inserted or all X candidates in the temporary list have been checked.

It should be noted that, in the embodiments of the present application, whether the first, second, and third lists are obtained through separate searches or through a simultaneous search, the search method may include performing an initial sparse search using a first search step size, followed by a refinement search using a second search step size.

For example, in some embodiments, for the sparse search in the first step, during the search process, there is no need to exhaustively search every possible BV in sequential order. For example, the usual searching order is from left to right and from top to bottom. Generally speaking, the BV of the entire pixel can be searched sequentially. If the currently searched BV is (x0, y0), then the next one is (x0+1, y0), provided that the boundary of the search range has not been reached. But here a sparse search may be performed first. For example, for the BV of the entire pixel, if the currently searched BV is (x0, y0), then the next one is (x0+3, y0), provided that the boundary of the searching range has not been reached. That is, template matching is performed every fixed number of pixels, or template matching can be performed every fixed step size. The step size here may be a preset value, such as 2, 3, 4, 8, or the like. Certainly, the same processing can be done in the vertical direction. K BVs with the lowest TL template costs are first found. K may be equal to N, or may be greater than or less than N. This procedure may be accomplished by building a list. X' BVs with the lowest T template costs and X' BVs with the lowest L template costs are found. X' may be equal to M, or may be greater than or less than M. This procedure may be accomplished by building a list. That is to say, in this step of the search process, the template matching costs for the TL, T, and L templates are evaluated and sorted simultaneously for each BV, meaning that the three templates share the same sparse search process.

For example, in some embodiments, for the improvement search of the second step, on the basis of the K BVs with the lowest TL template costs, the improvement is made in a small range on the basis of each BV. If the above search interval is 3 pixels, then the improved range here can be set to 3 $\times$ 3, and the improved BV can be used to construct a block vector candidate list with a length of N. Then, on the basis of X' BVs with the lowest T template costs and L template costs, the improvement is made in a small range on the basis of each BV. If the above search interval is 3 pixels, then the improved range here can be set to 3 $\times$ 3, and the improved BV can be used to construct a temporary block vector candidate list of the T template and a temporary block vector candidate list of the L template, the length of the temporary block vector candidate list are X. Then, based on the above method, the list (with a length of N) of the TL template, the list (with a length of X) of the T template and the list (with a length of X) of the L template are integrated into the final block vector candidate list.

For example, in some embodiments, N = 15, K = 2N, M = 2, X = 4, X' = 2X.

It should be noted that, in the embodiment of the disclosure, if the fractional-pixel accuracy is supported, the subsequent refinement can be continued to the fractional-pixel BV. For example, a 1/2-pixel search is performed within a range of one pixel to the left, right, top, and bottom around the BV of the entire pixel selected in the second step.

It can be understood that in the embodiment of the disclosure, the common sparse search process does not significantly increase the complexity of the search, and the respective improved search ranges of the TL template, the T template, and the L template can be found using a wide range sparse search. The improvement search can be tailored to different templates, making it more targeted.

At the operation 203, a block vector corresponding to the current block is determined based on the block vector candidate list corresponding to the current block, and a prediction value of the current block is determined based on the block vector.

In the embodiment of the disclosure, after the block vector candidate list corresponding to the current block is determined based on the first template, the block vector corresponding to the current block may be further determined based on the block vector candidate list corresponding to the current block, and the prediction value of the current block may be further determined based on the block vector.

It should be noted that, in the embodiment of the disclosure, if the value of the template matching prediction identification information is the first value, that is, it is determined that the prediction processing is performed on the current block using the prediction method of Intra TMP based on the value of the template matching prediction identification information, index identification information corresponding to the current block may be further determined. Next, a candidate index corresponding to the current block may be determined based on the index identification information.

It can be understood that in the embodiment of the disclosure, the index identification information corresponding to the current block may determine the index of the block vector corresponding to the current block from the block vector candidate list, that is, the candidate index corresponding to the current block may be determined by the index identification information.

It should be noted that in the embodiments of the disclosure, if the list lengths of the block vector candidate lists generated using different candidate templates are different, it is required to parse the syntax element indicating the template, such as the first template indication information intra_tmp_alternative_template_flag and/or the second template indication information intra_tmp_template_idx, and then parse the candidate index intra_tmp_idx.

Further, in the embodiment of the disclosure, if the corresponding list length, binarization method and inverse binarization method, context model, or the like are the same regardless of which candidate template is used as the first template of the current block, it may be considered that the candidate index intra_tmp_idx does not depend on the syntax elements indicating the template, such as the first template indication information intra_tmp_alternative_template_flag and/or the second template indication information intra_tmp_template_idx, thus the syntax elements indicating the template (such as intra_tmp_alternative_template_flag and/or intra_tmp_template_idx) and the intra_tmp_idx can be parsed in any order.

Further, in the embodiment of the disclosure, if different candidate templates are selected as the first template of the current block, and at least one of the corresponding list length, binarization method and inverse binarization method, context model, or the like may be different, and then it may be considered that the candidate index intra_tmp_idx depends on the syntax elements indicating the template, such as the first template indication information intra_tmp_alternative_template_flag and/or the second template indication information intra_tmp_template_idx, thus it is required to first parse the syntax elements indicating the template (such as intra_tmp_alternative_template_flag and/or intra_tmp_template_idx), and then parse the intra_tmp_idx.

Further, in the embodiment of the disclosure, if the value of the first template indication information is the third value, the index identification information is determined based on a first context. If the value of the first template indication information is the fourth value, the index identification information is determined based on a second context.

It can be understood that in the embodiment of the disclosure, after the first template indication information intra_tmp_alternative_template_flag is parsed, a context used in the encoding and decoding process may be determined based on the first template indication information, that is, a context model (a CABAC context model) in the encoding and decoding process may be determined using the first template indication information. Certainly, the second template indication information may also be used to determine the context model in the encoding and decoding process, which is not limited in the disclosure.

It should be noted that, in the embodiment of the disclosure, different context models (CABAC context models) may be set when performing the binarization or inverse binarization encoding and decoding, That is, the probabilities of the binary symbols based on context encoding for the two cases are cumulatively counted and updated separately. That is, the encoder or decoder may select a set of context models based on the value of the syntax element indicating the template such as the first template indication information intra_tmp_alternative_template_flag and/or the second template indication information intra_tmp_template_idx.

For example, in some embodiments, one set of context models/one context model contextModel0 is selected if the value of the intra_tmp_alternative_template_flag is 0, and one set of context models/one context model contextModel1 is selected if the value of intra_tmp_alternative_template_flag is 1.

Further, in the embodiment of the disclosure, in the procedure of determining the candidate index corresponding to the current block based on the index identification information, if the value of the first template indication information is a third value, the candidate index is determined based on the index identification information and a first binarization strategy. If the value of the first template indication information is a fourth value, the candidate index is determined based on the index identification information and a second binarization strategy.

It can be understood that in the embodiment of the disclosure, after the first template indication information intra_tmp_alternative_template_flag is parsed, the binarization strategy used in the process of determining the candidate index can be determined based on the first template indication information, that is, the inverse binarization method is determined using the first template indication information. Certainly, the second template indication information may also be used to determine the binarization method (at the encoding end) or the inverse binarization method (at the decoding end) in the encoding and decoding process, which is not limited in the disclosure.

It should be noted that in the embodiment of the disclosure, the binarization and inverse binarization methods of the candidate index intra_tmp_idx may be different based on the difference in the value of the template indication information. Even if the block vector candidate lists generated using different candidate templates have the same list length, they may follow different probability distribution rules, thus different binarization and inverse binarization methods may be set.

For example, in some embodiments, in one scenario (for example, using the TL template), the probability of selecting the first few candidates with very small indices is significantly higher than that of other candidates with larger indices. Therefore, the binarization and inverse binarization methods allocate shorter binary symbols to the first few candidates with very small indices, and longer binary symbols to other candidates with larger indices.

For example, in some embodiments, in another scenario (for example, using the T template or L template), the probabilities of selecting the first few candidates with very small indices are similar to those of other candidates with larger indices. Therefore, the binarization and inverse binarization methods allocate binary symbols with lengths that differ less significantly, or even use equal binary symbol lengths, for these candidates.

That is, in the embodiment of the disclosure, the encoder or decoder selects a set of binarization or inverse binarization methods based on the value of the syntax element indicating the template, such as intra_tmp_alternative_template_flag and/or intra_tmp_template_idx.

For example, in some embodiments, if the value of the first template indication information intra_tmp_alternative_template_flag is 0, a first binarization and inverse binarization method is selected, which is illustrated in Table 3.

For example, in some embodiments, if the value of the first template indication information intra_tmp_alternative_template_flag is 1, a second binarization and inverse binarization method is selected, which is illustrated in Table 4.

The Symbol in Tables 3 and 4 corresponds to the candidate index intra_tmp_idx.

It should be noted that, in the embodiment of the disclosure, at the decoding end, an inverse binarization method is used by the decoder, and based on the correspondence table between the Symbol and the binary symbol, if a certain binary symbol is encoded using the context mode, a context model is selected, and the bitstream is read to determine the value of the Symbol. At the encoding end, the encoder uses a binarization method, based on the correspondence table between the Symbol and binary symbol, if a certain binary symbol is encoded using the context mode, a context model is selected, and the content to be written into the bitstream is determined based on the value of the Symbol. Here, the Symbol corresponds to the intra_tmp_idx.

Further, in the embodiment of the disclosure, when performing the binarization or inversion binarization of intra_tmp_idx, for the case of using only the TL template, or for any scenario combining multiple candidates and multiple templates, if the list length N of the block vector candidate list is relatively large, then the earlier candidates have higher probabilities, the later ones have lower probabilities, and the probabilities of the later candidates become increasingly similar. Therefore, shorter codewords can be allocated to the earlier candidates and longer codewords to the later ones, with some of the later candidates sharing the same codeword length.

For example, in some embodiments, it is assumed that the list length N of the block vector candidate list is 15, codewords with the same length are used for the indices 3 to 6, codewords with the same length are used for the indices 7 to 14, and specific binarization and inverse binarization are illustrated in Table 5.

Here, the x in the table can be obtained using truncated binary. The context model-based coding method may be used for the binary symbol whose BinIdx is 0, and when the value of the binary symbol whose BinIdx is 0 is 1 (corresponding to the above case where the intra_tmp_idx is 0, 1, 2), the context model-based coding method may be used for the binary symbol whose BinIdx is 1. A bypass coding method may be used for the binary symbol represented by x.

For example, in some embodiments, it is assumed that the list length N of the block vector candidate list is 19, codewords with the same length are used for the indices 3 to 18, and the specific binarization and inverse binarization are illustrated in Table 6.

Here, the x in the table can be obtained using truncated binary. The context model-based coding method may be used for the binary symbol whose BinIdx is 0, and when the value of the binary symbol whose BinIdx is 0 is 1 (corresponding to the above case where the intra_tmp_idx is 0, 1, 2), the context model-based coding method may be used for the binary symbol whose BinIdx is 1. A bypass coding method may be used for the binary symbol represented by x.

Accordingly, in the embodiment of the disclosure, the encoder converts a value of the syntax element (such as the intra_tmp_idx) into a corresponding binary symbol (bin), and then converts the binary symbol into binary bits (bits) using an entropy coding engine. The entropy coding (decoding) engine of the decoder converts binary bits (bits) into a binary symbol, and then converts the binary symbol (bin) into a value of the syntax element.

It should be noted that, in the embodiment of the disclosure, the context model-based coding method and the bypass coding method are two modes of the entropy coding engine. When encoding, the entropy coding engine converts the binary symbol into binary bits in the bitstream. When decoding, the entropy coding engine converts the binary bits in the bitstream into the binary symbol. The context model-based coding method can be understood as follows: for a specific value (0 or 1) of a binary symbol of a syntax element, the more frequently it appears in a given context, the more likely the entropy coding engine is to allocate fewer binary bits to represent that binary symbol value, and more binary bits to represent the other binary symbol value. For example, if the value '1' occurs more frequently for a certain binary symbol of a syntax element, then fewer binary bits are used to encode '1', and more binary bits are used to encode '0'. The bypass coding method can be equivalent to using an equal probability model. Therefore, the bypass coding method has higher throughput than the context model-based mode. However, the context model-based mode theoretically has higher compression efficiency.

For example, in some embodiments, assuming that the list length N of the block vector candidate list is 19, and the specific binarization and inverse binarization are illustrated in Table 7.

Among them, x, y, z in the same row of the table may be obtained by using the truncated binary, respectively. That is, the last two binary symbols in the indices 3 to 6 are obtained using truncated binary coding, the last two binary symbols in the indices 7 to 10 are obtained by the truncated binary, and the last three binary symbols in the indices 11 to 18 are obtained by the truncated binary. Here, the context model-based coding method may be used for the binary symbol whose BinIdx is 0.

It can be understood that in the embodiment of the disclosure, when the value of the binary symbol whose BinIdx is 0 is 1 (corresponding to the above case where the intra_tmp_idx is 0, 1, or 2), the context model-based coding method may be used for the binary symbol whose BinIdx is 1.

It can be understood that in the embodiment of the disclosure, when the value of the binary symbol whose BinIdx is 0 is 0 (corresponding to the above case where the intra_tmp_idx is greater than 2), the context model-based coding method and the context model different from the case where the intra_tmp_idx is 0, 1, or 2 may be used for the binary symbol whose BinIdx is 1.

It can be understood that in the embodiment of the disclosure, when the value of the binary symbol whose BinIdx is 0 is 0, and the binary symbol whose BinIdx is 1 is 1 (corresponding to the above case where the intra_tmp_idx is 3 to 10), the context model-based coding method may be used for the binary symbol whose BinIdx is 2.

It can be understood that in the embodiment of the disclosure, the bypass coding method may be used for the binary symbols represented by x, y, and z described above.

It should be noted that in the embodiment of the disclosure, the above values of 0 and 1 are examples, and it is also acceptable if the values of 0 and 1 are reversed but the result is equivalent; equivalently, the order of the binary symbols obtained from truncated binary can be swapped.

Further, in the embodiment of the disclosure, after the candidate index corresponding to the current block is determined, when the block vector corresponding to the current block is determined based on the block vector candidate list corresponding to the current block, the block vector corresponding to the current block may be determined from the block vector candidate list based on the candidate index.

That is to say, in the embodiment of the disclosure, the block vector indicated by the candidate index and corresponding to the current block in the block vector candidate list may be determined as the block vector corresponding to the current block.

Further, in the embodiment of the disclosure, after determining the block vector corresponding to the current block based on the block vector candidate list corresponding to the current block, and determining the prediction value of the current block based on the block vector, a reconstructed value of the current block may be further determined according to the prediction value of the current block.

It should be noted that in the embodiment of the disclosure, the prediction difference value (residual) corresponding to the current block may be first determined. Then, the reconstructed value of the current block may be further determined based on the prediction difference value and the prediction value.

It can be understood that in the embodiment of the disclosure, after determining the prediction difference value (residual) of the current block based on the prediction value of the current block, the prediction difference value may be written into the bitstream. Thus, the decoder can determine the prediction difference value (residual) corresponding to the current block by decoding the bitstream. Then, the reconstructed value of the current block may be further determined from the prediction difference value and the prediction value.

In summary, according to the method for decoding proposed in the operations 201 to 203, the Intra TMP multi-candidate realized by constructing the block vector candidate list corresponding to the current block can provide multiple choices, and the first template corresponding to the current block that may include one or more candidate templates can provide multiple choices at the template level, and the combination of the two can improve the compression efficiency to obtain better compression performance.

That is to say, the method for encoding and decoding proposed in the embodiment of the disclosure can combine the Intra TMP multi-candidate and the multi-selection at the template level. In the process of combining the two, one implementation method is to indicate which template to use in the bitstream, and the other implementation is to use different templates to construct the same block vector candidate list, instead of indicating which template to use in the bitstream.

An embodiment of the disclosure provides a method for encoding, the encoder determines a first template corresponding to a current block, where the first template includes one or more candidate templates in a template set corresponding to the current block; determines a block vector candidate list corresponding to the current block based on the first template; and determines a block vector corresponding to the current block based on the block vector candidate list corresponding to the current block, and determines a prediction value of the current block based on the block vector. Thus, in the embodiments of the disclosure, an Intra TMP prediction method that combines multiple candidates with multiple templates is proposed, where a block vector candidate list including at least one block vector of the current block may be selected and determined, and a first template including at least one candidate template may be selected to construct the block vector candidate list, thereby realizing the combination of Intra TMP multi-candidate and multi-selection at the template level. That is to say, the method for encoding and decoding proposed in the embodiments of the disclosure, on one hand, realizes the Intra TMP multi-candidate by constructing the block vector candidate list corresponding to the current block; on the other hand, it provides multiple selections at the template level by using the first template corresponding to the current block that includes one or more candidate templates, thereby improving the compression efficiency and enhancing the encoding and decoding performance.

Based on the above embodiments, another embodiment of the disclosure provides a method for encoding and decoding, which is applied to an encoder and decoder. Taking the TL template, the T template and the L template as candidate templates in template set as an example. Usually, when performing template matching, the matching cost between the searched template of the reference block and the template of the current block is calculated. This cost is generally measured by using SAD, SATD, SSE, or the like. Taking the SAD as an example, if the TL template is the T template plus the L template, then the SAD of the TL template corresponding to the same BV is equal to the SAD of the T template plus the SAD of the L template. If the TL template includes the top-left area in addition to the T template and the L template, the SAD of the T template and the SAD of the L template corresponding to the same BV can still be calculated in the process of calculating the SAD of the TL template.

It should be noted that the method for encoding and decoding proposed in the embodiment of the disclosure is an intra prediction method in which the Intra TMP multi-candidate and multi-selection at the template level are combined, and one combination method is to indicate which template should be used by the decoder in the bitstream. The other combination method is to use different templates to construct the same block vector candidate list, instead of indicating which template should be used by the decoder in the bitstream.

For example, in some embodiments, if it is indicated in the bitstream which template should be used by the decoder, an example of a decoding syntax is as follows.

intra_tmp_flag

if (intra_tmp_flag) {

Intra_tmp_alternative_template_flag

if (intra_tmp_alternative_template_flag) {

intra_tmp_template_idx

}

intra_tmp_idx

}

Here, the intra_tmp_flag indicates whether the Intra TMP is used for the current block, if the Intra TMP is used for the current block, the decoder parses the intra_tmp_alternative_template_flag, the intra_tmp_alternative_template_flag indicates whether another template is used for the current block. If the value of the intra_tmp_alternative_template_flag is 0, it is indicated that the TL template is used for the current block. If the value of the intra_tmp_alternative_template_flag is 1, the decoder parses the intra_tmp_template_idx, the intra_tmp_template_idx indicates that the T template or the L template is used for the current block. For example, if the value of the intra_tmp_template_idx is 0, it is indicated that the T template is used for the current block, if the value of the intra_tmp_template_idx is 1, it is indicated that the L template is used for the current block.

Certainly, the intra_tmp_alternative_template_flag and the intra_tmp_template_idx may also be merged into the same syntax element intra_tmp_template_idx. An example is that if the value of intra_tmp_template_idx is 0, it means that the TL template is used for the current block. If the value of intra_tmp_template_idx is 1, it means that the T template is used for the current block, and if the value of intra_tmp_template_idx is 2, it means that the L template is used for the current block.

The decoder constructs the block vector candidate list based on the selected templates, and when constructing the list based on different templates, the search methods (including the search range, the search order, or the like) and the list lengths may be the same or different. An example is to use a list length of 15 in the case of using the TL template and to use a list length of 8 (or 4) in the case of using either the T template or the L template.

Analytical method

If the list lengths are different, it is required to parse the syntax elements indicating the template, such as the intra_tmp_alternative_template_flag and the intra_tmp_template_idx, before parsing the intra_tmp_idx.

In an extreme case, the length of the block vector candidate list is 1 (i.e., there is only one candidate) when using the T template or L template. In this case, the intra_tmp_idx does not need to be parsed when using the T or L template.

Further, the binarization and inverse binarization methods of the intra_tmp_idx may also be different. Even if the list lengths are the same in both cases, they may follow different probability distribution rules, so different binarization and inverse binarization methods can be set. To give a more easily understandable example, in one scenario (for example, using the TL template), the probability of selecting the first few candidates with very small indices is significantly higher than that of other candidates with larger indices. Therefore, the binarization and inverse binarization methods allocate shorter binary symbols to the first few candidates with very small indices, and longer binary symbols to other candidates with larger indices. In another scenario (for example, using the T template or L template), the probabilities of selecting the first few candidates with very small indices are similar to those of other candidates with larger indices. Therefore, the binarization and inverse binarization methods allocate binary symbols with lengths that differ less significantly, or even use equal binary symbol lengths, for these candidates. That is to say, the encoder or decoder selects a set of binarization or inverse binarization methods based on the value of the syntax element indicating the template, such as intra_tmp_alternative_template_flag and/or intra_tmp_template_idx. For example, if the value of the intra_tmp_alternative_template_flag is 0, a first binarization and inverse binarization method is selected, if the value of the intra_tmp_alternative_template_flag is 1, a second binarization and inverse binarization methods is selected.

For example, in some embodiments, the first binarization and inverse binarization method is illustrated in Table 3. The second binarization and inverse binarization method is illustrated in Table 4.

Further, even if the binarization methods for the two cases are the same, different context models (CABAC context models) may be set when performing the binarization or inverse binarization encoding and decoding for the two cases. That is, the probabilities of the binary symbols based on context encoding for the two cases are cumulatively counted and updated separately. That is, the encoder or decoder may select a set of context models based on the value of the syntax element indicating the template such as the intra_tmp_alternative_template_flag and/or the intra_tmp_template_idx. For example, one set of context models/one context model contextModel0 is selected if the value of the intra_tmp_alternative_template_flag is 0, and one set of context models/one context model contextModel1 is selected if the value of intra_tmp_alternative_template_flag is 1.

If the list length, binarization method and inverse binarization method, context model, or the like are the same, that is, the intra_tmp_idx does not depend on the syntax elements indicating the template, such as the first template indication information intra_tmp_alternative_template_flag and/or the second template indication information intra_tmp_template_idx, thus the syntax elements indicating the template (such as intra_tmp_alternative_template_flag and/or intra_tmp_template_idx) and the intra_tmp_idx can be parsed in any order. Otherwise, that is, intra_tmp_idx depends on the syntax elements indicating the template, such as the first template indication information intra_tmp_alternative_template_flag and/or the second template indication information intra_tmp_template_idx, thus the syntax elements indicating the template (such as intra_tmp_alternative_template_flag and/or intra_tmp_template_idx) are first parsed, and then the intra_tmp_idx is parsed.

An inverse binarization method is used by the decoder, and based on the correspondence table between the Symbol and the binary symbol, if a certain binary symbol is encoded using the context mode, a context model is selected, and the bitstream is read to determine the value of the Symbol. The encoder uses a binarization method, based on the correspondence table between the Symbol and binary symbol, if a certain binary symbol is encoded using the context mode, a context model is selected, and the content to be written into the bitstream is determined based on the value of the Symbol. The Symbol corresponds to the intra_tmp_idx.

Because the TL template covers a larger neighbouring area, and in most cases the texture is continuous from both the left and top sides, the TL template generally has greater reference value compared to the individual T template or the individual L template. Therefore, the encoder selects the TL template in most cases, while the individual T and L templates are more often used as supplementary options. Based on this distribution pattern, the TL template can be allocated a higher priority compared to the T and L templates. One method is illustrated as follows:

$$intra\_tmp\_flag$$

$$if\ (intra\_tmp\_flag)\ \{$$

$$intra\_tmp\_idx$$

$$if\ (intra\_tmp\_idx > THR)\ \{$$

$$intra\_tmp\_template\_idx$$

$$\}$$

$$\}$$

If the Intra TMP is used for the current block, the intra_tmp_idx is first parsed and then the intra_tmp_template_idx is parsed. Whether to parse the intra_tmp_template_idx depends on the value of the intra_tmp_idx. If the value of the intra_tmp_idx is less than or equal to (or less than) the preset threshold THR, the TL template is used by default, otherwise, that is, the value of the intra_tmp_idx is greater than (or greater than or equal to) the preset threshold THR, it is required to parse the intra_tmp_template_idx to determine which template is used for the current block. An example is that if the value of the intra_tmp_template_idx is 0, it is indicated that the TL template is used for the current block, if the value of intra_tmp_template_idx is 1, it is indicated that the T template is used for the current block, and if the value of intra_tmp_template_idx is 2, it is indicated that the L template is used for the current block.

The advantage of this method is that a few candidates with smaller indices are not required to distinguish which specific template to use, but using the TL template by default. This reduces unnecessary overhead, as the TL template is typically selected for these candidates in most cases. It can also be considered that the indices of candidates for the T template and the L template do not start from 0, but start from the THR, which is equivalent to allocating a longer binary symbol string to the T template and the L template.

Further, in the embodiment of the disclosure, the entropy coding method, which is the binarization and inverse binarization method of the intra_tmp_idx, i.e., the entropy coding method, may be used in a case where only the TL template is used, or may be used in a case where the multi-candidate and the multi-template are combined as described above.

For example, in some embodiments, if N is relatively large, the earlier candidates have higher probabilities, the later ones have lower probabilities, and the probabilities of the later candidates become increasingly similar. Therefore, shorter codewords can be allocated to the earlier candidates and longer codewords to the later ones, with some of the later candidates sharing the same codeword length. For example, in Table 5, N is 15, codewords with the same length are used for the indices 3 to 6, codewords with the same length are used for the indices 7 to 14, and the x in the table 5 can be obtained using truncated binary. The context model-based coding method may be used for the binary symbol whose BinIdx is 0, and when the value of the binary symbol whose BinIdx is 0 is 1 (corresponding to the above case where the intra_tmp_idx is 0, 1, 2), the context model-based coding method may be used for the binary symbol whose BinIdx is 1. A bypass coding method may be used for the binary symbol represented by x.

The encoder converts a value of the syntax element (such as the intra_tmp_idx) into a corresponding binary symbol (bin), and then converts the binary symbol into binary bits (bits) using an entropy coding engine. The entropy coding (decoding) engine of the decoder converts binary bits (bits) into a binary symbol, and then converts the binary symbol (bin) into a value of the syntax element.

The context model-based coding method and the bypass coding method are two modes of the entropy coding engine. When encoding, the entropy coding engine converts the binary symbol into binary bits in the bitstream. When decoding, the entropy coding engine converts the binary bits in the bitstream into the binary symbol. The context model-based coding method can be understood as follows: for a specific value (0 or 1) of a binary symbol of a syntax element, the more frequently it appears in a given context, the more likely the entropy coding engine is to allocate fewer binary bits to represent that binary symbol value, and more binary bits to represent the other binary symbol value. For example, if the value '1' occurs more frequently for a certain binary symbol of a syntax element, then fewer binary bits are used to encode '1', and more binary bits are used to encode '0'. The bypass coding method can be equivalent to using an equal probability model. Therefore, the bypass coding method has higher throughput than the context model-based mode. However, the context model-based mode theoretically has higher compression efficiency.

For example, in some embodiments, such as Table 6, where N is 19, x, y, z in the same row of the table may be obtained by using the truncated binary, respectively. That is, the last two binary symbols in the indices 3 to 6 are obtained using truncated binary coding, the last two binary symbols in the indices 7 to 10 are obtained by the truncated binary, and the last three binary symbols in the indices 11 to 18 are obtained by the truncated binary.

Here, the context model-based coding method may be used for the binary symbol whose BinIdx is 0.

When the value of the binary symbol whose BinIdx is 0 is 1 (corresponding to the above case where the intra_tmp_idx is 0, 1, or 2), the context model-based coding method may be used for the binary symbol whose BinIdx is 1.

When the value of the binary symbol whose BinIdx is 0 is 0 (corresponding to the above case where the intra_tmp_idx is greater than 2), the context model-based coding method and the context model different from the case where the intra_tmp_idx is 0, 1, or 2 may be used for the binary symbol whose BinIdx is 1.

When the value of the binary symbol whose BinIdx is 0 is 0, and the binary symbol whose BinIdx is 1 is 1 (corresponding to the above case where the intra_tmp_idx is 3 to 10), the context model-based coding method may be used for the binary symbol whose BinIdx is 2.

The bypass coding method may be used for the binary symbols represented by x, y, and z described above.

The above values of 0 and 1 are examples, and it is also acceptable if the values of 0 and 1 are reversed but the result is equivalent; equivalently, the order of the binary symbols obtained from truncated binary can be swapped.

For example, in some embodiments, instead of indicating which template should be used by the decoder in the bitstream, different templates are used to construct the same block vector candidate list. Then an example of a decoding syntax is as follows, which is the same as the syntax using multiple candidates alone:

```
intra_tmp_flag
If (intra_tmp_flag)
{
    intra_tmp_idx
}
```

The decoder will use the TL template, the L template and the T template to construct a block vector candidate list. Each block vector in the list may be obtained by template matching using one of the TL template, the L template, or the T template. The focus of this method is how to construct a block vector candidate list.

The advantage of this combination method is that it does not require explicitly signaling which template to use, resulting in lower overhead compared to the first combination method. It is also more flexible than the first combination method. If the block vector candidate list is constructed sufficiently well, a template that finds a BV with higher matching accuracy will be ranked higher in the list.

The basic principle for constructing the block vector candidate list is to sort the template matching costs. The matching costs of several different templates should be compared, but the numbers of pixels of different templates are different. Taking the SAD as an example, it is unreasonable to directly compare the SAD of different templates. For example, for the same BV, the SAD of the TL template is equal to the SAD of the T template plus the SAD of the L template. One approach is to compare based on the numbers of pixels in different templates. A simple example is dividing the SAD by the number of pixels in the template to obtain the average absolute difference, which can be referred to as AAD (average absolute difference). This enables the comparison, but it introduces the division, which is computationally expensive in hardware implementations and should therefore be avoided. An alternative method is to multiply the SAD of each template by a scaling factor to make them comparable. Assuming the TL template encompasses both the T and L templates, the TL template always has the largest number of pixels. Thus, scaling factors can be applied only to the T and L templates, while the TL template remains un-scaled.

The initial cost SAD of the TL template is denoted as $SAD_{TL}$, the initial cost SAD of the T template is denoted as $SAD_T$, the initial cost SAD of the L template is denoted as $SAD_L$. The matching cost of the TL template used for comparison with other templates is denoted as $COST_{TL}$, the matching cost of the T template is denoted as $COST_T$, the matching cost of the L template is denoted as $COST_L$.

One method is that:

$$COST_{TL} = SAD_{TL}$$

$$COST_T = SAD_T * COEF_T$$

$$COST_L = SAD_L * COEF_L$$

Herein, COEF$_T$ and COEF$_L$ may be calculated by using the number of pixels of the candidate template. COEF$_T$ and COEF$_L$ with different block sizes may be calculated in advance. For a simple example, in a case that the TL template does not contain the top-left portion, i.e., the TL template is equal to the T template plus the L template, if the width of the current block is equal to the height of the current block, COEF$_T$ equals to 2, COEF$_L$ equals to 2. However, it is still unavoidable that COEF$_T$ or COEF$_L$ is a fractional value. For example, if the width is twice the height, COEF$_T$ equals to 1.5, COEF$_L$ equals to 3.

The other method is that:

$$\mathrm{COST_{TL}} = \mathrm{SAD_{TL}} * \mathrm{COEF_{TL}}$$

$$\mathrm{COST_{T}} = \mathrm{SAD_{T}} * \mathrm{COEF_{T}}$$

$$\mathrm{COST_{L}} = \mathrm{SAD_{L}} * \mathrm{COEF_{L}}$$

Here, COEF$_{TL}$, COEF$_T$ and COEF$_L$ may be calculated by using the numbers of pixels of the several templates. COEF$_{TL}$, COEF$_T$ and COEF$_L$ with different block sizes may be calculated in advance. For a simple example, in a case that the TL template does not contain the top-left portion, i.e., the TL template is equal to the T template plus the L template, if the width of the current block is equal to the height of the current block, COEF$_{TL}$ equals to 1, COEF$_T$ equals to 2, COEF$_L$ equals to 2. For example, if the width is twice the height, COEF$_{TL}$ equals to 2, COEF$_T$ equals to 3, COEF$_L$ equals to 6. The method for calculating the template coefficient of a specified template may be: dividing the least common multiple of the number of pixels of all templates by the number of pixels of the specified template.

By using the above method, the matching costs of different templates can be compared after the adjustment, and can be sorted together.

for the matching cost of the TL template, the matching cost of the T template, and the matching cost of the L template of the same BV, if the matching degree (such as the above AAD) of the T template and the matching degree of the L template are different, even if they are only slightly different, then for the COST$_T$ or COST$_L$ calculated based on the pixel ratio, there must be one less than COST$_{TL}$. That is to say, if the matching costs of the TL template, the T template and the L template are directly compared based on the above method, the TL template will suffer in most cases. That is to say, directly using the above method for comparison would result in different BVs being compared only based on the portion with higher matching degree. However, in fact, because the TL template covers a larger neighbouring area and texture is usually continuous from both the left and top sides, it is unreasonable to unrestrictedly replace the TL template with the individual T template or the L template.

One strategy is as follows: the COEF$_T$ and the COEF$_L$ are artificially enlarged so that they can be compared with the COST$_{TL}$. This is different from the above operation. The above operation only mechanically eliminates the influence of the number of pixels. This is because the TL template suffers disadvantages compared with the T template and the L template in general, for which they are necessary to be adjusted. For example, COST$_T$ or COST$_L$ is multiplied by a factor greater than 1.

Another strategy is as follows. When performing the first search (the coarse search with the first search step size) of the Intra TMP multi-candidate, a certain number of BVs are first filtered out based on the matching costs corresponding to the TL template, and these BVs are used as reference points of the second search (i.e., an improvement search). The matching among the TL template, the T template and the L template of several BVs is analyzed. If it is found that COST$_T$ or COST$_L$ corresponding to a BV vary greatly, or if COST$_T$ or COST$_L$ is greater than a preset value, it is possible to choose to use a template with a high matching degree among the T templates or the L templates to perform an improved search. On the contrary, if COST$_T$ or COST$_L$ corresponding to a BV have little difference, then the TL template is still used to improve the search.

On the other hand, the number of candidates selected based on the T template and the L template from the same list may be limited. For example, an upper limit of the number of candidates selected based on the T template and/or the L template is set, and when the number of candidates selected based on the T template and/or the L template from the list reaches the upper limit, no attempt is made to add the candidates selected based on the T template and/or the L template into the list.

It should be noted that in the embodiment of the disclosure, if only one list is constructed, thereby eliminating the need to use a syntax element in the bitstream to indicate which template is selected. However, because the template matching costs between different templates cannot be directly compared, it is necessary to formulate certain rules to enable that they can be put into the same list. A straightforward method is to sort the candidates from one type of template based on their matching costs, while candidates from other different templates are not sorted using the template matching costs, but are instead placed directly into predefined positions in the list.

For example, in some embodiments, the length of the final block vector candidate list is set to N. First, a list of length N is constructed using the TL template, with the construction method being the same as that of the aforementioned Intra TMP multiple candidate list construction method. According to a preset search method, the template matching cost is calculated for each searched BV, and the list is sorted based on the template matching costs, with lower-cost entries placed toward the front.

It is specified that the maximum number of T and L templates that can be placed into the final block vector candidate list is M. Since a duplicate-checking operation is required when adding candidates into the list, the actual number placed may be less than M. An example is that N is 15 and M is 2, that is, the length of the final list is 15, the number of candidates of the T template can be at most 2, and the number of candidates of the L template can be at most 2. An example is that N is 19 and M is 3, that is, the length of the final list is 19, the number of candidates of the T template can be at most 3, and the number of candidates of the L template can be at most 3.

It is indicated that the position with the smallest index in which the T template and the L template can be placed is Pos, or the foremost position is Pos. An example is to calculate Pos based on N and M, such as Pos = N - 1-M $\times$ 2. The foremost positions in which the T template and the L template can be placed into the list may be formulated, respectively.

On the basis of the block vector candidate list of TL template, candidates of the T template and the L template may be placed into the block vector candidate list.

Candidates of the T template and the L template may be placed into the block vector candidate list. The X T template candidates and X L template candidates with the best template matching costs can be found by a preset search method, and X T template candidates and X L template candidates can respectively be used to construct temporary lists with a length of X. To attempt inserting the candidates from the T and L templates into the final block vector candidate list, a duplicate-checking operation can be performed first. If a BV identical to the candidate to be inserted already exists in the list, the candidate to be inserted will not be inserted. If no such identical BV exists in the list, the candidates at the specified position and onwards in the original list are shifted back sequentially, and the candidate to be inserted is placed at the specified position in the list. Each time a candidate is inserted into the list, the specified position is moved forward by one position, continuing until either M candidates have been inserted or all X candidates in the temporary list have been checked.

Regarding the search process, one approach is that the T and L templates can share the search process of the TL template. Since the matching costs of the T and L templates can be computed simultaneously when calculating the matching costs of the TL template, this method does not significantly increase the overall search complexity. For example, in the same search process, lists are constructed for the TL template, the T template and the L template, respectively, and after the searching is completed, the three lists are integrated into the final block vector candidate list.

The T template and the L template may also use separate search processes from the TL template. Certainly, it is also possible to share part of the search process while keeping the rest separate.

In the first step (sparse search), during the search process, there is no need to exhaustively search every possible BV in sequential order. For example, the usual searching order is from left to right and from top to bottom. Generally speaking, the BV of the entire pixel can be searched sequentially. If the currently searched BV is (x0, y0), then the next one is (x0+1, y0), provided that the boundary of the search range has not been reached. But here a sparse search may be performed first. For example, for the BV of the entire pixel, if the currently searched BV is (x0, y0), then the next one is (x0+3, y0), provided that the boundary of the searching range has not been reached. That is, template matching is performed every fixed number of pixels, or template matching can be performed every fixed step size. The step size here may be a preset value, such as 2, 3, 4, 8, or the like. Certainly, the same processing can be done in the vertical direction. K BVs with the lowest TL template costs are first found. K may be equal to N, or may be greater than or less than N. This procedure may be accomplished by building a list. X' BVs with the lowest T template costs and X' BVs with the lowest L template costs are found. X' may be equal to M, or may be greater than or less than M. This procedure may be accomplished by building a list. That is to say, in this step of the search process, the template matching costs for the TL, T, and L templates are evaluated and sorted simultaneously for each BV, meaning that the three templates share the same sparse search process.

In the second step (improvement search), on the basis of the K BVs with the lowest TL template costs, the improvement is made in a small range on the basis of each BV. If the above search interval is 3 pixels, then the improved range here can be set to 3 $\times$ 3, and the improved BV can be used to construct a block vector candidate list with a length of N. Then, on the basis of X' BVs with the lowest T template costs and L template costs, the improvement is made in a small range on the basis of each BV. If the above search interval is 3 pixels, then the improved range here can be set to 3 $\times$ 3, and the improved BV can be used to construct a temporary block vector candidate list of the T template and a temporary block vector candidate list of the L template, the length of the temporary block vector candidate list are X. Then, based on the above method, the list (with a length of N) of the TL template, the list (with a length of X) of the T template and the list (with a length of X) of the L template are integrated into the final block vector candidate list.

An example is that N = 15, K = 2N, M = 2, X = 4, X' = 2X.

If the fractional-pixel accuracy is supported, the subsequent refinement can be continued to the fractional-pixel BV. For example, a 1/2-pixel search is performed within a range of one pixel to the left, right, top, and bottom around the BV of the entire pixel selected in the second step.

The common sparse search process does not significantly increase the complexity of the search, and the respective improved search ranges of the TL template, the T template, and the L template can be found using a wide range sparse search. The improvement search can be tailored to different templates, making it more targeted.

In summary, according to the method for encoding and decoding proposed in the embodiment of the disclosure, the Intra TMP multi-candidate realized by constructing the block vector candidate list corresponding to the current block can provide multiple choices, and the first template corresponding to the current block that may include one or more candidate templates can provide multiple choices at the template level, and the combination of the two can improve the compression efficiency to obtain better compression performance.

That is to say, the method for encoding and decoding proposed in the embodiment of the disclosure can combine the Intra TMP multi-candidate and the multi-selection at the template level. In the process of combining the two, one implementation method is to indicate which template to use in the bitstream, and the other implementation is to use different templates to construct the same block vector candidate list, instead of indicating which template to use in the bitstream.

An embodiment of the disclosure provides a method for encoding and decoding, the encoder or decoder determines a first template corresponding to a current block, where the first template includes one or more candidate templates in a template set corresponding to the current block; determines a block vector candidate list corresponding to the current block based on the first template; and determines a block vector corresponding to the current block based on the block vector candidate list corresponding to the current block, and determines a prediction value of the current block based on the block vector. Thus, in the embodiments of the disclosure, an Intra TMP prediction method that combines multiple candidates with multiple templates is proposed, where a block vector candidate list including at least one block vector of the current block may be selected and determined, and a first template including at least one candidate template may be selected to construct the block vector candidate list, thereby realizing the combination of Intra TMP multi-candidate and multi-selection at the template level. That is to say, the method for encoding and decoding proposed in the embodiments of the disclosure, on one hand, realizes the Intra TMP multi-candidate by constructing the block vector candidate list corresponding to the current block; on the other hand, it provides multiple selections at the template level by using the first template corresponding to the current block that includes one or more candidate templates, thereby improving the compression efficiency and enhancing the encoding and decoding performance.

In still another embodiment of the disclosure, referring to FIG. 13, a schematic structural diagram of an encoder provided by an embodiment of the disclosure is illustrated. As illustrated in FIG. 22, the encoder 180 may include: a first determination unit 1801.

The first determination unit 1801 is configured to determine a first template corresponding to a current block, where the first template includes one or more candidate templates in a template set corresponding to the current block; determine a block vector candidate list corresponding to the current block based on the first template; and determine a block vector corresponding to the current block based on the block vector candidate list corresponding to the current block, and determine a prediction value of the current block based on the block vector.

It should be understood that in the embodiment of the present disclosure, "unit" may be part of a circuit, part of a processor, part of a program or software, etc., certainly, it may also be a module or non-modular. Moreover, each component in the present embodiment may be integrated in one processing unit, each unit may exist physically alone, or two or more units may be integrated in one unit. The integrated unit can be realized either in a form of hardware or in a form of software function module.

If the integrated unit is implemented in the form of software function module rather than being sold or used as a stand-alone product, it may be stored in a computer readable storage medium. Based on such a understanding, the technical solution of the present embodiment, in essence or in part contributing to the prior art, or in whole or in part of the technical solution, may be embodied in a form of a software product, the software product is stored in a storage medium, and includes instructions for causing a computer device (which may be a personal computer, a server, or a network device, etc.) or a processor to perform all of or part of the steps of the method of the present embodiment. The aforementioned storage medium includes a USB flash disk, a removable hard disk, a Read Only Memory (ROM), a Random Access Memory (RAM), a magnetic disk or an optical disk and other medium capable of storing program codes.

Thus, an embodiment of the present disclosure provides a computer storage medium storing computer programs, applied to the encoder 180, the computer programs are used to implement the method of any of the preceding embodiments when executed by a first processor.

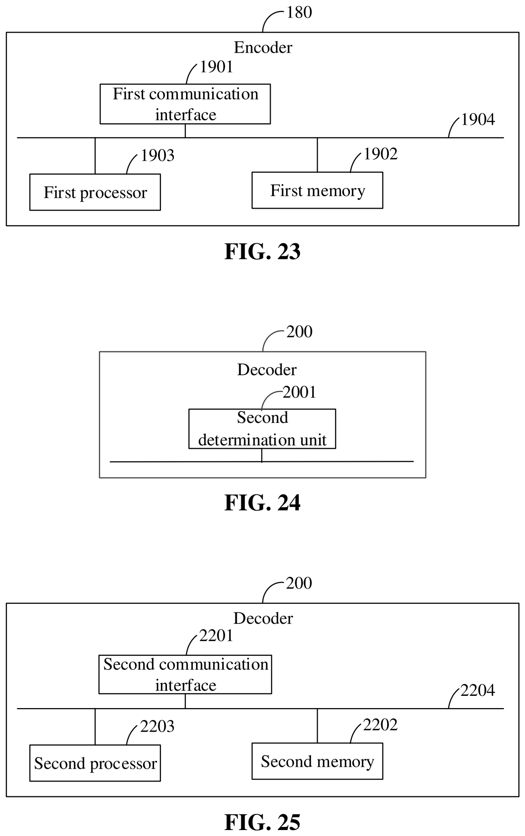

Based on the above-described composition of the encoder 180 and the computer storage medium, referring to FIG. 23, a specific hardware structure schematic diagram of an encoder 180 provided by an embodiment of the present disclosure is shown. As shown in FIG. 23, the encoder 180 may include a first communication interface 1901, a first memory 1902 and a first processor 1903. All components are coupled together by a first bus system 1904. It can be understood that the first bus system 1904 is used to implement connection communications between these components. The first bus system 1904 includes a power bus, a control bus and a status signal bus in addition to a data bus. However, the various buses are designated as the first bus system 1904 in FIG. 23 for clarity.

The first communication interface 1901 is used to receive and transmit signals in the process of transmitting and receiving information with other external network elements.

The first memory 1902 is used to store computer programs capable of running on the first processor 1903.

The first processor 1903 is used to, when running the computer programs, perform operations of: determining a first template corresponding to a current block, where the first template includes one or more candidate templates in a template set corresponding to the current block; determining a block vector candidate list corresponding to the current block based on the first template; and determining a block vector corresponding to the current block based on the block vector candidate list corresponding to the current block, and determining a prediction value of the current block based on the block vector.

It can be understood that the first memory 1902 in the embodiments of the present disclosure may be a volatile memory or a non-volatile memory, or may include both the volatile memory and the non-volatile memory. The non-volatile memory can be a read-only memory (ROM), a programmable ROM (PROM), an erasable PROM (EPROM), an electrically EPROM (EEPROM) or a flash memory. The volatile memory can be a random access memory (RAM), which is used as an external cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). The first memory 1402 of the systems and methods described herein is intended to include, but is not limited to, memories of these and any other suitable type.

The first processor 1903 may be an integrated circuit chip with signal processing capability. In the implementation process, various operations in the above method can be implemented by an integrated logic circuit of hardware in the first processor 1903 or instructions in the form of software. The above mentioned first processor 1903 can be a general purpose processor, a digital signal processor (DSPS), an application specific integrated circuit (ASIC), a field programmable gate array (FPGA) or other programmable logic devices, discrete gates or transistor logic devices, and discrete hardware components. Various methods, operations and logic block diagrams disclosed in the embodiments of the present disclosure can be implemented or executed. The general-purpose processor may be a microprocessor or the processor may be any conventional processor or the like. The operations of the methods disclosed in connection with the embodiments of the present disclosure can be directly embodied as being implemented by a hardware decoding processor, or by a combination of the hardware and software modules in the decoding processor. The software module can be located in a random memory, a flash memory, a read-only memory, a programmable read-only memory or an electrically erasable programmable memory, a register and other mature storage media in the art. The storage medium is located in the first memory 1902, and the first processor 1903 reads information in the first memory 1902 and implements the operations of the above methods in combination with its hardware.

It can be understood that the embodiments described herein may be implemented in a hardware, a software, a firmware, a middleware, a microcode or a combination thereof. For a hardware implementation, the processing unit may be implemented in one or more ASICs, DSPs, DSP devices (DSPDs), Programmable Logic Devices (PLDs), FPGAs, general purpose processors, controllers, microcontrollers, microprocessors, other electronic units for performing the functions described herein, or combinations thereof. For a software implementation, the techniques described herein may be implemented by modules (e.g. procedures, functions, etc.) that perform the functions described herein. The software code may be stored in a memory and executed by a processor. The memory can be implemented inside the processor or outside the processor.

Optionally, as another embodiment, the first processor 1903 is further configured to perform the method of any of the aforementioned embodiments when running the computer programs.

In still another embodiment of the disclosure, referring to FIG. 24, a schematic structural diagram of a decoder provided by an embodiment of the disclosure is illustrated. As illustrated in FIG. 24, the decoder 200 may include a second determination unit 2001.

The second determination unit 2001 is configured to determine a first template corresponding to a current block, where the first template includes one or more candidate templates in a template set corresponding to the current block; determine a block vector candidate list corresponding to the current block based on the first template; and determine a block vector corresponding to the current block based on the block vector candidate list corresponding to the current block, and determine a prediction value of the current block based on the block vector.

It can be understood that in the present embodiment, "unit" may be part of a circuit, part of a processor, part of a program or software, etc., certainly, it may also be a module or non-modular. Moreover, each component in the present embodiment may be integrated in one processing unit, each unit may exist physically alone, or two or more units may be integrated in one unit. The integrated unit can be realized either in a form of hardware or in a form of software function module.

If the integrated unit is implemented in the form of software function module rather than being sold or used as a stand-alone product, it may be stored in a computer readable storage medium. Based on such a understanding, an embodiment of the present disclosure provides a computer readable storage medium storing computer programs, applied to the decoder 200, the computer programs are used to implement the method of any of the preceding embodiments when executed by a second processor.

Based on the above-described composition of the decoder 200 and the computer readable storage medium, referring to FIG. 25, a specific hardware structure diagram of a decoder 200 provided by an embodiment of the disclosure is illustrated. As illustrated in FIG. 25, the decoder 200 may include a second communication interface 2201, a second memory 2202 and a second processor 2203. All components are coupled together by a second bus system 2204. It can be understood that the second bus system 2204 is used to implement connection communications between these components. The second bus system 2204 includes a power bus, a control bus and a status signal bus in addition to a data bus. However, the various buses are designated as the second bus system 2204 in FIG. 25 for clarity.

The second communication interface 2201 is used to receive and transmit signals in the process of transmitting and receiving information with other external network elements.

The second memory 2202 is used to store computer programs capable of running on the second processor 2203.

The second processor 2203 is used to, when running the computer programs, perform operations of: determining a first template corresponding to a current block, where the first template includes one or more candidate templates in a template set corresponding to the current block; determining a block vector candidate list corresponding to the current block based on the first template; and determining a block vector corresponding to the current block based on the block vector candidate list corresponding to the current block, and determining a prediction value of the current block based on the block vector.

Optionally, as another embodiment, the second processor 2203 is further configured to perform the method of any of the aforementioned embodiments when running the computer programs.

It will be understood that the second memory 2202 is similar in hardware function to the first memory 1902 and the second processor 2203 is similar in hardware function to the first processor 1903, which will not be described in details here.

An embodiment of the disclosure provides an encoder and decoder, the encoder or decoder determines a first template corresponding to a current block, where the first template includes one or more candidate templates in a template set corresponding to the current block; determines a block vector candidate list corresponding to the current block based on the first template; and determines a block vector corresponding to the current block based on the block vector candidate list corresponding to the current block, and determines a prediction value of the current block based on the block vector. Thus, in the embodiments of the disclosure, an Intra TMP prediction method that combines multiple candidates with multiple templates is proposed, where a block vector candidate list including at least one block vector of the current block may be selected and determined, and a first template including at least one candidate template may be selected to construct the block vector candidate list, thereby realizing the combination of Intra TMP multi-candidate and multi-selection at the template level. That is to say, the method for encoding and decoding proposed in the embodiments of the disclosure, on one hand, realizes the Intra TMP multi-candidate by constructing the block vector candidate list corresponding to the current block; on the other hand, it provides multiple selections at the template level by using the first template corresponding to the current block that includes one or more candidate templates, thereby improving the compression efficiency and enhancing the encoding and decoding performance.

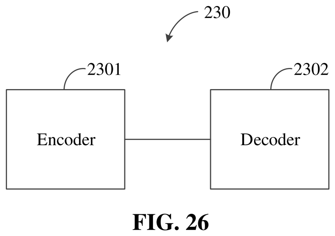

In still another embodiment of the present disclosure, referring to FIG. 26, a schematic structural diagram of an encoding and decoding system provided by an embodiment of the disclosure is illustrated. As illustrated in FIG. 26, the encoding and decoding system 230 may include an encoder 2301 and a decoder 2302.

In the embodiment of the present disclosure, the encoder 2301 may be an encoder 130 as described in any of the foregoing embodiments, and the decoder 2302 may be a decoder as described in any of the foregoing embodiments.

In some embodiments, the embodiments of the present disclosure further provides a bitstream, and the bitstream is generated by performing bit encoding according to information to be encoded, the information to be encoded includes at least one of: template matching prediction identification information, first template indication information, second template indication information, third template indication information, index identification information, or a prediction difference value.

It should be noted that, as used herein, the terms "including," "comprising," or any other variation thereof are intended to encompass non-exclusive inclusion, so that a process, a method, an object, or an apparatus including a set of elements includes not only those elements but also other elements not explicitly listed, or also includes elements inherent to such a process, a method, an object, or an apparatus. In the absence of further limitations, an element defined by the phrase "comprises an ..." does not preclude the existence of another identical element in the process, the method, the object, or the apparatus including the element.

The above serial numbers of the embodiments of the present disclosure are for description only and do not represent advantages and disadvantages of the embodiments.

The methods disclosed in several method embodiments provided in the present disclosure can be arbitrarily combined without conflict, to obtain new method embodiments.

Features disclosed in several product embodiments provided in the present disclosure can be arbitrarily combined without conflict, to obtain new product embodiments.

Features disclosed in several method or device embodiments provided in the present disclosure can be arbitrarily combined without conflict, to obtain new method embodiments or device embodiments.

The above is only the specific embodiments of the present disclosure, but the scope of protection of the present disclosure is not limited to this. Any modifications and variations that can be easily known by the person skilled in the technical field within the scope of protection of the present disclosure shall be included in the scope of protection of the present disclosure. Therefore, the scope of protection of the present disclosure shall be subject to the scope of protection of the claims.

INDUSTRIAL APPLICABIITY

Embodiments of the disclosure provide a method for encoding and decoding, a bitstream, an encoder, a decoder, and a storage medium. The encoder or decoder determines a first template corresponding to a current block, where the first template includes one or more candidate templates in a template set corresponding to the current block; determines a block vector candidate list corresponding to the current block based on the first template; and determines a block vector corresponding to the current block based on the block vector candidate list corresponding to the current block, and determines a prediction value of the current block based on the block vector. Thus, in the embodiments of the disclosure, an Intra TMP prediction method that combines multiple candidates with multiple templates is proposed, where a block vector candidate list including at least one block vector of the current block may be selected and determined, and a first template including at least one candidate template may be selected to construct the block vector candidate list, thereby realizing the combination of Intra TMP multi-candidate and multi-selection at the template level. That is to say, the method for encoding and decoding proposed in the embodiments of the disclosure, on one hand, realizes the Intra TMP multi-candidate by constructing the block vector candidate list corresponding to the current block; on the other hand, it provides multiple selections at the template level by using the first template corresponding to the current block that includes one or more candidate templates, thereby improving the compression efficiency and enhancing the encoding and decoding performance.

**Claims**

1.  A method for decoding, applied to a decoder, the method comprising:

    determining a first template corresponding to a current block, wherein the first template comprises one or more candidate templates in a template set corresponding to the current block;
    determining a block vector candidate list corresponding to the current block based on the first template; and
    determining a block vector corresponding to the current block based on the block vector candidate list corresponding to the current block, and determining a prediction value of the current block based on the block vector.

2.  The method of claim 1, further comprising:

    decoding a bitstream to determine template matching prediction identification information corresponding to the current block; and
    in a case that a value of the template matching prediction identification information is a first value, performing determination process of the first template.

3.  The method of claim 2, wherein determining the first template corresponding to the current block comprises:

    decoding the bitstream to determine first template indication information corresponding to the current block; and
    in a case that a value of the first template indication information is a third value, determining that the first template is a first candidate template.

4.  The method of claim 3, wherein determining the first template corresponding to the current block comprises:

    in a case that the value of the first template indication information is a fourth value, decoding the bitstream to determine a second template indication information corresponding to the current block;
    in a case that a value of the second template indication information is a fifth value, determining that the first template is a second candidate template; and
in a case that the value of the second template indication information is a sixth value, determining that the first template is a third candidate template.

5. The method of claim 2, wherein determining the first template corresponding to the current block comprises:

decoding the bitstream to determine third template indication information corresponding to the current block;
in a case that a value of the third template indication information is a seventh value, determining that the first template is a first candidate template;
in a case that the value of the third template indication information is an eighth value, determining that the first template is a second candidate template; and
in a case that the value of the third template indication information is a ninth value, determining that the first template is a third candidate template.

6. The method of claim 2, wherein determining the first template corresponding to the current block comprises:

decoding the bitstream to determine a candidate index corresponding to the current block; and
in a case that a value of the candidate index is less than or equal to a preset threshold, determining that the first template is a first candidate template.

7. The method of claim 6, further comprising:

in a case that the value of the candidate index is greater than the preset threshold, decoding the bitstream to determine third template indication information corresponding to the current block;
in a case that a value of the third template indication information is a seventh value, determining that the first template is the first candidate template;
in a case that the value of the third template indication information is an eighth value, determining that the first template is a second candidate template; and
in a case that the value of the third template indication information is a ninth value, determining that the first template is a third candidate template.

8. The method of any one of claims 4, 5 and 7, wherein

the first candidate template is a template comprising left neighboring reconstructed samples and top neighboring reconstructed samples of the current block;
the second candidate template is a template comprising top neighboring reconstructed samples of the current block; and
the third candidate template is a template comprising left neighboring reconstructed samples of the current block.

9. The method of claim 4, further comprising:
determining a search parameter corresponding to the first template based on the first template, wherein the search parameter comprises at least one of: a search range, a search order, or a list length.

10. The method of claim 9, wherein determining the block vector candidate list corresponding to the current block based on the first template comprises:
searching based on the search parameter and the first template to determine the block vector candidate list.

11. The method of claim 2 or 9, wherein determining the block vector candidate list corresponding to the current block based on the first template comprises:

determining a preset search area corresponding to the first template;
traversing search points in the preset search area, and determining matching costs between matching templates and the first template based on a preset matching criterion, each of the matching templates corresponding to a respective one of the search points in the preset search area; and
determining the block vector candidate list based on the matching costs.

12. The method of claim 11, wherein determining the block vector candidate list based on the matching costs comprises:

determining N minimum matching costs among the matching costs between the matching templates and the first template, wherein N is a list length of the block vector candidate list, and N is an integer greater than 0; and determining the block vector candidate list based on N block vectors and N candidate templates corresponding to the N minimum matching costs.

13. The method of claim 11, wherein

the preset matching criterion comprises any one of: Sum of Absolute Difference (SAD), Sum of Absolute Transformed Difference (SATD), Sum of Squared Differences (SSE), Mean Absolute Deviation (MAD), an Mean Absolute Error (MAE), Mean Square Error (MSE), or Normalized Correlation Coefficient (NCC).

14. The method of claim 11, further comprising:

traversing the search points in the preset search area based on a first search step size to determine initial block vectors and initial matching templates, each of the initial block vectors corresponding to a respective one of the initial matching templates;
determining a first search area based on the initial matching templates, wherein the first search area is smaller than the preset search area; and
traversing search points in the first search area based on a second search step size to determine the block vector candidate list, wherein the first search step size is larger than the second search step size.

15. The method of claim 14, further comprising:
in a case that the first template comprises a plurality of candidate templates in the template set, determining a template coefficient corresponding to each of the plurality of candidate templates.

16. The method of claim 15, wherein determining the template coefficient corresponding to each of the plurality of candidate templates comprises:
determining the template coefficient based on a size parameter corresponding to the candidate template.

17. The method of claim 15, wherein determining the template coefficient corresponding to each of the plurality of candidate templates comprises:
determining the template coefficient based on a pixel parameter corresponding to the candidate template.

18. The method of claim 15, wherein
the template coefficient corresponding to the candidate template is set based on a preset numerical value.

19. The method of any one of claims 16 to 18, further comprising:

traversing the search points in the preset search area, to determine initial costs between the matching templates and the first template based on the preset matching criterion;
adjusting the initial costs based on template coefficients, to determine the matching costs between the matching templates and the first template; and
determining the block vector candidate list based on the matching costs.

20. The method of claim 15, further comprising:

traversing the search points in the preset search area, to determine initial costs between the matching templates and the first template based on the preset matching criterion;
adjusting the initial costs based on pixel parameters, each corresponding to a respective one of the plurality of candidate templates, to determine the matching costs between the matching templates and the first template; and
determining the block vector candidate list based on the matching costs.

21. The method of claim 15, further comprising:
determining an upper threshold corresponding to each of the plurality of candidate templates, and determining a number of block vectors corresponding to the candidate template in the block vector candidate list based on the upper threshold.

22. The method of claim 8, wherein in a case that the first template at least comprises the first candidate template, the second candidate template, and the third candidate template, the method further comprises:

determining a second search area based on the first candidate template, and traversing search points in the second search area based on a first search step size to determine initial block vectors; and

determining a third search area based on the initial block vectors and the first template, and traversing search points in the third search area based on a second search step size to determine the block vector candidate list, wherein the first search step size is larger than the second search step size.

23. The method of claim 8, wherein in a case that the first template at least comprises the first candidate template, the second candidate template, and the third candidate template, the method further comprises:

searching based on the first candidate template to determine a first list corresponding to the first candidate template;

searching based on the second candidate template to determine a second list corresponding to the second candidate template;

searching based on the third candidate template to determine a third list corresponding to the third candidate template; and

adjusting the first list based on the second list and the third list, to determine the block vector candidate list.

24. The method of claim 8, wherein in a case that the first template at least comprises the first candidate template, the second candidate template, and the third candidate template, the method further comprises:

searching based on the first candidate template, the second candidate template, and the third candidate template, to determine a first list corresponding to the first candidate template, a second list corresponding to the second candidate template, and a third list corresponding to the third candidate template, respectively; and

adjusting the first list based on the second list and the third list, to determine the block vector candidate list.

25. The method of claim 23 or 24, wherein adjusting the first list based on the second list and the third list, to determine the block vector candidate list comprises:

determining a first starting position corresponding to the second list and a second starting position corresponding to the third list; and

adding block vectors in the second list into the first list based on the first starting position, and adding block vectors in the third list into the first list based on the second starting position to obtain the block vector candidate list.

26. The method of claim 25, further comprising:

adding block vectors present in the second list and not present in the first list into the first starting position of the first list; and

adding block vectors present in the third list and not present in the first list into the second starting position of the first list.

27. The method of claim 3, further comprising:

in the case that the value of the template matching prediction identification information is the first value, decoding the bitstream to determine index identification information corresponding to the current block; and

determining a candidate index corresponding to the current block based on the index identification information.

28. The method of claim 27, wherein determining the block vector corresponding to the current block based on the block vector candidate list corresponding to the current block comprises:

determining the block vector corresponding to the current block from the block vector candidate list based on the candidate index.

29. The method of claim 27, further comprising:

in the case that the value of the first template indication information is the third value, determining the index identification information based on a first context; and

in a case that the value of the first template indication information is a fourth value, determining the index identification information based on a second context.

**30.** The method of claim 27, wherein determining the candidate index corresponding to the current block based on the index identification information comprises:

in the case that the value of the first template indication information is the third value, determining the candidate index based on the index identification information and a first inverse binarization strategy; and
in a case that the value of the first template indication information is a fourth value, determining the candidate index based on the index identification information and a second inverse binarization strategy.

**31.** The method of claim 1, further comprising:

decoding the bitstream to determine a prediction difference value corresponding to the current block; and
determining a reconstructed value of the current block based on the prediction difference value and the prediction value.

**32.** The method of claim 1, further comprising:
constructing the template set corresponding to the current block based on different template types.

**33.** A method for encoding, applied to an encoder, the method comprising:

determining a first template corresponding to a current block, wherein the first template comprises one or more candidate templates in a template set corresponding to the current block;
determining a block vector candidate list corresponding to the current block based on the first template; and
determining a block vector corresponding to the current block based on the block vector candidate list corresponding to the current block, and determining a prediction value of the current block based on the block vector.

**34.** The method of claim 33, further comprising:

determining template matching prediction identification information corresponding to the current block; and
in a case that a value of the template matching prediction identification information is a first value, performing determination process of the first template.

**35.** The method of claim 34, wherein determining the first template corresponding to the current block comprises:

determining first template indication information corresponding to the current block; and
in a case that a value of the first template indication information is a third value, determining that the first template is a first candidate template.

**36.** The method of claim 35, wherein determining the first template corresponding to the current block comprises:

in a case that the value of the first template indication information is a fourth value, determining a second template indication information corresponding to the current block;
in a case that a value of the second template indication information is a fifth value, determining that the first template is a second candidate template; and
in a case that the value of the second template indication information is a sixth value, determining that the first template is a third candidate template.

**37.** The method of claim 34, wherein determining the first template corresponding to the current block comprises:

determining third template indication information corresponding to the current block;
in a case that a value of the third template indication information is a seventh value, determining that the first template is a first candidate template;
in a case that the value of the third template indication information is an eighth value, determining that the first template is a second candidate template; and
in a case that the value of the third template indication information is a ninth value, determining that the first template is a third candidate template.

**38.** The method of claim 34, wherein determining the first template corresponding to the current block comprises:

determining a candidate index corresponding to the current block; and
in a case that a value of the candidate index is less than or equal to a preset threshold, determining that the first template is a first candidate template.

39. The method of claim 38, further comprising:

in a case that the value of the candidate index is greater than the preset threshold, determining third template indication information corresponding to the current block;
in a case that a value of the third template indication information is a seventh value, determining that the first template is the first candidate template;
in a case that the value of the third template indication information is an eighth value, determining that the first template is a second candidate template; and
in a case that the value of the third template indication information is a ninth value, determining that the first template is a third candidate template.

40. The method of any of claims 36, 37 and 39, wherein

the first candidate template is a template comprising left neighboring reconstructed samples and top neighboring reconstructed samples of the current block;
the second candidate template is a template comprising top neighboring reconstructed samples of the current block; and
the third candidate template is a template comprising left neighboring reconstructed samples of the current block.

41. The method of claim 36, further comprising:
determining a search parameter corresponding to the first template based on the first template, wherein the search parameter comprises at least one of: a search range, a search order, or a list length.

42. The method of claim 41, wherein determining the block vector candidate list corresponding to the current block based on the first template comprises:
searching based on the search parameter and the first template to determine the block vector candidate list.

43. The method of claim 34 or 41, wherein determining the block vector candidate list corresponding to the current block based on the first template comprises:

determining a preset search area corresponding to the first template;
traversing search points in the preset search area, and determining matching costs between matching templates and the first template based on a preset matching criterion, each of the matching templates corresponding to a respective one of the search points in the preset search area; and
determining the block vector candidate list based on the matching costs.

44. The method of claim 43, wherein determining the block vector candidate list based on the matching costs comprises:

determining N minimum matching costs among the matching costs between the matching templates and the first template, wherein N is a list length of the block vector candidate list, and N is an integer greater than 0; and
determining the block vector candidate list based on N block vectors and N candidate templates corresponding to the N minimum matching costs.

45. The method of claim 43, wherein
the preset matching criterion comprises any one of: Sum of Absolute Difference (SAD), Sum of Absolute Transformed Difference (SATD), Sum of Squared Differences (SSE), Mean Absolute Deviation (MAD), an Mean Absolute Error (MAE), Mean Square Error (MSE), or Normalized Correlation Coefficient (NCC).

46. The method of claim 43, further comprising:

traversing the search points in the preset search area based on a first search step size to determine initial block vectors and initial matching templates, each of the initial block vectors corresponding to a respective one of the initial matching templates;
determining a first search area based on the initial matching templates, wherein the first search area is smaller than the preset search area; and

traversing search points in the first search area based on a second search step size to determine the block vector candidate list, wherein the first search step size is larger than the second search step size.

**47.** The method of claim 46, further comprising:
in a case that the first template comprises a plurality of candidate templates in the template set, determining a template coefficient corresponding to each of the plurality of candidate templates.

**48.** The method of claim 47, wherein determining the template coefficient corresponding to each of the plurality of candidate templates comprises:
determining the template coefficient based on a size parameter corresponding to the candidate template.

**49.** The method of claim 47, wherein determining the template coefficient corresponding to each of the plurality of candidate templates comprises:
determining the template coefficient based on a pixel parameter corresponding to the candidate template.

**50.** The method of claim 47, wherein
the template coefficient corresponding to the candidate template is set based on a preset numerical value.

**51.** The method of any one of claims 48 to 50, further comprising:

traversing the search points in the preset search area, to determine initial costs between the matching templates and the first template based on the preset matching criterion;
adjusting the initial costs based on template coefficients, to determine the matching costs between the matching templates and the first template; and
determining the block vector candidate list based on the matching costs.

**52.** The method of claim 47, further comprising:

traversing the search points in the preset search area, to determine initial costs between the matching templates and the first template based on the preset matching criterion;
adjusting the initial costs based on pixel parameters, each corresponding to a respective one of the plurality of candidate templates, to determine the matching costs between the matching templates and the first template; and
determining the block vector candidate list based on the matching costs.

**53.** The method of claim 47, further comprising:
determining an upper threshold corresponding to each of the plurality of candidate templates, and determining a number of block vectors corresponding to the candidate template in the block vector candidate list based on the upper threshold.

**54.** The method of claim 40, wherein in a case that the first template at least comprises the first candidate template, the second candidate template, and the third candidate template, the method further comprises:

determining a second search area based on the first candidate template, and traversing search points in the second search area based on a first search step size to determine initial block vectors; and
determining a third search area based on the initial block vectors and the first template, and traversing search points in the third search area based on a second search step size to determine the block vector candidate list, wherein the first search step size is larger than the second search step size.

**55.** The method of claim 40, wherein in a case that the first template at least comprises the first candidate template, the second candidate template, and the third candidate template, the method further comprises:

searching based on the first candidate template to determine a first list corresponding to the first candidate template;
searching based on the second candidate template to determine a second list corresponding to the second candidate template;
searching based on the third candidate template to determine a third list corresponding to the third candidate template; and

adjusting the first list based on the second list and the third list, to determine the block vector candidate list.

56. The method of claim 40, wherein in a case that the first template at least comprises the first candidate template, the second candidate template, and the third candidate template, the method further comprises:

searching based on the first candidate template, the second candidate template, and the third candidate template, to determine a first list corresponding to the first candidate template, a second list corresponding to the second candidate template, and a third list corresponding to the third candidate template, respectively; and adjusting the first list based on the second list and the third list, to determine the block vector candidate list.

57. The method of claim 55 or 56, wherein adjusting the first list based on the second list and the third list, to determine the block vector candidate list comprises:

determining a first starting position corresponding to the second list and a second starting position corresponding to the third list; and adding block vectors in the second list into the first list based on the first starting position, and adding block vectors in the third list into the first list based on the second starting position to obtain the block vector candidate list.

58. The method of claim 57, further comprising:

adding block vectors present in the second list and not present in the first list into the first starting position of the first list; and adding block vectors present in the third list and not present in the first list into the second starting position of the first list.

59. The method of claim 35, further comprising:

in the case that the value of the template matching prediction identification information is the first value, determining index identification information corresponding to the current block; and determining a candidate index corresponding to the current block based on the index identification information.

60. The method of claim 59, wherein determining the block vector corresponding to the current block based on the block vector candidate list corresponding to the current block comprises:
determining the block vector corresponding to the current block from the block vector candidate list based on the candidate index.

61. The method of claim 59, further comprising:

in the case that the value of the first template indication information is the third value, determining the index identification information based on a first context; and in the case that the value of the first template indication information is a fourth value, determining the index identification information based on a second context.

62. The method of claim 59, wherein determining the candidate index corresponding to the current block based on the index identification information comprises:

in the case that the value of the first template indication information is the third value, determining the candidate index based on the index identification information and a first binarization strategy; and in the case that the value of the first template indication information is a fourth value, determining the candidate index based on the index identification information and a second binarization strategy.

63. The method of claim 33, further comprising:

determining a prediction difference value corresponding to the current block; and determining a reconstructed value of the current block based on the prediction difference value and the prediction value.

64. The method of claim 33, further comprising:

constructing the template set corresponding to the current block based on different template types.

65. A bitstream being generated by bit encoding information to be encoded, wherein the information to be encoded comprises at least one of:
template matching prediction identification information, first template indication information, second template indication information, third template indication information, index identification information, or a prediction difference value.

66. An encoder, comprising: a first determination unit,
wherein the first determination unit is configured to determine a first template corresponding to a current block, wherein the first template comprises one or more candidate templates in a template set corresponding to the current block; determine a block vector candidate list corresponding to the current block based on the first template; and determine a block vector corresponding to the current block based on the block vector candidate list corresponding to the current block, and determine a prediction value of the current block based on the block vector.

67. An encoder, comprising: a first memory and a first processor, wherein

the first memory is configured to store a computer program executable on the first processor; and
the first processor is configured to run the computer program to perform the method of any one of claims 33 to 64.

68. A decoder, comprising: a second determination unit,
wherein the second determination unit is configured to determine a first template corresponding to a current block, wherein the first template comprises one or more candidate templates in a template set corresponding to the current block; determine a block vector candidate list corresponding to the current block based on the first template; and determine a block vector corresponding to the current block based on the block vector candidate list corresponding to the current block, and determine a prediction value of the current block based on the block vector.

69. A decoder, comprising: a second memory and a second processor, wherein

the second memory is configured to store a computer program executable on the second processor; and
the second processor is configured to run the computer program to perform the method of any one of claims 1 to 32.

70. A computer readable storage medium having stored thereon a computer program that, when executed, performs the method of any one of claims 1 to 32 or the method of any one of claims 33 to 64.

**FIG. 1**

**FIG. 2**

**FIG. 3**

**FIG. 4**

**FIG. 5**

**FIG. 6**

**FIG. 7**

**FIG. 8**

**FIG. 9**

Templates

1001

1003

1002

**FIG. 10**

113

R2

112

R3

R4

R1

111
110

**FIG. 11**

**FIG. 12**

**FIG. 13**

**FIG. 14**

**FIG. 15**

**FIG. 16**

**FIG. 17**

Determine a first template corresponding to a current block, where the first template includes one or more candidate templates in a template set corresponding to the current block ⟋ 101

Determine a block vector candidate list corresponding to the current block based on the first template ⟋ 102

Determine a block vector corresponding to the current block based on the block vector candidate list corresponding to the current block, and determine a prediction value of the current block based on the block vector ⟋ 103

**FIG. 18**

T

Current block

(a)

T

Current block

(b)

T

Current block

(c)

T

Current block

(d)

T

Current block

(e)

T

Current block

(f)

**FIG. 19**

Current
block
Candidate
template 1

Current
block
Candidate
template 2

Current
block
Candidate
template 3

Current
block
Candidate
template 4

## FIG. 20

| | |
|---|---|
| Determine a first template corresponding to a current block, where the first template includes one or more candidate templates in a template set corresponding to the current block | 201 |
| Determine a block vector candidate list corresponding to the current block based on the first template | 202 |
| Determine a block vector corresponding to the current block based on the block vector candidate list corresponding to the current block, and determine a prediction value of the current block based on the block vector | 203 |

## FIG. 21

180

Encoder

1801

First determination
unit

## FIG. 22

180

Encoder

1901

First communication interface

1904

1903

First processor

1902

First memory

**FIG. 23**

200

Decoder

2001

Second determination unit

**FIG. 24**

200

Decoder

2201

Second communication interface

2204

2203

Second processor

2202

Second memory

**FIG. 25**

230

2301

2302

Encoder

Decoder

**FIG. 26**

## INTERNATIONAL SEARCH REPORT

| | |
|---|---|
| International application No. | |
| | **PCT/CN2023/085836** |

**A. CLASSIFICATION OF SUBJECT MATTER**

H04N19/176(2014.01)i; H04N19/50(2014.01)i; H04N19/105(2014.01)i

According to International Patent Classification (IPC) or to both national classification and IPC

**B. FIELDS SEARCHED**

Minimum documentation searched (classification system followed by classification symbols)

IPC: H04N19/-

Documentation searched other than minimum documentation to the extent that such documents are included in the fields searched

Electronic data base consulted during the international search (name of data base and, where practicable, search terms used)

CNABS; WPABSC; CNTXT; ENTXTC; CNKI; VEN; EPTXT; WOTXT; USTXT; ENTXT; JPTXT; IEEE; JVET: 编码, 解码, 模板, 左, 上, L, T, 匹配, 候选, 块矢量, 块向量, 列表, 预测, 帧内块复制, 屏幕, 内容, 标识, 旗标, 信令, 索引, 步长, 代价, 搜索, 稀疏, encoding, decoding, template, left, top, match, TM, candidate, block vector, BV, list, prediction, intra block copy, IBC, screen, content, flag, index, step, cost, search, sparse

**C. DOCUMENTS CONSIDERED TO BE RELEVANT**

| Category* | Citation of document, with indication, where appropriate, of the relevant passages | Relevant to claim No. |
|---|---|---|
| Y | CN 113924779 A (ELECTRONICS AND TELECOMMUNICATIONS RESEARCH INSTITUTE) 11 January 2022 (2022-01-11) claim 1, and description, paragraphs 260-293 and 372 | 1-64, 66-70 |
| Y | WO 2023025114 A1 (BEIJING BYTEDANCE NETWORK TECH CO., LTD. et al.) 02 March 2023 (2023-03-02) description, paragraphs 261-267, 576-660 and 1166-1169 | 1-64, 66-70 |
| A | CN 113545084 A (TENCENT AMERICA LLC) 22 October 2021 (2021-10-22) entire document | 1-64, 66-70 |
| A | US 2009180538 A1 (THE REGENTS OF THE UNIVERSITY OF CALIFORNIA) 16 July 2009 (2009-07-16) entire document | 1-64, 66-70 |
| A | WO 2022214244 A1 (INTERDIGITAL VC HOLDINGS FRANCE, SAS) 13 October 2022 (2022-10-13) entire document | 1-64, 66-70 |

✓ Further documents are listed in the continuation of Box C.    ✓ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **22 December 2023** | **25 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/085836** |

| C. | DOCUMENTS CONSIDERED TO BE RELEVANT | |
| --- | --- | --- |
| Category* | Citation of document, with indication, where appropriate, of the relevant passages | Relevant to claim No. |
| A | ZHANG, Lai et al. "Non-EE2: Intra Template-Matching Prediction Fusion" *Joint Video Experts Team (JVET) of ITU-T SG 16 WP 3 and ISO/IEC JTC 1/SC 29 29th Meeting. JVET-AC0069-v2*, 20 January 2023 (2023-01-20), entire document | 1-64, 66-70 |

Form PCT/ISA/210 (second sheet) (July 2022)

75

## INTERNATIONAL SEARCH REPORT

| International application No. |
|---|
| **PCT/CN2023/085836** |

| **Box No. II** | **Observations where certain claims were found unsearchable (Continuation of item 2 of first sheet)** |
|---|---|

This international search report has not been established in respect of certain claims under Article 17(2)(a) for the following reasons:

1. ☑ Claims Nos.: **65**
because they relate to subject matter not required to be searched by this Authority, namely:

Claim 65 sets forth a code stream, which is generated by performing bit encoding according to information to be encoded, is essentially a presentation of information, and belongs to subject matter to be excluded.

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

Form PCT/ISA/210 (continuation of first sheet) (July 2022)

**INTERNATIONAL SEARCH REPORT**
Information on patent family members

International application No.

**PCT/CN2023/085836**

| Patent document cited in search report | | | Publication date (day/month/year) | Patent family member(s) | | | Publication date (day/month/year) |
|---|---|---|---|---|---|---|---|
| CN | 113924779 | A | 11 January 2022 | WO | 2020256528 | A1 | 24 December 2020 |
| | | | | US | 2022166998 | A1 | 26 May 2022 |
| | | | | KR | 20200145785 | A | 30 December 2020 |
| | | | | VN | 84885 | A | 25 March 2022 |
| WO | 2023025114 | A1 | 02 March 2023 | | None | | |
| CN | 113545084 | A | 22 October 2021 | KR | 20210091316 | A | 21 July 2021 |
| | | | | EP | 3861748 | A1 | 11 August 2021 |
| | | | | EP | 3861748 | A4 | 08 December 2021 |
| | | | | US | 2021235076 | A1 | 29 July 2021 |
| | | | | US | 11503276 | B2 | 15 November 2022 |
| | | | | JP | 2022511835 | A | 01 February 2022 |
| | | | | JP | 7250928 | B2 | 03 April 2023 |
| | | | | US | 2020288120 | A1 | 10 September 2020 |
| | | | | US | 11012686 | B2 | 18 May 2021 |
| | | | | AU | 2023233091 | A1 | 05 October 2023 |
| | | | | AU | 2020238853 | A1 | 09 September 2021 |
| | | | | AU | 2020238853 | B2 | 22 June 2023 |
| | | | | SG | 11202109023 | PA | 29 September 2021 |
| | | | | WO | 2020185602 | A1 | 17 September 2020 |
| | | | | US | 2023007242 | A1 | 05 January 2023 |
| | | | | CA | 3132479 | A1 | 17 September 2020 |
| | | | | IN | 202147037698 | A | 10 September 2021 |
| | | | | VN | 83420 | A | 25 January 2022 |
| | | | | HK | 40056279 | A0 | 25 March 2022 |
| | | | | RU | 2777377 | C1 | 02 August 2022 |
| US | 2009180538 | A1 | 16 July 2009 | US | 8228990 | B2 | 24 July 2012 |
| WO | 2022214244 | A1 | 13 October 2022 | | None | | |

Form PCT/ISA/210 (patent family annex) (July 2022)